# EUROPÄISCHE PATENTSCHRIFT

(11) **EP 3 430 064 B1**
(45) Veröffentlichungstag und Bekanntmachung des Hinweises auf die Patenterteilung: **06.05.2020**
(21) Anmeldenummer: 17710547.5
(22) Anmeldetag: 15.03.2017
(51) Int. Cl.: C08F 220/06, C08F 20/06, C08F 2/30, C08J 5/18, C11D 3/37

(54) **WASCH- UND REINIGUNGSAKTIVE POLYMERFOLIEN, VERFAHREN ZU IHRER HERSTELLUNG UND DEREN VERWENDUNG**
WASHING AND CLEANING POLYMER FILMS, METHOD FOR THEIR PREPARATION AND THEIR USE
FILMS POLYMERES A ACTION LAVANTE ET DETERGENTE, LEUR PROCEDE DE FABRICATION ET D'UTILISATION

(30) Priorität: 16.03.2016 EP 16160745
(43) Veröffentlichungstag der Anmeldung: 23.01.2019
(73) Patentinhaber: BASF SE, 67056 Ludwigshafen am Rhein (DE)
(72) Erfinder: FUCHS, Yannick, 67056 Ludwigshafen am Rhein (DE); DETERING, Juergen, 67056 Ludwigshafen am Rhein (DE); MEISE, Markus, 67056 Ludwigshafen am Rhein (DE); SCHMIDT-HANSBERG, Benjamin, 67056 Ludwigshafen am Rhein (DE); ESPER, Claudia, 67056 Ludwigshafen am Rhein (DE)
(86) Internationale Anmeldenummer: PCT/EP2017/056089
(87) Internationale Veröffentlichungsnummer: WO 2017/158002

(56) Entgegenhaltungen:
- WO-A1-01/00781
- WO-A1-2015/000970
- LEV BROMBERG: "Polyether-Modified Poly(acrylic acid): Synthesis and Applications", INDUSTRIAL & ENGINEERING CHEMISTRY RESEARCH, Bd. 37, Nr. 11, 1. November 1998 (1998-11-01), Seiten 4267-4274, XP055139606, ISSN: 0888-5885, DOI: 10.1021/ie980358s
- LEV BROMBERG: "Novel Family of Thermogelling Materials via C-C Bonding between Poly(acrylic acid) and Poly(ethylene oxide)- b -poly(propylene oxide)- b -poly(ethylene oxide)", THE JOURNAL OF PHYSICAL CHEMISTRY B, Bd. 102, Nr. 11, 1. März 1998 (1998-03-01) , Seiten 1956-1963, XP055113924, ISSN: 1520-6106, DOI: 10.1021/jp9803687

## Beschreibung

### HINTERGRUND DER ERFINDUNG

Die vorliegende Erfindung betrifft eine wasch- und reinigungsaktive Polymerfolie, die eine Polymerzusammensetzung P) enthält oder aus einer Polymerzusammensetzung P) besteht, die durch radikalische Polymerisation einer Monomerzusammensetzung M) erhältlich ist, wobei die Monomerzusammensetzung M) wenigstens eine α,β-ethylenisch ungesättigte Carbonsäure oder ein Salz davon enthält und einer radikalischen Polymerisation in Gegenwart wenigstens einer Polyetherkomponente unterzogen wird. Die Erfindung betrifft weiterhin ein Verfahren zur Herstellung einer solchen wasch- und reinigungsaktiven Polymerfolie, die Verwendung einer solchen Polymerfolie und eine Umhüllung oder Beschichtung für eine Wasch- oder Reinigungsmittelportion, die eine solche Polymerfolie umfasst oder daraus besteht.

### STAND DER TECHNIK

Es ist bekannt, wasserlösliche Folien aus Polyvinylalkohol zur portionsweisen Verpackung von flüssigen, gelförmigen und festen Wasch- und Reinigungsmitteln zu verwenden. Die Polyvinylalkoholfolie löst sich zu Beginn des Wasch- und Reinigungsprozesses auf und setzt die Wasch- und Reinigungsmittel frei, so dass diese ihre Wirkung entfalten können. Die Vorteile der portionsweise verpackten Wasch- und Reinigungsmittel (sogenannte single dose units oder mono dose units) für den Verbraucher sind vielfältig. Dazu zählen die Vermeidung von Fehldosierungen, die bequeme Handhabung, und dass der Verbraucher nicht physisch mit den Inhaltsstoffen der Wasch- und Reinigungsmittel in Kontakt kommt. Dazu zählen weiterhin auch ästhetische Aspekte, die zu einer Bevorzugung der portionsweise verpackten Wasch- und Reinigungsmittel führen. Aktuelle Dosierungsformen können eine Vielzahl von separat formulierten Wirk- und Hilfsstoffen enthalten, die im Reinigungsprozess individuell freigesetzt werden. Solche Mehrkammersysteme gestatten beispielsweise das Trennen von nicht kompatiblen Inhaltsstoffen und damit die Gestaltung von neuen Formulierungskonzepten. Der Anteil der Polyvinylalkoholfolie an dem Gesamtgewicht der Wasch- oder Reinigungsmittelportion (single dose unit) beträgt je nach Anwendung zwischen 2 und 20 Gew.-%.

Der größte Nachteil der Polyvinylalkoholfolien ist, dass sie nur als Verpackungsmaterial dienen und keinerlei Beitrag zur Wasch- und Reinigungsleistung liefern. Es besteht somit ein Bedarf an wasch- und reinigungsaktiven Polymerfolien.

Lev Bromberg beschreibt im Journal of Physical Chemistry B (1998), 102, 11, 1956-1963, ein Material mit thermoreversibler Gelbildung, zu dessen Herstellung man Acrylsäure in Gegenwart eines PEO-PPO-PEO-Blockcopolymers polymerisiert. Die Reaktion erfolgt in Abwesenheit externer Lösungsmittel, um einen hohen Anteil an Verzweigung und Vernetzung in den erhaltenen Produkten zu erzielen. Diese sind weder wasserlöslich noch transparent. Als mögliche Einsatzbereiche für diese Polymere werden nur ganz allgemein die Pharmazie und die Nahrungsergänzung genannt (S. 1956, linke Spalte, "Introduction").

Lev Bromberg beschreibt in Ind. Eng. Chem. Res. 1998, 37, 4267-4274 Polyethermodifizierte Polyacrylsäuren, wobei konkret teilneutralisierte Acrylsäure in Gegenwart eines PEO-PPO-PEO-Blockcopolymers polymerisiert wird.

WO 2005/012378 beschreibt wässrige Dispersionen von wasserlöslichen Polymeren von anionischen Monomeren und deren Verwendung als Verdickungsmittel für wässrige Systeme. Zu ihrer Herstellung werden anionische Monomere in Gegenwart von zwei wasserlöslichen Polymeren aus verschiedenen Klassen polymerisiert, wobei es sich unter anderem auch um Polyalkylenglycole handeln kann. Beispiel 4 (Seite 19, Zeilen 14-27) betrifft die Polymerisation von Acrylsäure in Gegenwart von zwei verschiedenen Polypropylenglycolen und von Maltodextrin. Die Dispersionen werden unter anderem in Personal care-Produkten sowie in Wasch- und Reinigungsmitteln eingesetzt. Ein Einsatz in Form von Folien ist nicht beschrieben.

Die WO 2015/000969 beschreibt die Verwendung einer gelförmigen Polymerzusammensetzung, erhältlich durch ein Verfahren, bei dem man
a) eine Monomerzusammensetzung M) bereitstellt, die aus
   A) wenigstens einer α,β-ethylenisch ungesättigten Säure und
   B) 0 bis 0,1 Gew.-%, bezogen auf das Gesamtgewicht der Monomerzusammensetzung M), vernetzend wirkenden Monomeren, die zwei oder mehr als zwei polymerisierbare α,β-ethylenisch ungesättigte Doppelbindungen pro Molekül aufweisen,
      besteht,
b) die in Schritt a) bereitgestellte Monomerzusammensetzung M) einer radikalischen Polymerisation in Gegenwart wenigstens einer Polyetherkomponente PE) unterzieht, die ausgewählt ist unter Polyetherolen mit einem zahlenmittleren Molekulargewicht von wenigstens 200 g/mol und deren Mono- und Di-(C₁-C₆-alkyl-ethern), Polyethergruppen-haltigen Tensiden und Mischungen davon,
in Formulierungen für die maschinelle Geschirrreinigung. Ein Einsatz in Form von Folien ist wiederum nicht beschrieben.
Die WO 2015/000971 beschreibt die Verwendung einer gelförmigen Polymerzusammensetzung, wie sie in der WO 2015/000969 beschrieben ist für weitere Verwendungen, jedoch nicht in Form von Folien.
Die WO 2015/000971 beschreibt ein Verfahren zur Herstellung einer festen Polymerzusammensetzung, insbesondere in Form einer Folie oder in Form einer festen Beschichtung auf einem Substrat oder in Teilchenform, bei dem man
a) eine Monomerzusammensetzung M) bereitstellt, die
   A) wenigstens eine α,β-ethylenisch ungesättigte Carbonsäure, und
   B) weniger als 0,1 Gew.-%, bezogen auf das Gesamtgewicht der Monomerzusammensetzung M) vernetzend wirkende Monomere, die zwei oder mehr als zwei polymerisierbare α,β-ethylenisch ungesättigte Doppelbindungen pro Molekül aufweisen,
   enthält, und
b) die in Schritt a) bereitgestellte Monomerzusammensetzung M) einer radikalischen Polymerisation in Gegenwart wenigstens einer Polyetherkomponente PE) unterzieht, die ausgewählt ist unter Polyetherolen mit einem zahlenmittleren Molekulargewicht von wenigstens 200 g/mol und deren Mono- und Di-(C₁-C₆-alkyl-ethern), Polyethergruppen-haltigen Tensiden und Mischungen davon.

WO 2015/000970 offenbart ein Verfahren zur Herstellung einer Polymerzusammensetzung, bei dem man
a) eine Monomerzusammensetzung M) bereitstellt, die
   A) wenigstens eine α,β-ethylenisch ungesättigte Carbonsäure, und
   B) weniger als 0,1 Gew.-% vernetzend wirkende Monomere enthält, wobei die Komponente A) teilweise oder vollständig durch C) wenigstens eine ungesättigte Sulfonsäure oder Phosphonsäure ersetzt sein kann,
b) die in Schritt a) bereitgestellte Monomerzusammensetzung M) einer radikalischen Polymerisation in Gegenwart wenigstens einer Polyetherkomponente PE) unterzieht.

Die WO 01/00781 beschreibt eine Wirkstoffportionspackung, umfassend wenigstens eine wasch-, reinigungs- oder spülaktive Zubereitung und eine die wasch-, reinigungs-oder spülaktive Zubereitung ganz oder teilweise umschließende Umfassung, worin die Umfassung unter Wasch-, Reinigungs-oder Spülbedingungen löslich ist und wenigstens eine Einzelkomponente der wasch-, reinigungs-oder spülaktiven Zubereitung gebunden enthalt. Es ist nicht beschrieben, dass das Material der Umfassung selbst aktiv am Wasch- oder Reinigungsvorgang teilnimmt.

Überraschenderweise wurde nun gefunden, dass es möglich ist, Polymerfolien bereit zu stellen, die sich vorteilhaft als Umhüllung oder Beschichtung zur Herstellung von Wasch- oder Reinigungsmittelportionen eignen und wobei das Polymer selbst aktiv am Wasch- und Reinigungsprozess teilnimmt.

### ZUSAMMENFASSUNG DER ERFINDUNG

Ein erster Gegenstand der Erfindung ist eine wasch- und reinigungsaktive Polymerfolie, enthaltend oder bestehend aus eine(r) Polymerzusammensetzung P), erhältlich durch radikalische Polymerisation einer Monomerzusammensetzung M), die wenigstens ein Monomer A) enthält, ausgewählt unter α,β-ethylenisch ungesättigten Carbonsäuren, Salzen α,β-ethylenisch ungesättigter Carbonsäuren und Mischungen davon, in Gegenwart wenigstens eines (C₈-C₁₈-Alkyl)polyoxyalkylenethers mit im Mittel 3 bis 12 Alkylenoxideinheiten pro Molekül.

Ein weiterer Gegenstand der Erfindung ist ein Verfahren zur Herstellung einer Polymerfolie wie zuvor und im Folgenden definiert, bei dem man
a) eine Monomerzusammensetzung M) bereitstellt, die wenigstens ein Monomer, ausgewählt unter α,β-ethylenisch ungesättigten Carbonsäuren, Salzen α,β-ethylenisch ungesättigter Carbonsäuren und Mischungen davon, enthält,
b) die in Schritt a) bereitgestellte Monomerzusammensetzung M) einer radikalischen Polymerisation in Gegenwart wenigstens eines (C₈-C₁₈-Alkyl)polyoxyalkylenethers mit 3 bis 12 Alkylenoxideinheiten pro Molekül und gegebenenfalls in Gegenwart wenigstens eines Zusatzstoffes unterzieht,
c) die in Schritt b) erhaltene Polymerzusammensetzung in eine Polymerfolie überführt.

Ein weiterer Gegenstand der Erfindung ist die Verwendung einer Polymerfolie, wie zuvor und im Folgenden definiert, zur zumindest teilweisen Umhüllung eines flüssigen oder festen Wasch- und Reinigungsmittels.

Ein weiterer Gegenstand der Erfindung ist eine Umhüllung oder Beschichtung für eine Waschmittel- oder Reinigungsmittelportion, umfassend oder bestehend aus einer Polymerfolie, wie zuvor und im Folgenden definiert.

Ein weiterer Gegenstand der Erfindung ist ein Wasch- oder Reinigungsmittel, umfassend:
A) wenigstens Umhüllung und/oder Beschichtung, enthaltend oder bestehend aus eine(r) Polymerfolie, wie zuvor und im Folgenden definiert,
B) wenigstens ein Tensid,
C) gegebenenfalls wenigstens einen Builder,
D) gegebenenfalls wenigstens ein Bleichsystem,
E) gegebenenfalls wenigstens einen weiteren Zusatzstoff, der vorzugsweise ausgewählt ist unter Enzymen, Basen, Korrosionsinhibitoren, Entschäumern, Farbstoffen, Duftstoffen, Füllstoffen, Tablettierhilfsmitteln, Desintegrationsmitteln, Verdickern, Löslichkeitsvermittlern, organischen Lösemitteln, Elektrolyten, pH-Stellmitteln, Parfümträgern, Fluoreszenzmitteln, Hydrotropen, Antiredepositionsmitteln, optischen Aufhellern, Vergrauungsinhibitoren, Einlaufverhinderern, Knitterschutzmitteln, Farbübertragungsinhibitoren, antimikrobiellen Wirkstoffen, Antioxidantien, Korrosionsinhibitoren, Antistatika, Bügelhilfsmitteln, Phobier- und Imprägniermitteln, Quell- und Schiebefestmitteln und UV-Absorbern, und
F) gegebenenfalls Wasser.

### BESCHREIBUNG DER ERFINDUNG

Die erfindungsgemäßen oder nach dem erfindungsgemäßen Verfahren hergestellten Polymerfolien eignen sich zur portionsweisen Verpackung von flüssigen, gelförmigen und festen Wasch- und Reinigungsmitteln. Sie lösen sich zu Beginn der jeweiligen Anwendung (z. B. im Wasch- oder Spülwasser) auf, setzen somit die Inhaltsstoffe der Wasch- und Reinigungsmittel frei und tragen in aufgelöster Form aufgrund ihrer dispergierenden, belagsinhibierenden, emulgierenden und tensidischen Eigenschaften zur Wasch- und Reinigungsleistung in erheblichem Maße bei.

Unter den Begriffen "Waschmittelportion" und "Reinigungsmittelportion" wird im Rahmen der vorliegenden Erfindung eine für einen in einer wässrigen Phase stattfindenden Wasch- oder Reinigungsvorgang ausreichende Menge eines Waschmittels oder eines Reinigungsmittels verstanden. Dies kann beispielsweise ein maschineller Waschvorgang sein, wie er mit handelsüblichen Waschmaschinen durchgeführt wird. Erfindungsgemäß wird unter diesem Begriff auch eine Wirkstoffportion für einen Handwaschgang oder einen von Hand durchgeführten Reinigungsvorgang verstanden (wie er z. B. im Handwaschbecken oder in einer Schüssel durchgeführt wird). Die erfindungsgemäßen wasch- und reinigungsaktiven Polymerfolien werden bevorzugt zur Herstellung von Wirkstoffportionen für maschinelle Wasch- oder Reinigungsvorgänge eingesetzt.

Im Rahmen dieser Anmeldung werden Verbindungen, die von Acrylsäure und Methacrylsäure abgeleitet sein können, teilweise durch Einfügen der Silbe "(meth)" in die von der Acrylsäure abgeleitete Verbindung bezeichnet.

Geeignete C₁-C₄-Alkylgruppen, C₁-C₇-Alkylgruppen C₈-C₁₈-Alkylgruppen und C₁₂-C₁₈-Alkylgruppen sind jeweils lineare und (ab 3 Kohlenstoffatomen) verzweigte Alkylgruppen.

Im Rahmen der vorliegenden Erfindung steht C₁-C₄-Alkyl für einen linearen oder verzweigten Alkylrest mit 1 bis 4 Kohlenstoffatomen. Geeignete C₁-C₄-Alkyle sind Methyl, Ethyl, n-Propyl, Isopropyl, n-Butyl, sec-Butyl, Isobutyl und tert-Butyl.

Im Rahmen der vorliegenden Erfindung steht C₁-C₇-Alkyl für einen linearen oder verzweigten Alkylrest mit 1 bis 7 Kohlenstoffatomen. Geeignete C₁-C₇-Alkyle sind Methyl, Ethyl, Propyl, Isopropyl, n-Butyl, sec-Butyl, Isobutyl, tert-Butyl, n-Pentyl, n-Hexyl, n-Heptyl und deren Konstitutionsisomere.

C₁₂-C₁₈-Alkyl steht für einen linearen oder verzweigten Alkylrest mit 12 bis 18 Kohlenstoffatomen. Geeignete C₁₂- C₁₈-Alkyle sind Dodecyl, Tridecyl, Tetradecyl, Pentadecyl, Hexadecyl, Heptadecyl, Octadecyl, Nonadecyl, Eicosyl, Henicosyl, Docosyl, Tricosyl, Tetracosyl und deren Konstitutionsisomere. In einer bevorzugten Ausführungsform handelt es sich um überwiegend lineare C₁₂-C₁₈-Alkylreste, wie sie auch in natürlichen oder synthetischen Fettalkoholen sowie Oxoalkoholen vorkommen.

C₈-C₁₈-Alkyl steht für einen linearen oder verzweigten Alkylrest mit 8 bis 18 Kohlenstoffatomen. Geeignete C₈-C₁₈-Alkyle sind Octyl, 2-Ethylhexyl, Nonyl, Decyl, 2-Propylheptyl, Undecyl, Dodecyl, Tridecyl, Tetradecyl, Pentadecyl, Hexadecyl, Heptadecyl, Octadecyl, Nonadecyl, Eicosyl, Henicosyl, Docosyl, Tricosyl, Tetracosyl und deren Konstitutionsisomere. In einer bevorzugten Ausführungsform handelt es sich um überwiegend lineare C₈-C₁₈-Alkylreste, wie sie auch in natürlichen oder synthetischen Fettalkoholen sowie Oxoalkoholen vorkommen.

Im Rahmen der vorliegenden Anmeldung steht der Ausdruck C₉C₁₁-Alkohole für ein Gemisch, das Alkohole mit 9 Kohlenstoffatomen und Alkohole mit 11 Kohlenstoffatomen enthält. C₁₂C₁₄-Alkohole stehen für ein Gemisch, das Alkohole mit 12 Kohlenstoffatomen und Alkohole mit 14 Kohlenstoffatomen enthält. C₁₃C₁₅-Alkohole stehen für ein Gemisch, das Alkohole mit 13 Kohlenstoffatomen und Alkohole mit 15 Kohlenstoffatomen enthält. C₁₂C₁₈-Alkohole stehen für ein Gemisch, das Alkohole mit 12 Kohlenstoffatomen, Alkohole mit 14 Kohlenstoffatomen, Alkohole mit 16 Kohlenstoffatomen und Alkohole mit 18 Kohlenstoffatomen enthält.

Die Herstellung der Polymerzusammensetzung P) erfolgt durch radikalische Polymerisation der Monomerzusammensetzung M) in Gegenwart wenigstens eines (C₈-C₁₈-Alkyl)polyoxyalkylenethers mit im Mittel 3 bis 12 Alkylenoxideinheiten pro Molekül. Dabei werden spezielle Polymerzusammensetzungen P) mit vorteilhaften Eigenschaften erhalten. Ohne an eine Theorie gebunden zu sein, können sich zwischen dem wachsenden Polymer und den Alkylenoxideinheiten Wasserstoffbrücken ausbilden und die Eigenschaften der erhaltenen Polymerzusammensetzung beeinflussen. So lassen sich Polymerzusammensetzungen P) mit einem hohen Gehalt an dem (C₈-C₁₈-Alkyl)polyoxyalkylenether erzielen, wie sie durch Mischung des separat hergestellten Polymers mit dem (C₈-C₁₈-Alkyl)polyoxyalkylenether nicht hergestellt werden können. Ein radikalischer Tensidabbau findet dabei vorteilhafterweise nicht statt.

Im Rahmen der vorliegenden Erfindung bezeichnet der Begriff "Polymerfolie" ein flächiges Gebilde, das eine im Wesentlichen zweidimensionale Ausdehnung aufweist. Die Dicke der erfindungsgemäßen Folien beträgt vorzugsweise 0,5 µm bis 10 mm, besonders bevorzugt 1 µm bis 5 mm. Die Länge und/oder Breite der Folie beträgt in der Regel mindestens 5 mm und bevorzugt mindestens 10 mm. Die maximale Länge und/oder Breite der Folie ist in der Regel unkritisch und kann je nach Anwendungsbereich im Millimeter-, Zentimeter- oder Meterbereich liegen.

Zur Herstellung der erfindungsgemäßen wasch- und reinigungsaktiven Polymerfolien werden vorzugsweise Polymerzusammensetzungen P) mit einer niedrigen Glasübergangstemperatur T_{G} eingesetzt. Vorzugsweise weisen die zur Herstellung der erfindungsgemäßen wasch- und reinigungsaktiven Polymerfolien eingesetzten Polymerzusammensetzungen P) eine Glasübergangstemperatur T_{G} im Bereich von 0 bis 80 °C, besonders bevorzugt von 0 bis 60 °C, insbesondere von 0 bis 30 °C, auf.

Die im Rahmen dieser Anmeldung beschriebenen Glasübergangstemperaturen (Tg) können mittels Differential Scanning Calorimetry (DSC) bestimmt werden.

In einer bevorzugten Ausführung liegen die zur Herstellung der erfindungsgemäßen wasch- und reinigungsaktiven Polymerfolien eingesetzten Polymerzusammensetzungen P) in Form einer transparenten Folie vor.

### Monomerzusammensetzung M)

### Monomer A)

Die zur Herstellung der Polymerzusammensetzung P) eingesetzte Monomerzusammensetzung M) enthält wenigstens ein Monomer A), das ausgewählt ist unter α,β-ethylenisch ungesättigten Carbonsäuren, Salzen α,β-ethylenisch ungesättigter Carbonsäuren und Mischungen davon.

In einer speziellen Ausführungsform besteht die Monomerzusammensetzung M) nur aus α,β-ethylenisch ungesättigten Carbonsäuren, Salzen α,β-ethylenisch ungesättigter Carbonsäuren und Mischungen davon.

Die α,β-ethylenisch ungesättigte Carbonsäure ist vorzugsweise ausgewählt unter Acrylsäure, Methacrylsäure, Ethacrylsäure Maleinsäure, Fumarsäure, Itaconsäure, α-Chloracrylsäure, Crotonsäure, Citraconsäure, Mesaconsäure, Glutaconsäure und Aconitsäure. Geeignete Salze der zuvor genannten Säuren sind insbesondere die Natrium-, Kalium- und Ammoniumsalze sowie die Salze mit Aminen. Die Monomere A) können als solche oder als Mischungen untereinander eingesetzt werden. Die angegebenen Gewichtsanteile beziehen sich sämtlich auf die Säureform.

Bevorzugt wird die wenigstens eine α,β-ethylenisch ungesättigte Carbonsäure in nicht neutralisierter Form zur Polymerisation eingesetzt. Werden die α,β-ethylenisch ungesättigten Carbonsäuren in teilweise neutralisierter Form zur Polymerisation eingesetzt, so sind die Säuregruppen bevorzugt zu höchstens 50 Mol-%, besonders bevorzugt zu höchstens 30 Mol-% neutralisiert.

Geeignete Basen zur Neutralisation der α,β-ethylenisch ungesättigten Carbonsäuren, wie auch der im Folgenden genannten ungesättigten Sulfonsäuren und Phosphonsäuren sind Alkalimetallhydroxide, wie NaOH und KOH, Erdalkalimetallhydroxide, wie Ca(OH)₂, Mg(OH)₂, Ammoniak und Aminbasen. Bevorzugte Amine sind Alkanolamine, wie Etanolamin, Diethanolamin und Triethanolamin. Gewünschtenfalls kann eine teilweise oder vollständige Neutralisation der Säuregruppen auch im Anschluss an die Polymerisation erfolgen.

Besonders bevorzugt ist das Monomer A) ausgewählt unter Acrylsäure, Methacrylsäure, Maleinsäure, Fumarsäure, Itaconsäure, Salzen der zuvor genannten Carbonsäuren und Mischungen davon.

Insbesondere ist das Monomer A) ausgewählt unter Acrylsäure, Methacrylsäure, Salzen der Acrylsäure, Salzen der Methacrylsäure und Mischungen davon.

In einer speziellen Ausführungsform wird als Monomer A) ausschließlich Acrylsäure eingesetzt.

Das Monomer A) wird vorzugsweise in einer Menge von 50 bis 100 Gew.-%, besonders bevorzugt 60 bis 100 Gew.-%, bezogen auf das Gesamtgewicht der Monomerzusammensetzung M), eingesetzt.

In einer bevorzugten Ausführungsform besteht die Monomerzusammensetzung M) zu mindestens 50 Gew-%, bevorzugt zu mindestens 80 Gew.-%, insbesondere zu mindestens 90 Gew.-%, bezogen auf das Gesamtgewicht der Monomerzusammensetzung M), aus Acrylsäure und/oder Acrylsäuresalzen.

### Monomer B)

Die Monomerzusammensetzung M) kann zusätzlich zu den Monomeren A) wenigstens ein Monomer B) enthalten, das ausgewählt ist unter ungesättigten Sulfonsäuren, Salzen ungesättigter Sulfonsäuren, ungesättigten Phosphonsäure, Salzen ungesättigter Phosphonsäuren und Mischungen davon.

Das Monomer B) ist vorzugsweise ausgewählt unter 2-Acrylamido-2-methylpropan-sulfonsäure, Vinylsulfonsäure, Allylsulfonsäure, Sulfoethylacrylat, Sulfoethylmethacrylat, Sulfopropylacrylat, Sulfopropylmethacrylat, 2-Hydroxy-3-acryloxypropylsulfonsäure, 2-Hydroxy-3-methacryloxypropylsulfonsäure, Styrolsulfonsäure, Vinylphosphonsäure, Allylphosphonsäure, Salzen der zuvor genannten Säuren sowie Mischungen davon.

Bevorzugt als Monomer B) ist 2-Acrylamido-2-methylpropansulfonsäure.

Geeignete Salze der zuvor genannten Säuren sind insbesondere die Natrium-, Kalium- und Ammoniumsalze sowie die Salze mit Aminen. Die Monomere B) können als solche oder als Mischungen untereinander eingesetzt werden. Die angegebenen Gewichtsanteile beziehen sich sämtlich auf die Säureform.

Bevorzugt besteht die Monomerzusammensetzung M) dann zu mindestens 50 Gew-%, besonders bevorzugt zu mindestens 80 Gew.-%, insbesondere zu mindestens 90 Gew.-%, bezogen auf das Gesamtgewicht der Monomerzusammensetzung M), aus Monomeren A) und B). Wenn die Monomerzusammensetzung M) wenigstens ein Monomer B) enthält, so wird dieses vorzugsweise in einer Menge von 0,1 bis 50 Gew.-%, besonders bevorzugt 1 bis 25 Gew.-%, bezogen auf das Gesamtgewicht der Monomerzusammensetzung M), eingesetzt.

### Weitere Monomere C)

Die Monomerzusammensetzung M) kann zusätzlich wenigstens ein weiteres von den säuregruppenhaltigen Monomeren und deren Salzen verschiedenes Monomer (= Monomer C) enthalten.

Die Monomerzusammensetzung M1) kann somit folgende Monomerzusammensetzungen aufweisen: A) oder A) + B) oder A) + C) oder A) + B) + C).

Bevorzugt enthält die Monomerzusammensetzung M) zusätzlich wenigstens ein Comonomer C), ausgewählt unter
C1) Stickstoffheterocyclen mit einer radikalisch polymerisierbaren α,β-ethylenisch ungesättigten Doppelbindung,
C2) Amidgruppen-haltigen Monomeren,
C3) Verbindungen der allgemeinen Formeln (I.a) und (I.b) 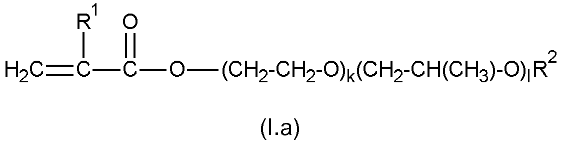 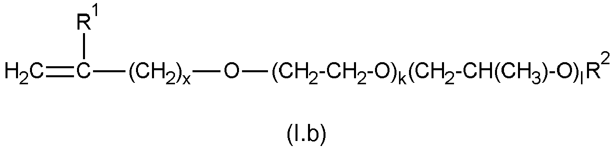 worin
die Reihenfolge der Alkylenoxideinheiten beliebig ist,
- x: für 0, 1 oder 2 steht,
- k und l: unabhängig voneinander für eine ganze Zahl von 0 bis 100 stehen, wobei die Summe aus k und l mindestens 2 beträgt, vorzugsweise mindestens 5 beträgt,
- R¹: für Wasserstoff oder Methyl steht,
- R²: für Wasserstoff, C₁-C₄-Alkyl steht,
und Mischungen aus zwei oder mehr als zwei der zuvor genannten Monomere C1) bis C3).

Die Monomerzusammensetzung M) kann die weiteren Monomere C1) bis C3) jeweils vorzugsweise in einer Menge von 0 bis 30 Gew.-%, besonders bevorzugt 0 bis 20 Gew.-%, insbesondere 0 bis 10 Gew.-%, bezogen auf das Gesamtgewicht der Monomerzusammensetzung M), enthalten. Wenn die Monomerzusammensetzung M) wenigstens ein Monomer ausgewählt unter C1) bis C3) enthält, so jeweils vorzugsweise in einer Menge von 0,1 bis 30 Gew.-%, besonders bevorzugt 1 bis 20 Gew.-%, insbesondere 1,5 bis 10 Gew.-%, bezogen auf das Gesamtgewicht der Monomerzusammensetzung M). In einer speziellen Ausführung enthält die Monomerzusammensetzung M) außer den Monomeren A) keine weiteren Comonomere.

### Monomer C1)

Bevorzugte Stickstoffheterocyclen mit einer radikalisch polymerisierbaren α,β-ethylenisch ungesättigten Doppelbindung C1) sind ausgewählt unter 1-Vinylimidazol (N-Vinylimidazol), von 1-Vinylimidazol verschiedenen vinyl- und allylsubstituierten Stickstoffheterocyclen und Mischungen davon.

Aus den Aminstickstoffen der zuvor genannten Verbindungen lassen sich entweder durch Protonierung mit Säuren oder durch Quaternisierung mit Alkylierungsmitteln geladene kationische Gruppen erzeugen. Geeignete Monomere C1) sind auch die durch Protonierung oder Quaternisierung von 1-Vinylimidazol und davon verschiedenen vinyl- und allylsubstituierten Stickstoffheterocyclen erhaltenen Verbindungen. Zur Protonierung geeignete Säuren sind z. B. Carbonsäuren, wie Milchsäure, oder Mineralsäuren, wie Phosphorsäure, Schwefelsäure und Salzsäure. Zur Quaternisierung geeignete Alkylierungsmittel sind C₁-C₄-Alkylhalogenide oder Di-(C₁-C₄-alkyl)sulfate, wie Ethylchlorid, Ethylbromid, Methylchlorid, Methylbromid, Dimethylsulfat und Diethylsulfat. Eine Protonierung oder Quaternisierung kann im Allgemeinen sowohl vor als auch nach der Polymerisation erfolgen. Bevorzugt erfolgt eine Protonierung oder Quaternisierung nach der Polymerisation. Beispiele für solche geladenen Monomere C1) sind quaternisierte Vinylimidazole, insbesondere 3-Methyl-1-vinylimidazoliumchlorid, -methosulfat und -ethosulfat.

Bevorzugte Monomere C1) sind weiterhin von Vinylimidazolen verschiedene vinyl- und allylsubstituierte Stickstoffheterocyclen, ausgewählt unter 2-Vinylpyridin, 4-Vinylpyridin, 2-Allylpyridin, 4-Allylpyridin und den durch Protonierung oder durch Quaternisierung erhaltenen Salzen davon.

Insbesondere enthält die Monomerzusammensetzung M) wenigstens ein Comonomer C1), ausgewählt unter 1-Vinylimidazol, 2-Vinylpyridin, 4-Vinylpyridin, 2-Allylpyridin, 4-Allylpyridin und den durch Protonierung oder durch Quaternisierung erhaltenen Salzen davon. Speziell enthält die Monomerzusammensetzung M) als Comonomer C1) 1-Vinylimidazol.

### Monomer C2)

Geeignete amidgruppenhaltige Monomere C2) sind Verbindungen der allgemeinen Formel (II) 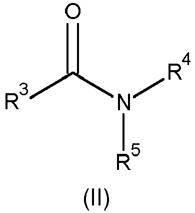 wobei
einer der Reste R³ bis R⁵ für eine Gruppe der Formel CH₂=CR⁶- mit R⁶ = H oder C₁-C₄-Alkyl steht und die übrigen Reste R⁶ bis R⁸ unabhängig voneinander für H oder C₁-C₇-Alkyl stehen,
wobei R³ und R⁴ gemeinsam mit der Amidgruppe, an die sie gebunden sind, auch für ein Lactam mit 5 bis 8 Ringatomen stehen können,
wobei R⁴ und R⁵ gemeinsam mit dem Stickstoffatom, an das sie gebunden sind, auch für einen fünf- bis siebengliedrigen Heterocyclus stehen können.

Bevorzugt sind die Monomere C2) ausgewählt unter primären Amiden α,β-ethylenisch ungesättigter Monocarbonsäuren, N-Vinylamiden gesättigter Monocarbonsäuren, N-Vinyllactamen, N-Alkyl- und N,N-Dialkylamiden α,β-ethylenisch ungesättigter Monocarbonsäuren und Mischungen davon.

Bevorzugte Monomere C2) sind N-Vinyllactame und deren Derivate, die z. B. einen oder mehrere C₁-C₆-Alkylsubstituenten, wie Methyl, Ethyl, n-Propyl, Isopropyl, n-Butyl, sec.-Butyl, tert.-Butyl, etc. aufweisen können. Dazu zählen z. B. N-Vinylpyrrolidon, N-Vinylpiperidon, N-Vinylcaprolactam, N-Vinyl-5-methyl-2-pyrrolidon, N-Vinyl-5-ethyl-2-pyrrolidon, N-Vinyl-6-methyl-2-piperidon, N-Vinyl-6-ethyl-2-piperidon, N-Vinyl-7-methyl-2-caprolactamund N-Vinyl-7-ethyl-2-caprolactam.

Besonders bevorzugt werden N-Vinylpyrrolidon und/oder N-Vinylcaprolactam eingesetzt.

Geeignete Monomere C2) sind weiterhin Acrylsäureamid und Methacrylsäureamid.

Als Monomere C2) geeignete N-Alkyl- und N,N-Dialkylamide α,β-ethylenisch ungesättigter Monocarbonsäuren sind beispielsweise Methyl(meth)acrylamid, Methylethacrylamid, Ethyl(meth)acrylamid, Ethylethacrylamid, n-Propyl(meth)acrylamid, Isopropyl(meth)acrylamid, n-Butyl(meth)acrylamid, tert.-Butyl(meth)acrylamid, tert.-Butylethacrylamid, und Mischungen davon.

Als Monomere C2) geeignete offenkettige N-Vinylamidverbindungen sind beispielsweise N-Vinylformamid, N-Vinyl-N-methylformamid, N-Vinylacetamid, N-Vinyl-N-methylacetamid, N-Vinyl-N-ethylacetamid, N-Vinylpropionamid, N-Vinyl-N-methylpropionamid, N-Vinyl-butyramid und Mischungen davon. Bevorzugt wird N-Vinylformamid eingesetzt.

### Ethergruppenhaltiges Monomer C3)

Die Monomerzusammensetzung M) kann zusätzlich wenigstens ein Monomer C3) enthalten, ausgewählt unter Verbindungen der allgemeinen Formeln (I.a) und (I.b), wie zuvor definiert.

In den Formeln I.a) und I.b) steht k vorzugsweise für eine ganze Zahl von 1 bis 100, besonders bevorzugt 2 bis 50, insbesondere 3 bis 30. Bevorzugt steht I für eine ganze Zahl von 0 bis 50.

Vorzugsweise steht R² in den Formeln I.a) und I.b) für Wasserstoff, Methyl, Ethyl, n-Propyl, Isopropyl, n-Butyl, sec.-Butyl oder tert.-Butyl.

In der Formel I.b) steht x vorzugsweise für 1 oder 2.

Die Polymerzusammensetzung P) enthält im Wesentlichen unvernetzte Polymere. Die zur Herstellung der erfindungsgemäßen Polymerzusammensetzung eingesetzte Monomerzusammensetzung M) enthält somit insbesondere keine zugesetzten vernetzend wirkenden Monomeren. Vernetzend wirkende Monomere im Sinne der Erfindung sind Verbindungen mit zwei oder mehr als zwei polymerisierbaren ethylenisch ungesättigten Doppelbindungen pro Molekül.

Speziell enthält die Monomerzusammensetzung M) bezogen auf das Gesamtgewicht weniger als 0,1 Gew.-%, noch spezieller weniger als 0,01 Gew.-% vernetzend wirkenden Monomere, die zwei oder mehr als zwei radikalisch polymerisierbare α,β-ethylenisch ungesättigte Doppelbindungen pro Molekül aufweisen.

In einer bevorzugten Ausführungsform enthält die Monomerzusammensetzung M) keine vernetzend wirkenden Monomere, die zwei oder mehr als zwei polymerisierbare α,β-ethylenisch ungesättigte Doppelbindungen pro Molekül aufweisen.

### (C₈-C₁₈-Alkyl)polyoxyalkylenether PE)

Die erfindungsgemäße wasch- und reinigungsaktive Polymerfolie enthält oder besteht aus eine(r) Polymerzusammensetzung P), die durch radikalische Polymerisation einer Monomerzusammensetzung M), wie zuvor definiert, in Gegenwart wenigstens eines (C₈-C₁₈-Alkyl)polyoxyalkylenethers PE) mit im Mittel 3 bis 12 Alkylenoxideinheiten pro Molekül erhältlich ist.

Geeignete (C₈-C₁₈-Alkyl)polyoxyalkylenethers PE) sind im Allgemeinen Verbindungen der allgemeinen Formel (III)

R⁷O-(R⁸O)ₛR⁹ (III)

worin
- R⁷: für C₈-C₁₈-Alkyl steht,
- R⁸: in den Wiederholungseinheiten (R⁸O) jeweils unabhängig voneinander ausge-wählt ist unter 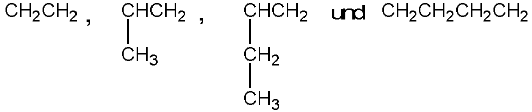
- R⁹: für Wasserstoff oder C₁-C₄-Alkyl steht, und
- s: für eine ganze Zahl von 3 bis 12 steht.

Die C₈-C₁₈-Alkylreste der (C₈-C₁₈-Alkyl)polyoxyalkylenether PE) können sich von den entsprechenden Alkoholen, speziell Alkoholen der allgemeinen Formel R⁷-OH durch formale Abspaltung der OH-Gruppe ableiten. Die C₈-C₁₈-Alkylreste der (C₈-C₁₈-Alkyl)-polyoxyalkylenether PE) können sich von reinen Alkoholen oder von Alkoholgemischen ableiten. Bevorzugt handelt es sich um großtechnische verfügbare Alkohole oder Alkoholgemische.

Die C₈-C₁₈-Alkylreste der erfindungsgemäß eingesetzten (C₈-C₁₈-Alkyl)polyoxyalkylen-ether (PE) bzw. die zu ihrer Herstellung eingesetzten Alkohole R⁷-OH können auch aus einer erneuerbaren, natürlichen und/oder nachwachsenden Quelle stammen. Unter erneuerbaren Quellen werden im Sinne der Erfindung natürliche (biogene) und/oder nachwachsende Quellen verstanden und nicht fossile Quellen, wie Erdöl, Erdgas oder Kohle.

Geeignete (C₈-C₁₈-Alkyl)polyoxyalkylenether weisen im Allgemeinen ein zahlenmittleres Molekulargewicht im Bereich von etwa 260 bis 1000, bevorzugt 300 bis 800 auf.

Geeignete (C₈-C₁₈-Alkyl)polyoxyalkylenether sind wasserlösliche nichtionische Polymere, die Alkylenoxid-Wiederholungseinheiten aufweisen.

Die C₈-C₁₈-Alkylreste der erfindungsgemäß eingesetzten (C₈-C₁₈-Alkyl)polyoxyalkylen-ether (PE) bzw. die Reste R⁷ können sich von Alkoholen und Alkoholgemischen nativen oder petrochemischen Ursprungs mit 8 bis 18 C-Atomen ableiten. Die (C₈-C₁₈-Alkyl)reste bzw. die Reste R⁷ können sich von primären, sekundären, tertiären oder quartären Alkoholen ableiten. Bevorzugt leiten sich die (C₈-C₁₈-Alkyl)reste bzw. die Reste R⁷ von primären Alkoholen ab. Die (C₈-C₁₈-Alkyl)reste der (C₈-C₁₈-Alkyl)polyoxy-alkylenether bzw. die Reste R⁷ können weiterhin geradkettig oder verzweigt sein. Bevorzugt handelt es sich bei den (C₈-C₁₈-Alkyl)resten bzw. den Resten R⁷ um lineare oder überwiegend lineare Alkylreste. Unter überwiegend linearen Alkylresten werden solche verstanden, die im Wesentlichen Methylgruppen-Verzweigungen und im Wesentlichen keine längerkettigen Verzweigungen aufweisen. In einer ersten bevorzugten Ausführungsform handelt es sich bei den (C₈-C₁₈-Alkyl)resten um lineare Alkylreste. In einer zweiten bevorzugten Ausführungsform handelt es sich bei den (C₈-C₁₈-Alkyl)-resten um überwiegend lineare Alkylreste, wie sie auch in natürlichen oder synthetischen Fettsäuren und Fettalkoholen sowie Oxoalkoholen vorkommen. Speziell kann der (C₈-C₁₈-Alkyl)resten linear oder bevorzugt in 2-Stellung methylverzweigt sein bzw. lineare und methylverzweigte Reste im Gemisch enthalten, so wie sie üblicherweise in Oxoalkoholresten vorliegen. In einer weiteren bevorzugten Ausführungsform handelt es sich bei den (C₈-C₁₈-Alkyl)resten um verzweigte Alkylreste, wie sie längerkettige Alkohole aufweisen, die durch Guerbet-Kondensation erhalten werden. Bei der Guerbet-Kondensation werden primäre oder sekundäre Alkohole bei hohen Temperaturen und hohem Druck in Gegenwart von Alkalimetallhydroxiden oder Alkoxiden zu längerkettigeren Alkoholen kondensiert, die auch Guerbet-Alkohole genannt werden. Ein geeigneter Guerbetalkohol ist ein mit 7 bis 8 Ethylenoxidgruppen pro Molekül alkoxilierter und n-Butyl-terminierter C₁₆-C₂₀-Alkohol.

Bei den C₈-C₁₈-Alkylresten der (C₈-C₁₈-Alkyl)polyoxyalkylenether (PE) handelt es sich vorzugsweise um C₁₂-C₁₈-Alkylreste, beispielsweise C₉-C₁₆-Alkylreste oder C₁₀-C₁₄-Alkylreste. In den Verbindungen der allgemeinen Formel (III) steht R⁷ vorzugsweise für C₁₂-C₁₈-Alkyl, wie C₉-C₁₆-Alkyl oder C₁₀-C₁₄-Alkyl.

Geeignet sind (C₈-C₁₈-Alkyl)polyoxyalkylenether, die sich von einem einzelnen Alkohol mit 12 bis 18 C-Atomen, beispielsweise mit 9 bis 16 C-Atomen oder mit 10 bis 14 C-Atomen ableiten. Dazu zählen zum Beispiel Kokos-, Palm-, Talgfett- oder Oleylalkohol.

Geeignet sind auch (C₈-C₁₈-Alkyl)polyoxyalkylenether, die sich von Alkoholgemischen ableiten, z. B. ausgewählt unter C₁₂C₁₄-Alkoholen, C₉C₁₁-Alkoholen, C₁₃C₁₅-Alkoholen, C₁₂C₁₈-Alkoholen und C₁₂C₁₄-Alkoholen.

Die (C₈-C₁₈-Alkyl)polyoxyalkylenether enthalten in der Polyoxyalkylenethergruppe vorzugsweise im Mittel 3 bis 10, besonders bevorzugt 5 bis 9 Alkylenoxideinheiten, pro Mol Alkohol. In den Verbindungen der allgemeinen Formel (III) steht s vorzugsweise für 3 bis 10, insbesondere für 5 bis 9.

Geeignete Alkylenoxide zur Herstellung der (C₈-C₁₈-Alkyl)polyoxyalkylenether sind z. B. Ethylenoxid, Propylenoxid, Epichlorhydrin, 1,2- und 2,3-Butylenoxid.

Die angegebenen Alkoxilierungsgrade, speziell Ethoxylierungsgrade, stellen statistische Mittelwerte (Zahlenmittel, Mn) dar, die für ein spezielles Produkt eine ganze oder eine gebrochene Zahl sein können. Bevorzugte Alkoholethoxylate weisen eine eingeengte Homologenverteilung auf (narrow range ethoxylates, NRE).

Geeignet als Polyoxyalkylenethergruppen sind beispielsweise Homopolymerisate aus Ethylenoxid, Homopolymerisate aus Propylenoxid, Copolymerisate aus Ethylenoxid und Propylenoxid, Copolymerisate aus Ethylenoxid und Butylenoxid sowie Copolymerisate aus Ethylenoxid, Propylenoxid und mindestens einem Butylenoxid. Die Polyoxyalkylenethergruppen, die verschiedene Alkylenoxide einpolymerisiert enthalten, können die Alkylenoxideinheiten statistisch verteilt oder in Form von Blöcken enthalten. Eine spezielle Ausführungsform sind Polyoxyalkylenethergruppen, die Ethylenoxid und Propylenoxid einpolymerisiert enthalten. Vorzugsweise beträgt in den Ethylenoxid/Propylenoxid-Copolymeren der Anteil an von Ethylenoxid abgeleiteten Wiederholungseinheiten 40 bis 99 Gew.-%. Besonders bevorzugt sind (C₈-C₁₈-Alkyl)polyoxyalkylenether deren Polyoxyalkylenethergruppe ausschließlich Ethylenoxid-Wiederholungseinheiten enthält.

Die Polyethergruppen der (C₈-C₁₈-Alkyl)polyoxyalkylenether PE) können an den nicht C₈-C₁₈-Alkyl-terminierten Enden ein Wasserstoffatom tragen oder mit einer C₁-C₄-Alkylgruppe terminiert (d. h. endgruppenverschlossen) sein. In den Verbindungen der allgemeinen Formel (III) steht R⁹ entsprechend für H oder C₁-C₄-Alkyl. Bevorzugt steht R⁹ für H oder Methyl. In einer besonders bevorzugten Ausführung tragen die Polyethergruppen an den nicht C₈-C₁₈-Alkyl-terminierten Enden ein Wasserstoffatom, d. h. besonders bevorzugt steht R⁹ für H.

Als (C₈-C₁₈-Alkyl)polyoxyalkylenether PE) werden vorzugsweise alkoxylierte, vorteilhafterweise ethoxylierte, insbesondere primäre Alkohole mit vorzugsweise 8 bis 18 C-Atomen und durchschnittlich 3 bis 12, bevorzugt 3 bis 10, besonders bevorzugt 5 bis 9 Mol Ethylenoxid (EO) pro Mol Alkohol eingesetzt, in denen der Alkoholrest linear oder bevorzugt in 2-Stellung methylverzweigt sein kann bzw. lineare und methylverzweigte Reste im Gemisch enthalten kann, so wie sie üblicherweise in Oxoalkoholresten vorliegen.

Die (C₈-C₁₈-Alkyl)polyoxyalkylenether PE) sind vorzugsweise ausgewählt unter:
- C₁₂C₁₄-Fettalkoholen mit 3 EO, 5 EO, 7 EO oder 9 EO,
- C₉C₁₁-Oxoalkoholen mit 7 EO,
- C₁₃-Oxoalkohol mit 3 EO, 5 EO, 7 EO oder 9 EO,
- C₁₃C₁₅-Oxoalkoholen mit 3 EO, 5 EO, 7 EO oder 9 EO,
- C₁₂C₁₈-Fettalkoholen mit 3 EO, 5 EO, 7 EO oder 9 EO und Mischungen davon,
- 2-Propylheptanol mit 3 EO, 4 EO, 5 EO, 6 EO, 7 EO, 8 EO und 9 EO
und Mischungen aus zwei oder mehr als zwei der zuvor genannten ethoxylierten Alkohole.

Bevorzugte Mischungen ethoxylierter Alkohole sind Mischungen aus C₁₂C₁₄-Alkohol mit 3 EO und C₁₂C₁₈-Alkohol mit 7 EO. Bevorzugte Mischungen ethoxylierter Alkohole sind weiterhin Mischungen aus kurzkettigen Alkoholethoxilaten (z. B. 2-Propylheptanol mit 7 EO) und langkettigen Alkoholethoxilaten (z. B. C₁₆C₁₈-Alkohole mit 7 EO).

### Herstellung der Polymerfolien

Ein weiterer Gegenstand der Erfindung ist ein Verfahren zur Herstellung einer Polymerfolie, bei dem man
a) eine Monomerzusammensetzung M) bereitstellt, die wenigstens ein Monomer enthält, ausgewählt unter α,β-ethylenisch ungesättigten Carbonsäuren und Mischungen, die wenigstens eine α,β-ethylenisch ungesättigte Carbonsäure und wenigstens ein Salz einer α,β-ethylenisch ungesättigten Carbonsäure enthalten,
b) die in Schritt a) bereitgestellte Monomerzusammensetzung M) einer radikalischen Polymerisation in Gegenwart wenigstens eines (C₈-C₁₈-Alkyl)polyoxy-alkylenethers mit 3 bis 12 Alkylenoxideinheiten pro Molekül und gegebenenfalls in Gegenwart wenigstens eines Zusatzstoffes unterzieht,
c) die in Schritt b) erhaltene Polymerzusammensetzung in eine Polymerfolie überführt.

Bezüglich der in Schritt a) bereit gestellten Monomerzusammensetzung wird auf die zuvor genannten geeigneten und bevorzugten Monomere in vollem Umfang Bezug genommen.

Die radikalische Polymerisation der Monomerzusammensetzung M) in Schritt b) wird vorzugsweise im Zulaufverfahren durchgeführt. Dabei werden im Allgemeinen zumindest die Monomere in flüssiger Form dem Reaktionsansatz zudosiert. Unter den Dosierbedingungen flüssige Monomere können dem Reaktionsansatz ohne Zugabe eines Lösungsmittels LM) zugeführt werden, ansonsten werden die Monomere als Lösung in einem geeigneten Lösungsmittel LM) eingesetzt. Selbstverständlich können auch in fester Form vorliegende Monomere eingesetzt werden.

Die radikalische Polymerisation zur Herstellung der Polymerzusammensetzung P) kann in Gegenwart eines Lösungsmittels LM) erfolgen, das ausgewählt ist unter Wasser, C₁-C₆-Alkanolen, von PE) verschiedenen Polyolen, deren Mono- und Dialkylethern und Mischungen davon. Geeignete Polyole und deren Mono- und Dialkylether umfassen auch Alkylenglycolmono(C₁-C₄-alkyl)ether, Alkylenglycoldi(C₁-C₄-alkyl)ether, Oligoalkylenglycole und deren Mono(C₁-C₄-alkyl)ether und Di(C₁-C₄-alkyl)ether.

Das Lösungsmittel LM) ist vorzugsweise ausgewählt unter Wasser, Methanol, Ethanol, n-Propanol, Isopropanol, n-Butanol, Ethylenglycol, Ethylenglycolmono(C₁-C₄-alkyl)-ethern, Ethylenglycoldi(C₁-C₄-alkyl)ethern, 1,2-Propylenglycol, 1,2-Propylenglycol-mono(C₁-C₄-alkyl)ethern, 1,2-Propylenglycoldi(C₁-C₄-alkyl)ethern, Glycerin, Polyglycerinen, Oligoalkylenglycolen mit einem zahlenmittleren Molekulargewicht von weniger als 1000 g/mol und Mischungen davon.

Geeignete Oligoethylenglycole sind unter den CTFA-Bezeichnungen PEG-6, PEG-8, PEG-12, PEG-6-32, PEG-20, PEG-150, PEG-200, PEG-400, PEG-7M, PEG-12M und PEG-115M kommerziell erhältlich. Dazu zählen speziell die Pluriol E ® Marken der BASF SE. Geeignete Alkylpolyalkylenglycole sind die entsprechenden Pluriol A ...E ® Marken der BASF SE.

Das Lösungsmittel LM) ist besonders bevorzugt ausgewählt unter Wasser, Ethanol, n-Propanol, Isopropanol, Ethylenglycol, Diethylenglycol, Triethylenglycol, 1,2-Propylenglycol, 1,2-Dipropylenglycol und Mischungen davon.

In einer speziellen Ausführungsform wird als Lösungsmittel LM) Wasser oder ein Gemisch aus Wasser und wenigstens einem von Wasser verschieden Lösungsmittel LM) eingesetzt, ausgewählt unter Ethanol, n-Propanol, Isopropanol, Ethylenglycol, Diethylenglycol, Triethylenglycol,1,2-Propylenglycol, 1,2-Dipropylenglycol und Mischungen davon.

In einer speziellen Ausführungsform erfolgt die radikalische Polymerisation in Schritt b) in Gegenwart eines Lösungsmittels LM), das zu wenigstens 50 Gew.-%, vorzugsweise zu wenigstens 75 Gew.-%, speziell zu wenigstens 90 Gew.-%, bezogen auf das Gesamtgewicht des Lösungsmittels LM), aus Wasser besteht. Insbesondere erfolgt die radikalische Polymerisation in Schritt c) in Gegenwart eines Lösungsmittels LM), das vollständig aus Wasser besteht.

Bevorzugt erfolgt die radikalische Polymerisation in Schritt b) in Zulauf-Fahrweise, wobei Zuläufe, die wenigstens eine α,β-ethylenisch ungesättigte Carbonsäure enthalten, kein Lösungsmittel LM) enthalten.

Die Dosierraten des Monomerzulaufs / der Monomerzuläufe sowie etwaiger weiterer Zuläufe (Initiator, Regler, etc.) werden vorzugsweise so gewählt, dass die Polymerisation mit der gewünschten Umsatzrate aufrechterhalten wird. Die Zugabe der einzelnen Zuläufe kann dabei kontinuierlich, periodisch, mit konstanter oder wechselnder Dosierrate, im Wesentlichen zeitgleich oder zeitversetzt erfolgen. Vorzugsweise erfolgt die Zugabe aller Zuläufe zum Reaktionsansatz kontinuierlich.

Bevorzugt werden zur radikalischen Polymerisation die Monomerzusammensetzung M) und die (C₈-C₁₈-Alkyl)polyoxyalkylenether mit 3 bis 12 Alkylenoxideinheiten pro Molekül in einem Gewichtsverhältnis von 0,5 : 1 bis 5 : 1, besonders bevorzugt von 0,7 : 1 bis 3 : 1, eingesetzt.

Sofern zur Herstellung der Polymerzusammensetzung ein Lösungsmittel LM) eingesetzt wird, liegt das Gewichtsverhältnis des (C₈-C₁₈-Alkyl)polyoxyalkylenethers PE) zur Komponente LM) vorzugsweise im Bereich von 0,1 : 1 bis 5 : 1, besonders bevorzugt von 0,5 : 1 bis 3 : 1.

Bevorzugt erfolgt die radikalische Polymerisation in Schritt b) bei einer Temperatur im Bereich von 20 bis 95 °C, besonders bevorzugt von 30 bis 90 °C, insbesondere von 40 bis 80 °C.

Die radikalische Polymerisation in Schritt b) kann in Gegenwart wenigstens eines Zusatzstoffes erfolgen. Geeignete Zusatzstoffe sind beispielsweise Korrosionsinhibitoren, Entschäumer und Schauminhibitoren, Farbstoffe, Duftstoffe, Verdicker, Löslichkeitsvermittler, organische Lösemittel, Elektrolyte, antimikrobielle Wirkstoffe, Antioxidantien, UV-Absorber und Mischungen davon.

Bevorzugt umfasst die radikalische Polymerisation in Schritt b) des Verfahrens
b1) Bereitstellung einer Vorlage, die wenigstens einen Teil des (C₈-C₁₈-Alkyl)polyoxyalkylenethers, gegebenenfalls wenigstens einen Teil des Reglers R) und, falls die Polymerisation in Gegenwart eines Lösungsmittels LM) erfolgt, gegebenenfalls wenigstens einen Teil von LM) enthält;
b2) Zugabe der Monomerzusammensetzung M) in einem Zulauf oder in mehreren Zuläufen sowie Zugabe eines Zulaufs, der den Radikalstarter S), gelöst in einem Teil des wenigstens einen (C₈-C₁₈-Alkyl)polyoxyalkylenethers und/oder des Lösungsmittels LM) enthält und gegebenenfalls Zugabe eines Zulaufs der die Menge des Reglers R) enthält, die nicht in der Vorlage eingesetzt wird,
b3) gegebenenfalls Nachpolymerisierung der in Schritt b2) erhaltenen Reaktionsmischung.

Üblicherweise wird die Vorlage vor der Zugabe der Zuläufe unter Rühren auf die Polymerisationstemperatur erwärmt.

Bevorzugt werden die einzelnen Reaktanden simultan in getrennten Zuläufen zugegeben, wobei die Flussraten der Zuläufe in der Regel über den Zeitraum der Zugabe möglichst konstant gehalten werden.

Bevorzugt beträgt die Menge an (C₈-C₁₈-Alkyl)polyoxyalkylenether PE) in der Vorlage (Schritt b1)) 30 bis 100 Gew.-%, besonders bevorzugt 65 bis 100 Gew.-% und insbesondere 80 bis 100 Gew.-% bezogen auf das Gesamtgewicht des zur Polymerisation eingesetzten (C₈-C₁₈-Alkyl)polyoxyalkylenethers PE).

Bevorzugt liegt der Gehalt an Lösungsmittel LM) in der Vorlage bei maximal 70 Gew.-%, bezogen auf das Gesamtgewicht der im Vorlauf befindlichen Einsatzstoffe. Bevorzugt liegt der Gehalt an Lösungsmittel im Vorlauf bei maximal 40 Gew.-%, insbesondere bei maximal 35 Gew.-%, bezogen auf das Gesamtgewicht der im Vorlauf befindlichen Einsatzstoffe. Die Lösungsmittelmenge ändert sich über den gesamten Verlauf des Verfahrens in der Regel nur um wenige Gewichtsprozente. Üblicherweise werden Lösungsmittel LM) verwendet, die einen Siedepunkt bei Normaldruck (1 bar) von unter 240 °C aufweisen.

In einer speziellen Variante enthält die Vorlage kein Lösungsmittel. Dieses wird erst in Schritt b2) über wenigstens einen der Zuläufe zugegeben. In einer ganz speziellen Variante wird kein Lösungsmittel vorgelegt sowie über den gesamten Verlauf des Verfahrens kein Lösungsmittel zugegeben.

In einer weiteren speziellen Variante wird das Lösungsmittel vollständig vorgelegt.

In einer weiteren speziellen Variante enthält die Vorlage keinen Regler. Falls ein Regler eingesetzt wird, wird dieser erst in Schritt b2) über wenigstens einen der Zuläufe zugegeben.

Die Zugabe der Zuläufe in Schritt b2) erfolgt über einen Zeitraum der in vorteilhafter Weise so gewählt wird, dass die bei der exothermen Polymerisationsreaktion entstehende Reaktionswärme ohne größeren technischen Aufwand, z. B. ohne die Verwendung eines Rückflusskühlers, abgeführt werden kann. Üblicherweise erfolgt die Zugabe der Zuläufe über einen Zeitraum von 1 bis 10 Stunden. Bevorzugt erfolgt die Zugabe der Zuläufe über einen Zeitraum von 2 bis 8 Stunden, besonders bevorzugt über 2 bis 6 Stunden.

In einer alternativen Ausführung erfolgt die radikalische Polymerisation in Schritt b) des Verfahrens kontinuierlich, z. B. in einem Rohreaktor. Dann erfolgt die Zugabe der Monomerzusammensetzung M), des (C₈-C₁₈-Alkyl)polyoxyalkylenethers PE), wenigstens eines Initiators, gegebenenfalls wenigstens eines Reglers R) und gegebenenfalls wenigstens eines Lösungsmittels LM) in den Reaktor in Form von einem flüssigen Strom oder vorzugsweise von wenigstens zwei flüssigen Strömen. In der Regel enthält der den Initiator enthaltende Strom im Allgemeinen nicht auch den Regler. Werden wenigstens zwei flüssige Ströme eingesetzt, so werden diese in üblicher Weise unter Erhalt des Reaktionsgemischs vermischt. Die Polymerisation kann einstufig oder in zwei oder mehr als zwei, d. h. in 2, 3, 4, 5 oder mehr Stufen, erfolgen. In einer geeigneten Ausführungsform wird im Falle einer mehrstufigen Polymerisation zwischen wenigstens zwei der Polymerisationsstufen wenigstens ein zusätzlicher Strom zugemischt. Dabei kann es sich um einen monomerhaltigen Strom, initiatorhaltigen Strom, lösungsmittelhaltigen Strom, reglerhaltigen Strom, eine Mischung daraus und/oder um einen beliebigen anderen Stoffstrom handeln.

Während der radikalischen Polymerisation werden in der Regel das optional eingesetzte Lösungsmittel und/oder etwaig entstehende Kondensationsprodukte nicht abgeführt. D. h. während der Polymerisation findet üblicherweise kein oder ein im Rahmen der technischen Möglichkeiten nur sehr geringer Stoffaustausch mit der Umgebung statt.

Die Polymerisation kann in der Regel bei Umgebungsdruck oder vermindertem oder erhöhtem Druck erfolgen. Bevorzugt wird die Polymerisation bei Umgebungsdruck durchgeführt.

Die Polymerisation erfolgt in der Regel bei konstanter Temperatur, kann aber auch bei Bedarf während der Polymerisation variiert werden. Bevorzugt wird die Polymerisationstemperatur über den gesamten Reaktionszeitraum, d. h. der Schritte b2) und b3), möglichst konstant gehalten. Je nachdem welche Einsatzstoffe im erfindungsgemäßen Verfahren eingesetzt werden, bewegt sich die Polymerisationstemperatur üblicherweise im Bereich von 20 bis 95 °C. Bevorzugt bewegt sich die Polymerisationstemperatur im Bereich von 30 bis 90 °C und insbesondere im Bereich von 40 bis 80 °C. Sofern die Polymerisation nicht unter erhöhtem Druck durchgeführt wird und der Reaktionsmischung wenigstens ein optionales Lösungsmittel LM) zugesetzt wurde, bestimmt das Lösungsmittel bzw. Lösungsmittelgemisch durch die entsprechenden Siedetemperaturen die maximale Reaktionstemperatur.

Die Polymerisation kann in Abwesenheit oder in Gegenwart eines Inertgases erfolgen. Üblicherweise wird die Polymerisation in Anwesenheit eines Inertgases durchgeführt. Unter Inertgas wird in der Regel ein Gas verstanden, welches unter den gegebenen Reaktionsbedingungen keine Reaktion mit den an den Reaktion beteiligten Edukten, Reagenzien, Lösungsmitteln oder den entstehenden Produkten eingeht.

Falls die Polymerisation in Gegenwart eines Lösungsmittels durchgeführt wird, so ist dieses ausgewählt unter den zuvor beschriebenen Lösungsmitteln LM).

Zur Herstellung der Polymerisate können die Monomeren mit Hilfe von Radikale bildenden Initiatoren, im Nachfolgenden auch als Radikalstarter oder Starter bezeichnet, polymerisiert werden. Als Radikalstarter (Initiatoren) für die radikalische Polymerisation kommen grundsätzlich alle Radikalstarter in Frage, die im Reaktionsmedium, wie es zum Zeitpunkt ihrer Zugabe vorherrscht, im Wesentlichen löslich sind und bei den gegebenen Reaktionstemperaturen eine ausreichende Aktivität besitzen, um die Polymerisation zu starten. In das erfindungsgemäße Verfahren kann ein einzelner Radikalstarter oder eine Kombination wenigstens zweier Radikalstarter eingesetzt werden. Im letzteren Fall können die wenigstens zwei Radikalstarter im Gemisch oder vorzugsweise getrennt, gleichzeitig oder nacheinander, z. B. zu unterschiedlichen Zeitpunkten im Reaktionsverlauf, eingesetzt werden.

Als Radikalstarter für die radikalische Polymerisation können die hierfür üblichen Peroxo- und/oder Azo-Verbindungen eingesetzt werden, beispielsweise Wasserstoffperoxid, Alkali- oder Ammoniumperoxodisulfate (wie z. B. Natriumperoxodisulfat), Diacetylperoxid, Dibenzoylperoxid, Succinylperoxid, Di-tert.-butylperoxid, tert.-Butyl-peroxybenzoat, tert.-Butylperoxypivalat, tert.-Butylperoxyneodecanoat, tert.-Butyl-peroxy-2-ethylhexanoat, tert.-Butylperoxymaleinat, Cumolhydroperoxid, Diisopropylperoxidicarbamat, Bis-(o-toluoyl)-peroxid, Didecanoylperoxid, Dioctanoylperoxid, tert.-Butylperoctoat, Dilauroylperoxid, tert.-Butylperisobutyrat, tert.-Butylperacetat, Di-tert.-amylperoxid, tert.-Butylhydroperoxid, 2,2'-Azo-bis-isobutyronitril, 2,2'-Azo-bis-(2-amidinopropan)dihydrochlorid (= Azo-bis(2-methylpropionamidin)dihydro-chloride), Azobis(2,4-dimethylvaleronitril) oder 2,2'-Azo-bis-(2-methyl-butyronitril).

Geeignet sind auch Initiatormischungen oder Redox-Initiator-Systeme, wie z. B. Ascorbinsäure/Eisen(II)sulfat/Natriumperoxodisulfat, tert.-Butylhydroperoxid/Natriumdisulfit, tert.-Butylhydroperoxid/Natriumhydroxymethansulfinat,
H₂O₂/Cu^{I}.

In dem erfindungsgemäßen Verfahren bewegt sich die Menge an eingesetztem Initiatorsystem (Starter) im Bereich von 0,01 bis 10 pphm, bevorzugt im Bereich von 0,1 bis 5 pphm, besonders bevorzugt im Bereich von 0,2 bis 2 pphm und insbesondere im Bereich von 0,3 bis 1,5 pphm (parts per hundred monomer = Gewichtsteile pro hundert Gewichtsteile Monomer).

Im erfindungsgemäßen Verfahren wird der Radikalstarter in der Regel als Lösung in einem Lösungsmittel bereitgestellt, das wenigstens eines der zuvor genannten Lösungsmittel LM) und gegebenenfalls zusätzlich wenigstens einen (C₈-C₁₈-Alkyl)polyoxyalkylenether PE) umfasst.

Die Polymerisation kann ohne Einsatz eines Reglers (Polymerisationsregler) oder in Gegenwart wenigstens eines Reglers erfolgen. Als Regler werden allgemein Verbindungen mit hohen Übertragungskonstanten bezeichnet, die Kettenübertragungsreaktionen beschleunigen und damit eine Herabsetzung des Polymerisationsgrades der resultierenden Polymere bewirken. Bei den Reglern kann man zwischen mono-, bi- oder polyfunktionalen Reglern unterscheiden je nach Anzahl der funktionellen Gruppen im Molekül, die zu einer oder mehreren Kettenübertragungsreaktionen führen können. Geeignete Regler werden beispielsweise ausführlich beschrieben von K. C. Berger und G. Brandrup in J. Brandrup, E. H. Immergut, Polymer Handbook, 3. Aufl., John Wiley & Sons, New York, 1989, S. II/81 - II/141.

Als Regler eignen sich beispielsweise Aldehyde wie Formaldehyd, Acetaldehyd, Propionaldehyd, n-Butyraldehyd, Isobutyraldehyd.

Ferner können als Regler Ameisensäure, ihre Salze oder Ester, wie Ammoniumformiat, 2,5-Diphenyl-1-hexen, Hydroxylammoniumsulfat und Hydroxylammoniumphosphat, eingesetzt werden.

Weitere geeignete Regler sind Allylverbindungen, wie z. B. Allylalkohol, funktionalisierte Allylether, wie Allylethoxylate, Alkylallylether, oder Glycerinmonoallylether.

Bevorzugt werden als Regler Verbindungen eingesetzt, die Schwefel in gebundener Form enthalten. Verbindungen dieser Art sind beispielsweise anorganische Hydrogensulfite, Disulfite und Dithionite oder organische Sulfide, Disulfide, Polysulfide, Sulfoxide und Sulfone. Dazu zählen Di-n-butylsulfid, Di-n-octylsulfid, Diphenylsulfid, Thiodiglykol, Ethylthioethanol, Diisopropyldisulfid, Di-n-butyldisulfid, Di-n-hexyldisulfid, Diacetyldisulfid, Diethanolsulfid, Di-t-butyltrisulfid, Dimethylsulfoxid, Dialkylsulfid, Dialkyldisulfid und/oder Diarylsulfid. Geeignet als Polymerisationsregler sind weiterhin Thiole (Verbindungen, die Schwefel in Form von SH-Gruppen enthalten, auch als Mercaptane bezeichnet). Bevorzugt sind als Regler mono-, bi- und polyfunktionale Mercaptane, Mercaptoalkohole und/oder Mercaptocarbonsäuren. Beispiele für diese Verbindungen sind Allylthioglykolate, Ethylthioglykolat, Cystein, 2-Mercaptoethanol, 1,3-Mercaptopropanol, 3-Mercaptopropan-1,2-diol, 1,4-Mercaptobutanol, Mercaptoessigsäure, 3-Mercaptopropionsäure, Mercaptobernsteinsäure, Thioglycerin, Thioessigsäure, Thioharnstoff und Alkylmercaptane wie n-Butylmercaptan, n-Hexylmercaptan oder n-Dodecylmercaptan. Beispiele für bifunktionale Regler, die zwei Schwefelatome in gebundener Form enthalten sind bifunktionale Thiole, wie z. B. Dimercaptopropansulfonsäure (Natriumsalz), Dimercaptobernsteinsäure, Dimercapto-1-propanol, Dimercaptoethan, Dimercaptopropan, Dimercaptobutan, Dimercaptopentan, Dimercaptohexan, Ethylenglykol-bis-thioglykolate und Butandiol-bis-thioglykolat. Beispiele für polyfunktionale Regler sind Verbindungen, die mehr als zwei Schwefel in gebundener Form enthalten. Beispiele hierfür sind trifunktionale und/oder tetrafunktionale Mercaptane.

Besonders bevorzugt ist der Regler ausgewählt unter Mercaptoethanol, Mercaptoessigsäure, Mercaptopropionsäure, Ethylhexylthioglycolat und Natriumhydrogensulfit.

Bevorzugt als Regler sind weiterhin hypophosphorige Säure (Phosphinsäure) und Salze der hypophosphorigen Säure. Ein bevorzugtes Salz der hypophosphorigen Säure ist das Natriumsalz.

Wird in dem erfindungsgemäßen Verfahren ein Regler eingesetzt wird, so beträgt die Menge üblicherweise 1 bis 40 pphm ("parts per hundred monomer", d. h. Gewichtsteile bezogen auf hundert Gewichtsteile Monomerzusammensetzung). Bevorzugt liegt die in dem erfindungsgemäßen Verfahren eingesetzte Menge an Regler im Bereich von 3 bis 30 pphm, besonders bevorzugt im Bereich von 5 bis 25 pphm. Es ist auch möglich, die Polymerisation ohne Zusatz eines Reglers durchzuführen.

Üblicherweise wird der Regler in Schritt b2) vollständig über einen der Zuläufe kontinuierlich zur Polymerisationsmischung zugegeben. Es ist jedoch auch möglich, den Regler entweder vollständig zur Vorlage, d. h. vor der eigentlichen Polymerisation, zuzugeben oder es wird nur ein Teil des Reglers in der Vorlage vorgelegt und der Rest in Schritt b2) über einen der Zuläufe kontinuierlich zur Polymerisationsmischung zugegeben. Die Zugabe des Reglers kann dabei jeweils ohne oder mit Lösungsmittel LM) erfolgen.

Die Menge des Reglers und die Art wie dieser zur Reaktionsmischung zugegeben wird, haben einen starken Einfluss auf das mittlere Molekulargewicht der Polymerzusammensetzung. Wenn kein Regler oder nur eine geringe Menge Regler eingesetzt wird und/oder wenn die Zugabe überwiegend vor der Polymerisation erfolgt, führt dies in der Regel zu höheren mittleren Molekulargewichten des gebildeten Polymers. Werden hingegen größere Menge Regler verwendet und/oder findet die Zugabe des Reglers größtenteils während der Polymerisation statt (Schritt b2)), führt dies in der Regel zu einem kleineren mittleren Molekulargewicht.

Um unerwünschte Schaumbildung bei der Synthese, beim Transport (z. B. beim Pumpen) und Lagerung sowie bei der Folienherstellung zu vermeiden bzw. zu reduzieren, können Entschäumer und Schauminhibitoren eingesetzt werden. Prinzipiell kommen alle bekannten Schauminhibitoren oder Entschäumer in Betracht. Zu nennen sind hier beispielsweise (1) ölbasierte Systeme auf Basis von Mineralöl oder Pflanzenöl, die zusätzlich noch Wachse oder Kieselsäurepartikel enthalten können, (2) wasserbasierte Systeme, in denen Öl und Wachse dispergiert vorliegen, (3) silikonbasierte Systeme (Polysiloxane), eingesetzt z. B. in wasserlöslicher Form, als Öl oder wasserbasierte Emulsion (4) EO/PO basierte Polyalkoxylate, (5) Alkylpolyacrylate, (6) Fettsäuren und Fettsäureester, speziell Mono- und Diglyceride von Fettsäuren, (8) Fettalkoholalkoxylate, (9) Entschäumer aus der Klasse der Phosphorsäureester und deren Salze, wie Natrium(C₆-C₂₀-alkyl)phosphate, z. B. Natriumoctylphosphat oder Tri(C₁-C₂₀-alkyl)phosphate, z. B. Tributylphosphat und (10) Metallseifen, wie Aluminumstearat oder Calciumoleat.

Die Polysiloxane (Polydimethylsiloxane) können auch in modifizierter Form, z. B. alkylgruppenmodifiziert oder polyethergruppenmodifiziert, verwendet werden. Diese werden bevorzugt eingesetzt.

Bevorzugt wird die nach Beendigung der Polymerisation (Schritt b3)) erhaltene Polymerzusammensetzung in ein geeignetes Gefäß transferiert und gegebenenfalls direkt auf Umgebungstemperatur (20 °C) abgekühlt.

Die auf diese Weise erhaltenen Polymerzusammensetzungen P) eignen sich vorteilhaft zur Herstellung von wasch- und reinigungsaktiven Polymerfolien, z. B. als Umhüllung eines flüssigen Wasch- oder Reinigungsmittels. Die Herstellung von Folien und von Umhüllungen auf deren Basis wird im Folgenden im Rahmen von Schritt c) noch näher beschrieben.

Das gewichtsmittlere Molekulargewicht M_{w} der erfindungsgemäßen Polymerzusammensetzung wurde mittels Gelpermeationschromatographie (GPC) in wässriger Lösung unter Verwendung von neutralisierter Polyacrylsäure als Polymerstandard bestimmt. Bei dieser Art der Molekulargewichtsbestimmung werden die Komponenten der Polymerzusammensetzung erfasst, welche die Monomere M) einpolymerisiert enthalten. Die Polymerzusammensetzung P) weist vorzugsweise ein gewichtsmittleres Molekulargewicht von 2000 bis 100000 g/mol, bevorzugt von 3000 bis 80000 g/mol, auf.

Die Polymerzusammensetzung P) verfügt über eine zur Folienbildung geeignete ausreichend niedrige Glasübergangstemperatur T_{G}. Vorzugsweise weisen die Polymerzusammensetzungen P) eine Glasübergangstemperatur T_{G} im Bereich von 0 bis 80 °C, besonders bevorzugt von 0 bis 60 °C, insbesondere von 0 bis 30 °C, auf.

Die Polymerzusammensetzung P) weist vor ihrem Einsatz zur Folienherstellung (d. h. bevor sie eine Trocknung durchläuft) vorzugsweise einen Gehalt an Säuregruppen von mehr als 1 mmol/g, besonders bevorzugt von mehr als 1,3 mmol/g auf. Die Polymerzusammensetzung P) weist vorzugsweise vor ihrem Einsatz zur Folienherstellung einen Gehalt an Säuregruppen von höchstens 15 mmol/g auf. Die Polymerzusammensetzung P) weist vor ihrem Einsatz zur Folienherstellung insbesondere einen Gehalt an Säuregruppen von 1,5 mmol/g bis 10 mmol/g auf.

In einer bevorzugten Ausführungsform liegen die Säuregruppen der erfindungsgemäßen Polymerzusammensetzung in nicht neutralisierter Form vor.

In Schritt c) des erfindungsgemäßen Verfahrens wird das in Schritt b) erhaltene Polymerisat in eine Polymerfolie überführt.

Ein weiterer Gegenstand der Erfindung ist dementsprechend ein Verfahren zur Herstellung einer wasch- und reinigungsaktiven Polymerfolie, bei dem man eine Polymerzusammensetzung P), gegebenenfalls nach Zugabe wenigstens eines Zusatzstoffes, einer Folienbildung unterzieht. Die Folienbildung erfolgt vorzugsweise durch Gießen Blasformen, Thermoformen oder Kalandrieren.

Bezüglich geeigneter und bevorzugter Polymerzusammensetzungen P) wird auf die vorherigen Ausführungen in vollem Umfang Bezug genommen.

Eine spezielle Ausführung ist ein Verfahren zur Herstellung einer erfindungsgemäßen wasch- und reinigungsaktiven Polymerfolie, die wenigstens einen Zusatzstoff enthält. Zusatzstoffe können, wie zuvor beschrieben, bereits bei der radikalische Polymerisation in Schritt b) oder bei der Folienbildung in Schritt c) zugegeben werden. Ob die Zugabe bereits in Schritt b) oder erst in Schritt c) erfolgt ergibt sich Abhängigkeit von der Art und Wirkung des jeweiligen Zusatzstoffes. Zur Folienbildung in Schritt c) können der Polymerzusammensetzung P) Zusatzstoffe vor und/oder während der Folienherstellung zugesetzt werden.

Manche Zusatzstoffe können mehrere Funktionen erfüllen, z. B. als Lösungsmittel LM) und als Weichmacher.

Bevorzugt ist der Zusatzstoff ausgewählt unter nichtionischen, anionischen, kationischen und amphoteren Tensiden, Buildern, Komplexbildner, wie Methylglycindiessigsäure, Glutamindiessigsäure, Glutaminsäurediessigsäure und Citronensäure und ihre Natrium- und Kaliumsalze, Bleichmitteln, Enzymen, Basen, Korrosionsinhibitoren, Entschäumern, Netzmitteln, Farbstoffen, Pigmenten, Duftstoffen, Füllstoffen, Tablettierhilfsmitteln, Desintegrationsmitteln, Verdickern, Löslichkeitsvermittlern, organischen Lösemitteln, Elektrolyten, pH-Stellmitteln, Parfümträgern, Fluoreszenzmitteln, Hydrotropen, Antiredepositionsmitteln, optischen Aufhellern, Vergrauungsinhibitoren, Einlaufverhinderern, Knitterschutzmitteln, Farbübertragungsinhibitoren, antimikrobiellen Wirkstoffen, Antioxidantien, Korrosionsinhibitoren, Antistatika, Bügelhilfsmitteln, Phobier- und Imprägniermitteln, Quell- und Schiebefestmitteln, Weichmachern, Scavengern, von den Polymerzusammensetzungen P) verschiedenen Polymeren, Mittel zur Modifikation der Gasdurchlässigkeit und Wasserdampfdurchlässigkeit, Antistatikmitteln, Gleitmitteln, Slipmitteln, UV-Absorbern und Mischungen davon.

Speziell geeignete Zusatzstoffe sind Weichmacher, Scavenger, weitere Polymere, Mittel zur Modifikation der Gasdurchlässigkeit und Wasserdampfdurchlässigkeit, Antistatikmittel, Gleitmittel, Slipmittel, Auflösungshilfsmittel, Farbstoffe, Pigmente, Enzyme, Korrosionsinhibitoren, Entschäumer, Duftstoffe, Verdicker, Löslichkeitsvermittler, Lösemittel, pH-Stellmittel, Antiredepositionsmittel, optische Aufheller, Vergrauungsinhibitoren, Farbübertragungsinhibitoren, antimikrobielle Wirkstoffe, Antioxidantien, UV-Absorber und Mischungen davon.

Um die erfindungsgemäßen Polymerfolien flexibler zu machen, können ihnen bei der Herstellung Weichmacher zugegeben werden. In der Regel ist es ausreichend, diese Weichmacher in einer begrenzten Menge einzusetzen. Bevorzugt werden 0,5 bis 30 Gew.-%, besonders bevorzugt 2 bis 20 Gew.-%, insbesondere 3 bis 15 Gew.-% Weichmacher bezogen auf die Masse der Polymerzusammensetzung P) verwendet. Die Weichmacher können der Polymerzusammensetzung vor und/oder während des Erwärmens zugegeben werden.

Geeignete Weichmacher sind Alkylenamine, Alkanolamine, Polyole, wie Alkylenglycole und Oligoalkylenglycole, z. B. 2-Methyl-1,3-propandiol, 3-Methyl-1,5-Pentadiol, Hydroxypropylglycerin, Neopentylglycol, alkoxyliertes Glycerin (wie z. B. Voranol ® von Dow Chemicals), wasserlösliche Polyesterpolyole (wie z. B. TriRez von Geo Specialty Chemicals) und Mischungen davon. Geeignete Weichmacher sind weiterhin Polyetherpolyole, die unter der Bezeichnung Lupranol® von BASF SE erhältlich sind. Der Begriff "Alkylenamine" bezeichnet Kondensationsprodukte von Alkanolaminen mit Ammoniak oder primären Aminen, z. B. werden Ethylenamine durch Umsetzung von Monoethanolamin mit Ammoniak in Gegenwart eines Katalysators erhalten. Dabei resultieren als Hauptkomponenten: Ethylendiamin, Piperazin, Diethylentriamin und Aminoethylethanolamin.

Bevorzugt sind die Weichmacher ausgewählt unter Glycerin, Diglycerin, Propylenglycolen mit einen gewichtsmittleren Molekulargewicht von bis zu 400 g/mol, Ethylenglycol, Diethylenglycol, Triethylenglykol, Tetraethylenglykol, Zuckeralkoholen, wie Sorbitol, Mannitol, Xylitol, Isomalt, Lactitol, Isopentyldiol, Neopentylglykol, Polyethylenglykol, Trimethylolpropan, Diethylentriamin, Triethylenpentamin, Triethanolamin und Mischungen davon.

Um die erfindungsgemäßen Polymerfolien resistenter gegenüber aggressiven Inhaltsstoffen zu machen (wie z. B. Chlor freisetzende Verbindungen, wie sie im Bereich der Desinfektion von Wasser, etc. verwendet werden), können sogenannte "Scavenger" (Fängermoleküle) der Folie hinzugefügt werden. Geeignete Scavenger sind Polyamine, polymere Polyamine, wie Polyethylenimine, Poly(amidoamine) und Polyamide. Darüber hinaus können auch Ammoniumsulfat, primäre und sekundäre Amine mit einem geringen Dampfdruck, wie Ethanolamine, Aminosäure und deren Salze, sowie Polyaminosäure und deren Salze, Fettamine, Glucoseamine und andere aminierte Zucker verwendet werden. Des Weiteren können Reduktionsmittel wie Sulfite, Bisulfite, Thiosulfite, Thiosulfate, lodide, Nitrite und Antioxidanzien wie Carbamate, Ascorbate und Mischungen davon verwendet werden.

Als Zusatzstoffe zu den Polymerfolien geeignete Entschäumer sind die zuvor genannten.

Zur Folienbildung in Schritt c) können der Polymerzusammensetzung P) weitere Zusatzstoffe in der Form von Polymeren vor und/oder während der Folienherstellung zugesetzt werden. Typischerweise werden 0,05 bis 20 Gew.-%, bevorzugt 0,1 bis 15 Gew.-%, besonders bevorzugt 0,2 bis 10 Gew.-% Polymere (bezogen auf die Polymerzusammensetzung P) verwendet. Solche Zusatzstoffe können gleichzeitig die Wascheigenschaften der Folie verbessern, die mechanischen Eigenschaften der Folie verbessern, und die Beständigkeit der Folie gegen Waschmittelkomponenten erhöhen. Geeignete Polymere sind z. B. Oligosaccharide und Polysaccharide, Stärke, abgebaute Stärken (Maltodextrine), Celluloseether, speziell Hydroxyethylcellulose, Hydroxypropylcellulose, Methylcellulose, Ethylcellulose, Hydroxypropylmethylcellulose, Hydroxypropylethylcellulose, mikrokristalline Cellulose, Inulin, Carboxymethylcellulose, z. B. in Form der Natriumsalze, Alginsäure und Alginate, Pektinsäure und Pektine, Polyethylenimine, alkoxylierte, insbesondere ethoxylierte Polyethylenimine, Pfropfpolymere von Vinylacetat auf Polyalkylenglykole, insbesondere auf Polyethylenglykole, Homopolymere von N-Vinylpyrrolidon, Copolymere von N-Vinylpyrrolidon und N-Vinylimidazol, Copolymere von N-Vinylpyrrolidon mit Vinylacetat oder mit Vinylcaprolactam, Polyalkylenoxide, Polyvinylalkohol, Polyvinylalkohole mit Anteilen an nicht hydrolysiertem Vinylacetat, Verdicker, wie beispielsweise Xanthan Gum, Guar Gum, Gelatine, Agar-agar und Mischungen davon.

Es ist weiterhin möglich, wenigstens eine Oberfläche oder beide Oberflächen der erfindungsgemäßen Polymerfolien einer zumindest teilweisen Beschichtung mit wenigstens einem Zusatzstoff zu unterziehen. Eine solche Behandlung kann z. B. dazu dienen, die Oberfläche mit bestimmten Eigenschaften, wie einer Antihaft-Wirkung, Antistatik-Wirkung, hydrophilen oder hydrophoben Eigenschaften, etc., zu versehen. Somit können die Polymerfolien beispielsweise mit besseren Ablöseeigenschaften, besseren Abrolleigenschaften, besseren Gleiteigenschaften, einer verringerten Klebrigkeit, einer besseren Verträglichkeit gegenüber bestimmten damit umhüllten oder beschichteten Komponenten, etc. versehen werden. Das Aufbringen kann je nach Art und Zubereitung des Zusatzstoffes nach üblichen Verfahren erfolgen, z. B. durch Besprühen, Tauchen, Pulverauftrag, etc. Geeignete Zusatzstoffe zur Beschichtung der Oberfläche der erfindungsgemäßen Polymerfolien sind z. B. Talkum, Tenside, wie silikonhaltige Tenside, Wachse, etc.

Grundsätzlich unterliegt das Folienherstellungsverfahren keinen besonderen Beschränkungen und der Fachmann kann unter Verwendung einer Polymerzusammensetzung P) jedes beliebige Herstellungsverfahren anwenden, das ihm aufgrund seiner Fachkenntnis bekannt ist. Das Gleiche gilt zur Herstellung von Umhüllungen und Beschichtungen auf Basis einer erfindungsgemäßen Folie. Besonders geeignet sind Gießverfahren und Extrusionsverfahren.

Bei der Herstellung der Folien durch Extrusion wird beispielsweise eine nach dem erfindungsgemäßen Verfahren erhältliche Polymerzusammensetzung, gegebenenfalls nach Zugabe wenigstens eines Zusatzstoffes, extrudiert, in einem Blasverfahren zu einer Folie geblasen oder in Thermoformverfahren zu einer Folie geformt und gegebenenfalls die so erhaltene Folie in eine für das Umhüllen oder Beschichten von Waschmittel- oder Reinigungsmittel-Portionen geeignete Form gebracht.

Bei der Herstellung der Folien durch Gießen wird beispielsweise eine nach dem erfindungsgemäßen Verfahren erhältliche Polymerzusammensetzung, gegebenenfalls nach Zugabe wenigstens eines Zusatzstoffes, aufgeschmolzen oder in einem geeigneten Lösungsmittel oder Lösungsmittelgemisch gelöst, die so erhaltene fließfähige Polymerzusammensetzung zu einer Folie ausgegossen und gegebenenfalls das Lösungsmittel oder Lösungsmittelgemisch durch Verdampfen entfernt.

Geeignete Lösungsmittel und Lösungsmittelgemische sind die zuvor als Komponente LM) beschriebenen, worauf hier in vollem Umfang Bezug genommen wird. Das Lösungsmittel ist besonders bevorzugt ausgewählt unter Wasser, Ethanol, n-Propanol, Isopropanol, Ethylenglycol, Diethylenglycol, 1,2-Propylenglycol, 1,2-Dipropylenglycol und Mischungen davon. In einer speziellen Ausführungsform wird als Lösungsmittel Wasser oder ein Gemisch aus Wasser und wenigstens einem von Wasser verschieden Lösungsmittel eingesetzt, ausgewählt unter Ethanol, n-Propanol, Isopropanol, Ethylenglycol, Diethylenglycol, 1,2-Propylenglycol, 1,2-Dipropylenglycol und Mischungen davon.

Die Polymerzusammensetzungen P) sind in der Regel thermoplastisch und können einer Umformung durch Thermoformen (d. h. Warmformen, Tiefziehen oder Vakuumtiefziehen) unterzogen werden. Ein Verfahren zur Herstellung von wasserlöslichen Folienverpackungen durch ein Thermoformverfahren, das einen Warmform- oder Tiefziehschritt umfasst, ist in der WO 00/55044 beschrieben.

Zur Herstellung von Folienportionen kann das Folienmaterial in geeigneter Weise konfektioniert werden, z. B. durch Schneiden in eine geeignete Größe und/oder Falten zur Bildung von Kompartimenten. Anschließend können die Kanten nach üblichen Versiegelungsverfahren, wie Heißsiegeln, Flüssigsiegeln oder Drucksiegeln verschlossen werden.

### Wasch- und Reinigungsmittel

Die erfindungsgemäßen wasch- und reinigungsaktiven Polymerfolien eignen sich vorteilhaft für die Verwendung zur portionsweisen Verpackung von Wasch- und Reinigungsmitteln. Sie eignen sich zum einen speziell zur Herstellung einer Umhüllung, die feste oder flüssige oder gelförmige Wasch- oder Reinigungsmittel oder wenigstens eine deren Komponenten enthält. Die erfindungsgemäßen wasch- und reinigungsaktiven Polymerfolien eignen sich weiterhin zur Herstellung einer Beschichtung auf einem festen Wasch- oder Reinigungsmittel oder auf wenigstens einer festen Komponente davon. Die Polymerfolien lösen sich zu Beginn der jeweiligen Anwendung (z. B. im Wasch- und Spülwasser) auf, setzen somit die Inhaltsstoffe der Wasch- und Reinigungsmittel frei und tragen in aufgelöster Form aufgrund ihrer dispergierenden, belagsinhibierenden, emulgierenden und tensidischen Eigenschaften zur Wasch- und Reinigungsleistung in erheblichem Maße bei. Sie eignen sich aufgrund ihrer Waschwirkung speziell zur Formulierung von Waschmitteln und zeichnen sich durch eine gute Remission bei der Behandlung schmutziger Gewebe aus.

Die erfindungsgemäßen Waschmittel- oder Reinigungsmittelportionen enthalten als Umhüllung und/oder Beschichtung wenigstens eine erfindungsgemäße wasch- oder reinigungsaktive Polymerfolie. Im Inneren dieser Umhüllung oder Beschichtung enthalten die erfindungsgemäßen Waschmittel- oder Reinigungsmittelportionen abgemessene Mengen wenigstens einer waschaktiven oder reinigungsaktiven Zusammensetzung. Dabei ist es möglich, dass die Waschmittel- oder Reinigungsmittelportionen nur eine einzelne wasch- oder reinigungsaktive Zusammensetzung enthalten. Es ist auch möglich, dass die erfindungsgemäßen Waschmittel- oder Reinigungsmittelportionen zwei oder mehr als zwei unterschiedliche wasch- oder reinigungsaktive Zusammensetzungen enthalten. Die verschiedenen Zusammensetzungen können von gleicher oder verschiedener Umhüllung und/oder Beschichtung umgeben sein. Dabei umfasst wenigstens eine der Umhüllungen und/oder Beschichtungen eine erfindungsgemäße wasch- oder reinigungsaktive Polymerfolie. Die verschiedenen Zusammensetzungen können hinsichtlich der Konzentration der einzelnen Komponenten (quantitativ) und/oder hinsichtlich der Art der einzelnen Komponenten (qualitativ) unterschiedlich sein. Besonders bevorzugt ist, dass die Komponenten hinsichtlich Art und Konzentration an die Aufgaben angepasst sind, die die Wirkstoffportionspackungen im Wasch- oder Reinigungsvorgang zu erfüllen haben.

Die erfindungsgemäßen wasch- und reinigungsaktiven Polymerfolien eignen sich auch vorteilhaft zur Herstellung von sogenannten Mehrkammersystemen. Mehrkammersysteme weisen 2, 3, 4, 5 oder mehr als 5 Kammern auf, die jeweils einen einzelnen oder mehrere Komponenten eines Wasch- oder Reinigungsmittels enthalten. Dabei kann es sich grundsätzlich um einen einzelnen wasch- oder reinigungsaktiven Wirkstoff, einen einzelnen Hilfsstoff oder eine beliebige Mischung von zwei oder mehr als zwei Wirkstoffen und/oder Hilfsstoffen handeln. Die Inhalte der einzelnen Kammern können jeweils flüssig, gelförmig oder fest sein. Mehrkammersysteme bieten sich beispielsweise an, um nicht oder weniger kompatible Komponenten eines Wasch- oder Reinigungsmittels voneinander zu trennen. So kann z. B. eine Kammer ein oder mehrere Enzym(e) und eine andere Kammer wenigstens ein Bleichmittel enthalten. Mehrkammersysteme bieten sich beispielsweise auch an, um eine kontrollierte Freisetzung (controlled release) einer bestimmten Komponente z. B. zu einem bestimmten Zeitpunkt des Wasch- oder Reinigungsvorgangs zu ermöglichen. Dazu können z. B. Folienmaterialien unterschiedlicher Materialstärke eingesetzt werden. Des Weiteren können einzelne Kammern unter Verwendung einer erfindungsgemäßen Polymerfolie und andere unter Verwendung einer davon verschiedenen konventionellen Folie hergestellt werden.

Soweit im Folgenden Angaben zur qualitativen und quantitativen Zusammensetzung von Wasch- und Reinigungsmitteln gemacht werden, sollen diese immer die Gesamtformulierung aus Polymerfolie und umhüllten oder beschichteten Komponenten umfassen. Bei einer Formulierung dieser Zusammensetzung als Mehrkammersystem können die Kammern jeweils eine einzelne oder mehrere Komponenten der Formulierung enthalten oder die Gesamtmenge einer Komponente kann auf zwei oder mehr als zwei Kammern verteilt sein.

Die erfindungsgemäßen Waschmittel- oder Reinigungsmittelportionen enthalten im Inneren wenigstens eine wasch- oder reinigungsaktive Zusammensetzung. Bei diesen Zusammensetzungen kann es sich um beliebige im Zusammenhang mit einem Wasch- oder Reinigungsvorgang relevante Substanzen oder Substanzgemische handeln. Dies sind in erster Linie die eigentlichen Waschmittel oder Reinigungsmittel mit ihren im Folgenden näher erläuterten Einzelkomponenten.

Unter Waschmitteln versteht man dabei im Rahmen der vorliegenden Erfindung solche Mittel, die zum Reinigen von flexiblen Materialien mit hoher Saugfähigkeit verwendet werden, z. B. von Materialien mit einem textilen Charakter, während man unter Reinigungsmitteln im Rahmen der vorliegenden Erfindung solche Mittel versteht, die zum Reinigen von Materialien mit geschlossener Oberfläche, d. h. mit einer Oberfläche, die keine oder nur wenige und kleine Poren hat und infolgedessen keine oder nur eine geringe Saugfähigkeit aufweist, eingesetzt werden.

Beispiele für flexible Materialien mit hoher Saugfähigkeit sind solche, die natürliche, synthetische oder halbsynthetische Fasermaterialien enthalten oder daraus bestehen und die demzufolge in der Regel zumindest teilweise einen textilen Charakter aufweisen. Die faserhaltigen oder aus Fasern bestehenden Materialien können prinzipiell in jeder im Gebrauch oder der Herstellung und Verarbeitung vorkommenden Form vorliegen. Beispielsweise können Fasern ungeordnet in Form von Flocke oder Haufwerk, geordnet in Form von Fäden, Garnen, Zwirnen, oder in Form von Flächengebilden wie Vliesen, Lodenstoffen oder Filz, Geweben, Gewirken in allen denkbaren Bindungsarten vorliegen. Bei den Fasern kann es sich um Rohfasern oder um Fasern in beliebigen Verarbeitungsstadien handeln. Beispiele sind natürliche Eiweiß- oder Zellulosefasern, wie Wolle, Seide, Baumwolle, Sisal, Hanf oder Kokosfasern, oder synthetische Fasern, wie beispielsweise Polyester-, Polyamid- oder Polyacrylnitrilfasern.

Beispiele für Materialien, die keine oder nur wenige und kleine Poren haben und keine oder nur eine geringe Saugfähigkeit aufweisen, sind Metall, Glas, Email oder Keramik. Typische Objekte aus diesen Materialien sind z. B. metallene Spülbecken, Bestecke, Glas- und Porzellangeschirr, Badewannen, Waschbecken, Kacheln, Fliesen, ausgehärtete Kunstharze, wie z. B. dekorative Melaminharzoberflächen auf Küchenmöbeln oder lackierte Metallflächen, wie z. B. Kühlschränke und Autokarosserien, gedruckte Schaltungen (printed circuit boards), Mikrochips, versiegelte oder lackierte Hölzer, z. B. Parkett oder Wandverkleidungen, Fensterrahmen, Türen, Kunststoffbeläge, wie Fußbodenbeläge aus PVC oder Hartgummi, oder Hart- oder Weichschaumstoffe mit weitgehend geschlossenen Oberflächen.

Beispiele für Reinigungsmittel, die die erfindungsgemäße wasch- und reinigungsaktive Polymerfolie enthalten können, umfassen Wasch- und Reinigungsmittel, Geschirrspülmittel, wie Handgeschirrspülmittel oder Maschinengeschirrspülmittel (= Geschirrspülmittel für die Geschirrspülmaschine), Metallentfetter, Glasreiniger, Fußbodenreiniger, Allzweckreiniger, Hochdruckreiniger, Neutralreiniger, alkalische Reiniger, saure Reiniger, Spritzentfetter, Molkereireiniger, Großküchenreiniger, Apparatereiniger in der Industrie, insbesondere der chemischen Industrie, Reiniger für der Autowäsche und auch Haushalts-Allzweckreiniger.

Bei den erfindungsgemäßen Wasch- oder Reinigungsmitteln kann es sich um in Beuteln verpackte Portionen fester, flüssiger oder gelförmiger Wasch- oder Reinigungsmittel handeln. In einer speziellen Ausführung handelt es sich um sogenannte pouches (liquid tabs). Weiterhin kann es sich um verpresste Formkörper, wie Tabletten ("Tabs"), Blöcke, Briketts, etc., handeln. In einer speziellen Ausführung handelt es sich um tablettenförmige Wasch- oder Reinigungsmittel.

Das erfindungsgemäße Wasch- oder Reinigungsmittel umfasst vorzugsweise folgende Bestandteile:
A) wenigstens Umhüllung und/oder Beschichtung, enthaltend oder bestehend aus eine(r) erfindungsgemäßen wasch- und reinigungsaktive(n) Polymerfolie,
B) wenigstens ein Tensid,
C) gegebenenfalls wenigstens einen Builder,
D) gegebenenfalls wenigstens ein Bleichsystem,
E) gegebenenfalls wenigstens einen weiteren Zusatzstoff, der vorzugsweise ausgewählt ist unter Enzymen, Basen, Korrosionsinhibitoren, Entschäumern, Farbstoffen, Duftstoffen, Füllstoffen, Tablettierhilfsmitteln, Desintegrationsmitteln, Verdickern, Löslichkeitsvermittlern, organischen Lösemitteln, Elektrolyten, pH-Stellmitteln, Parfümträgern, Fluoreszenzmitteln, Hydrotropen, Antiredepositionsmitteln, optischen Aufhellern, Vergrauungsinhibitoren, Einlaufverhinderern, Knitterschutzmitteln, Farbübertragungsinhibitoren, antimikrobiellen Wirkstoffen, Antioxidantien, Korrosionsinhibitoren, Antistatika, Bügelhilfsmitteln, Phobier- und Imprägniermitteln, Quell- und Schiebefestmitteln und UV-Absorbern, und
F) gegebenenfalls Wasser.

Im Rahmen der vorliegenden Erfindung umfasst der Builder C) auch als Sequestrierungsmittel, Gerüststoff, Komplexbildner, Chelator, Chelatisierungsmittel oder Enthärter bezeichnete Verbindungen.

Die Bleichsysteme D) enthalten neben Bleichmitteln gegebenenfalls noch Bleichaktivatoren, Bleichkatalysatoren und/oder Bleichstabilisatoren.

Besonders bevorzugt umfasst das erfindungsgemäße Wasch- und Reinigungsmittel als Zusatzstoff E) wenigstens ein Enzym.

Eine bevorzugte Ausführungsform betrifft flüssige oder gelförmige Wasch- oder Reinigungsmittel, enthaltend:
A) 0,1 bis 20 Gew.-% wenigstens einer Umhüllung und/oder Beschichtung, enthaltend oder bestehend aus eine(r) erfindungsgemäßen wasch- und reinigungsaktive(n) Polymerfolie,
B) 1 bis 80 Gew.-% wenigstens eines Tensids,
C) 0,1 bis 50 Gew.-% wenigstens eines Builders,
D) 0 bis 20 Gew.-% eines Bleichsystems,
E) 0,1 bis 60 Gew.-% wenigstens eines weiteren Zusatzstoffs, der vorzugsweise ausgewählt ist unter Enzymen, Basen, Korrosionsinhibitoren, Entschäumern, Farbstoffen, Duftstoffen, Füllstoffen, Tablettierhilfsmitteln, Desintegrationsmitteln, Verdickern, Löslichkeitsvermittlern, organischen Lösemitteln, Elektrolyten, pH-Stellmitteln, Parfümträgern, Fluoreszenzmitteln, Hydrotropen, Antiredepositionsmitteln, optischen Aufhellern, Vergrauungsinhibitoren, Einlaufverhinderern, Knitterschutzmitteln, Farbübertragungsinhibitoren, antimikrobiellen Wirkstoffen, Antioxidantien, Korrosionsinhibitoren, Antistatika, Bügelhilfsmitteln, Phobier- und Imprägniermitteln, Quell- und Schiebefestmitteln und UV-Absorbern, und
F) 0 bis 98,7 Gew.-% Wasser.

Die Gew.-%-Angaben beziehen sich dabei auf das Gesamtgewicht des Wasch- und Reinigungsmittels. Die Gewichtsmengen von A) bis F) ergänzen sich zu 100 Gew.-%.

Bevorzugt enthalten die flüssigen oder gelförmigen Wasch- oder Reinigungsmittel bis zu 70 Gew.-% Wasser, besonders bevorzugt bis zu 50 Gew.-% Wasser, insbesondere bis zu 30 Gew.-% Wasser.

Eine weitere bevorzugte Ausführungsform betrifft feste Wasch- oder Reinigungsmittel, enthaltend:
A) 0,1 bis 20 Gew.-% wenigstens einer Umhüllung und/oder Beschichtung, enthaltend oder bestehend aus eine(r) erfindungsgemäßen wasch- und reinigungsaktive(n) Polymerfolie,
B) 1 bis 50 Gew.-% wenigstens eines Tensids,
C) 0,1 bis 70 Gew.-% wenigstens eines Builders,
D) 0 bis 30 Gew.-% eines Bleichsystems,
E) 0,1 bis 70 Gew.-% wenigstens eines weiteren Zusatzstoffs, der vorzugsweise ausgewählt ist unter Enzymen, Basen, Korrosionsinhibitoren, Entschäumern, Farbstoffen, Duftstoffen, Füllstoffen, Tablettierhilfsmitteln, Desintegrationsmitteln, Verdickern, Löslichkeitsvermittlern, organischen Lösemitteln, Elektrolyten, pH-Stellmitteln, Parfümträgern, Fluoreszenzmitteln, Hydrotropen, Antiredepositionsmitteln, optischen Aufhellern, Vergrauungsinhibitoren, Einlaufverhinderern, Knitterschutzmitteln, Farbübertragungsinhibitoren, antimikrobiellen Wirkstoffen, Antioxidantien, Korrosionsinhibitoren, Antistatika, Bügelhilfsmitteln, Phobier- und Imprägniermitteln, Quell- und Schiebefestmitteln und UV-Absorbern, und
gegebenenfalls Wasser.

Die Gew.-%-Angaben beziehen sich dabei auf das Gesamtgewicht des Wasch- und Reinigungsmittels. Die Gewichtsmengen von A) bis F) ergänzen sich zu 100 Gew.-%.

### Komponente A)

Bezüglich geeigneter und bevorzugter erfindungsgemäßer wasch- und reinigungsaktiver Polymerfolien wird auf die vorstehenden Ausführungen verwiesen.

### Komponente B)

Die erfindungsgemäßen Wasch- und Reinigungsmittel enthalten als Komponente B) wenigstens ein Tensid. Geeignete Tenside B) sind nichtionische, anionische, kationische oder amphotere Tenside.

Als Tenside B) können im Rahmen der vorliegenden Erfindung beispielsweise nichtionische Tenside (Niotenside, NIS) eingesetzt werden. Als nichtionische Tenside werden vorzugsweise alkoxylierte Alkohole eingesetzt. Bevorzugt sind alkoxilierte primäre Alkohole. Bevorzugte alkoxylierte Alkohole sind ethoxylierte Alkohole mit vorzugsweise 8 bis 18 C-Atomen im Alkylrest und durchschnittlich 1 bis 12 Mol Ethylenoxid (EO) pro Mol Alkohol. Der Alkoholrest kann linear oder bevorzugt in 2-Stellung methylverzweigt sein oder kann lineare und methylverzweigte Reste im Gemisch enthalten, so wie sie üblicherweise in Oxoalkoholresten vorliegen. Insbesondere bevorzugt sind Alkoholethoxilate mit linearen oder verzweigten Resten aus Alkoholen nativen oder petrochemischen Ursprungs mit 12 bis 18 C-Atomen, zum Beispiel aus Kokos-, Palm-, Talgfett- oder Oleylalkohol, und durchschnittlich 2 bis 8 EO pro Mol Alkohol.

Die ethoxilierten Alkohole sind vorzugsweise ausgewählt unter:
- C₁₂C₁₄-Alkoholen mit 3 EO, 5 EO, 7 EO oder 9 EO,
- C₉C₁₁-Alkoholen mit 7 EO,
- C₁₃-Oxoalkoholen mit 3 EO, 5 EO, 7 EO oder 9 EO,
- C₁₃C₁₅-Alkoholen mit 3 EO, 5 EO, 7 EO oder 9 EO,
- C₁₂C₁₈-Alkoholen mit 3 EO, 5 EO, 7 EO oder 9 EO und Mischungen davon,
- 2-Propylheptanol mit 3 EO, 4 EO, 5 EO, 6 EO, 7 EO, 8 EO und 9 EO
und Mischungen aus zwei oder mehr als zwei der zuvor genannten ethoxylierten Alkohole.

Eine bevorzugte Mischung nichtionischer Tenside ist eine Mischung aus C₁₂C₁₄-Alkohol (Laurylalkohol/Myristylalkohol) mit 3 EO und C₁₂C₁₈-Alkohol (Laurylalkohol/Myristylalkohol/Cetylalkohol/Stearylalkohol)mit 7 EO. Bevorzugt sind weiterhin Mischungen aus kurzkettigen Alkoholethoxilaten (z. B. 2-Propylheptanol mit 7 EO) und langkettigen Alkoholethoxilaten (z. B. C₁₆C₁₈ mit 7 EO).

Die angegebenen Ethoxylierungsgrade stellen statistische Mittelwerte (Zahlenmittel, Mn) dar, die für ein spezielles Produkt eine ganze oder eine gebrochene Zahl sein können. Bevorzugte Alkoholethoxylate weisen eine eingeengte Homologenverteilung auf (narrow range ethoxylates, NRE). Zusätzlich zu diesen nichtionischen Tensiden können auch Fettalkohole mit mehr als 12 EO eingesetzt werden. Beispiele hierfür sind Talgfettalkohol mit 14 EO, 25 EO, 30 EO oder 40 EO. Auch nichtionische Tenside, die Ethylenoxid (EO)- und Propylenoxid (PO)-Gruppen zusammen im Molekül enthalten, sind einsetzbar. Hierbei können Blockcopolymere mit EO-PO-Blockeinheiten bzw. PO-EO-Blockeinheiten eingesetzt werden, aber auch EO-PO-EO-Copolymere bzw. PO-EO-PO-Copolymere. Selbstverständlich sind auch gemischt alkoxylierte Niotenside einsetzbar, in denen EO- und PO-Einheiten nicht blockweise, sondern statistisch verteilt sind. Solche Produkte sind durch gleichzeitige Einwirkung von Ethylenoxid und Propylenoxid auf Fettalkohole erhältlich.

Als Komponente B) geeignete Tenside sind weiterhin Polyetherole, vorzugsweise mit einem zahlenmittleren Molekulargewicht von wenigstens 200 g/mol.

Geeignete Polyetherole können linear oder verzweigt, vorzugsweise linear sein. Geeignete Polyetherole weisen im Allgemeinen ein zahlenmittleres Molekulargewicht im Bereich von etwa 200 bis 100000, bevorzugt 300 bis 50000, besonders bevorzugt 500 bis 40000, auf. Geeignete Polyetherole sind beispielsweise wasserlösliche oder wasserdispergierbare nichtionische Polymere, die Alkylenoxid-Wiederholungseinheiten aufweisen. Vorzugsweise beträgt der Anteil an Alkylenoxid-Wiederholungseinheiten mindestens 30 Gew.-%, bezogen auf das Gesamtgewicht der Verbindung. Geeignete Polyetherole sind Polyalkylenglycole, wie Polyethylenglycole, Polypropylenglycole, Polytetrahydrofurane und Alkylenoxidcopolymere. Geeignete Alkylenoxide zur Herstellung von Alkylenoxidcopolymeren sind z. B. Ethylenoxid, Propylenoxid, Epichlorhydrin, 1,2- und 2,3-Butylenoxid. Geeignet sind beispielsweise Copolymerisate aus Ethylenoxid und Propylenoxid, Copolymerisate aus Ethylenoxid und Butylenoxid sowie Copolymerisate aus Ethylenoxid, Propylenoxid und mindestens einem Butylenoxid. Die Alkylenoxidcopolymere können die Alkylenoxideinheiten statistisch verteilt oder in Form von Blöcken einpolymerisiert enthalten. Vorzugsweise beträgt in den Ethylenoxid/Propylenoxid-Copolymeren der Anteil an von Ethylenoxid abgeleiteten Wiederholungseinheiten 40 bis 99 Gew.-%. Besonders bevorzugt sind Ethylenoxid-Homopolymere und Ethylenoxid/Propylenoxid-Copolymere.

Außerdem können als weitere nichtionische Tenside auch Alkylglykoside der allgemeinen Formel (IV)

R¹⁰O(G)ᵢ (IV)

eingesetzt werden, worin
- R¹⁰: für einen primären geradkettigen oder methylverzweigten aliphatischen Rest mit 8 bis 22 C-Atomen steht,
- G: für eine Glykosideinheit mit 5 oder 6 C-Atomen steht, und
- i: eine beliebige Zahl zwischen 1 und 10 bedeutet.

In den Verbindungen der Formel (IV) steht R¹⁰ bevorzugt für einen in 2-Stellung methylverzweigten aliphatischen Rest mit 8 bis 22, vorzugsweise 12 bis 18 C-Atomen.

G steht vorzugsweise für Glucose.

Der Oligomerisierungsgrad i, der die Verteilung von Monoglykosiden und Oligoglykosiden angibt, liegt vorzugsweise in einem Bereich von 1,2 bis 1,4.

Eine weitere Klasse im Rahmen der vorliegenden Erfindung bevorzugt eingesetzter nichtionischer Tenside, die entweder als alleiniges nichtionisches Tensid oder in Kombination mit anderen nichtionischen Tensiden eingesetzt werden, sind alkoxylierte, vorzugsweise ethoxylierte oder ethoxylierte und propoxylierte Fettsäurealkylester, vorzugsweise mit 1 bis 4 Kohlenstoffatomen in der Alkylkette. Insbesondere bevorzugt sind Fettsäuremethylester, wie sie beispielsweise in der japanischen Patentanmeldung JP 58/217598 beschrieben sind oder die vorzugsweise nach dem in der internationalen Patentanmeldung WO 90/13533 beschriebenen Verfahren hergestellt werden.

Als nichtionische Tenside eignen sich weiterhin Aminoxide, beispielsweise N-Cocos-alkyl-N,N-dimethylaminoxid und N-Talgalkyl-N,N-dihydroxyethylaminoxid sowie Fettsäurealkanolamide. Diese nichtionischen Tenside werden vorzugsweise als Mischung mit alkoxilierten Alkoholen eingesetzt. Bevorzugt ist die Mischung mit ethoxilierten Fettalkoholen. Die Gewichtsmenge dieser nichtionischen Tenside beträgt vorzugsweise nicht mehr als die der ethoxilierten Fettalkohole, insbesondere nicht mehr als die Hälfte davon.

Weitere geeignete Tenside B) sind Polyhydroxyfettsäureamide der Formel (V) 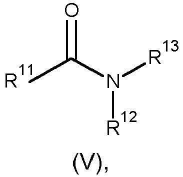 worin die Gruppe R¹¹-C(=O) für einen aliphatischen Acylrest mit 6 bis 22 Kohlenstoffatomen steht, R¹² für Wasserstoff, einen Alkylrest mit 1 bis 4 Kohlenstoffatomen oder einen Hydroxyalkylrest mit 1 bis 4 Kohlenstoffatomen steht und R¹³ für einen linearen oder verzweigten Polyhydroxyalkylrest mit 3 bis 10 Kohlenstoffatomen und 3 bis 10 Hydroxylgruppen steht. Bei den Polyhydroxyfettsäureamiden handelt es sich um bekannte Stoffe, die üblicherweise durch reduktive Aminierung eines reduzierenden Zuckers mit Ammoniak, einem Alkylamin oder einem Alkanolamin und nachfolgende Acylierung mit einer Fettsäure, einem Fettsäurealkylester oder einem Fettsäurechlorid erhalten werden können. Zur Gruppe der Polyhydroxyfettsäureamide gehören in diesem Zusammenhang auch Verbindungen der Formel (VI) 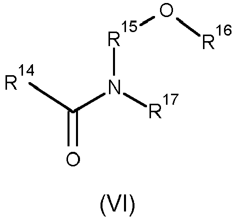 worin R¹⁴ für einen linearen oder verzweigten Alkyl- oder Alkenylrest mit 7 bis 12 Kohlenstoffatomen, R¹⁵ für einen linearen, verzweigten oder cyclischen Alkylenrest mit 2 bis 8 Kohlenstoffatomen oder einen Arylenrest mit 6 bis 8 Kohlenstoffatomen, und R¹⁶ für einen linearen, verzweigten oder cyclischen Alkylrest oder einen Arylrest oder einen Oxy-Alkylrest mit 1 bis 8 Kohlenstoffatomen steht, wobei C₁-C₄-Alkyl- oder Phenylreste bevorzugt sind, und R¹⁷ für einen linearen Polyhydroxyalkylrest steht, dessen Alkylkette mit mindestens zwei Hydroxylgruppen substituiert ist, oder alkoxylierte, vorzugsweise ethoxylierte oder propoxylierte Derivate dieses Restes. R¹⁷ wird vorzugsweise durch reduktive Aminierung eines Zuckers erhalten, beispielsweise Glucose, Fructose, Maltose, Lactose, Galactose, Mannose oder Xylose. Die N-Alkoxy- oder N-Aryloxy-substituierten Verbindungen können dann beispielweise gemäß WO 95/07331 durch Umsetzung mit Fettsäuremethylestern in Gegenwart eines Alkoxids als Katalysator in die gewünschten Polyhydroxyfettsäureamide überführt werden.

Geeignete Tenside B) sind auch anionische Tenside (Aniontenside). Typische Beispiele für anionische Tenside sind Seifen, Alkylsulfonate, Alkylbenzolsulfonate, Olefinsulfonate, Methylestersulfonate, Sulfofettsäuren, Alkylsulfate, Mono- und Dialkylsulfosuccinate, Mono- und Dialkylsulfosuccinamate, Sulfotriglyceride, Amidseifen, Ethercarbonsäuren und deren Salze, Fettsäureisethionate, Fettsäuresarcosinate, Fettsäuretauride, N-Acylaminosäuren, wie beispielsweise Acyllactylate, Acyltartrate, Acylglutamate und Acylaspartate, Alkyloligoglucosidsulfate, Alkylglucosecarboxylate, Proteinfettsäurekondensate und Alkyl(ether)phosphate.

Eine erste bevorzugte Ausführung sind anionische Tenside vom Typ der Sulfonate und Sulfate. Bevorzugte Tenside vom Sulfonat-Typ sind C₉-C₁₃-Alkylbenzolsulfonate, Olefinsulfonate, d. h. Gemische aus Alken- und Hydroxyalkansulfonaten, sowie Disulfonate, wie man sie beispielsweise aus C₁₂-C₁₈-Monoolefinen mit end- oder innenständiger Doppelbindung durch Sulfonieren mit gasförmigem Schwefeltrioxid und anschließende alkalische oder saure Hydrolyse der Sulfonierungsprodukte erhält. Geeignet sind auch Alkansulfonate, die aus C₁₂-C₁₈-Alkanen beispielsweise durch Sulfochlorierung oder Sulfoxidation mit anschließender Hydrolyse bzw. Neutralisation gewonnen werden. Ebenso sind auch die Ester von α-Sulfofettsäuren (Estersulfonate) geeignet, zum Beispiel die α-sulfonierten Methylester der hydrierten Kokos-, Palmkern- oder Talgfettsäuren. Weitere geeignete anionische Tenside sind sulfierte Fettsäureglycerinester. Unter Fettsäureglycerinestern sind unter anderem die Mono-, Di- und Triester sowie deren Gemische zu verstehen, wie sie bei der Herstellung durch Veresterung von einem Monoglycerin mit 1 bis 3 Mol Fettsäure oder bei der Umesterung von Triglyceriden mit 0,3 bis 2 Mol Glycerin erhalten werden. Bevorzugte sulfierte Fettsäureglycerinester sind dabei die Sulfierprodukte von gesättigten Fettsäuren mit 6 bis 22 Kohlenstoffatomen, beispielsweise der Capronsäure, Caprylsäure, Caprinsäure, Myristinsäure, Laurinsäure, Palmitinsäure, Stearinsäure oder Behensäure.

Bevorzugte Alk(en)ylsulfate sind die Alkali- und insbesondere die Natriumsalze der Schwefelsäurehalbester der C₁₂-C₁₈-Fettalkohole, beispielsweise aus Kokosfettalkohol, Talgfettalkohol, Lauryl-, Myristyl-, Cetyl- oder Stearylalkohol oder der C₁₀-C₂₀-Oxoalkohole und die Halbester sekundärer C₁₀-C₂₀-Alkohole. Weiterhin bevorzugt sind Alk(en)ylsulfate, welche einen synthetischen, auf petrochemischer Basis hergestellten geradkettigen C₁₀-C₂₀-Alkylrest enthalten. Diese besitzen ein analoges Abbauverhalten wie die adäquaten Verbindungen auf der Basis von fettchemischen Rohstoffen. Aus waschtechnischem Interesse sind die C₁₂-C₁₆-Alkylsulfate und C₁₂-C₁₅-Alkylsulfate sowie C₁₄-C₁₅-Alkylsulfate bevorzugt. Auch 2,3-Alkylsulfate, welche beispielsweise gemäß den US-Patentschriften 3,234,258 oder 5,075,041 hergestellt werden und als Handelsprodukte der Shell Oil Company unter dem Namen DAN® erhalten werden können, sind geeignete Aniontenside. Auch die Schwefelsäuremonoester der mit 1 bis 6 Mol Ethylenoxid ethoxylierten geradkettigen oder verzweigten C₇-C₂₁-Alkohole, wie 2-Methyl-verzweigte C₉-C₁₁-Alkohole mit im Durchschnitt 3,5 Mol Ethylenoxid (EO) oder C₁₂-C₁₈-Fettalkohole mit 1 bis 4 EO, sind unter anderem geeignet. Sie werden üblicherweise in Reinigungsmitteln aufgrund ihres hohen Schaumverhaltens nur in relativ geringen Mengen, beispielsweise in Mengen von 1 bis 5 Gew.-%, eingesetzt. Weitere geeignete Aniontenside sind im Rahmen der vorliegenden Erfindung auch die Salze der Alkylsulfobernsteinsäure, die auch als Sulfosuccinate oder als Sulfobernsteinsäureester bezeichnet werden und die Monoester und/oder Diester der Sulfobernsteinsäure mit Alkoholen, vorzugsweise Fettalkoholen und insbesondere ethoxylierten Fettalkoholen darstellen. Bevorzugte Sulfosuccinate enthalten C₈-C₁₈- Fettalkoholreste oder Mischungen aus diesen. Insbesondere bevorzugte Sulfosuccinate enthalten einen Fettalkoholrest, der sich von ethoxylierten Fettalkoholen ableitet. Dabei sind wiederum Sulfosuccinate, deren Fettalkohol-Reste sich von ethoxylierten Fettalkoholen mit enger Homologenverteilung ableiten, besonders bevorzugt. Ebenso ist es auch möglich, Alk(en)ylbernsteinsäure mit vorzugsweise 8 bis 18 Kohlenstoffatomen in der Alk(en)yl-kette oder deren Salze einzusetzen.

Insbesondere bevorzugte anionische Tenside sind Seifen. Geeignet sind gesättigte und ungesättigte Fettsäureseifen, wie die Salze der Laurinsäure, Myristinsäure, Palmitinsäure, Stearinsäure, (hydrierten) Erucasäure und Behensäure sowie insbesondere aus natürlichen Fettsäuren, zum Beispiel Kokos-, Palmkern-, Olivenöl- oder Talgfettsäuren, abgeleitete Seifengemische.

Die anionischen Tenside einschließlich der Seifen können in Form ihrer Natrium-, Kalium- oder Ammoniumsalze sowie als lösliche Salze organischer Basen, wie Mono-, Di- oder Triethanolamin, vorliegen. Vorzugsweise liegen die anionischen Tenside in Form ihrer Natrium- oder Kaliumsalze, insbesondere in Form der Natriumsalze vor.

Geeignete Tenside B) sind auch kationische Tenside. Besonders bevorzugte kationische Tenside sind:
- C₇-C₂₅-Alkylamine;
- N,N-Dimethyl-N-(hydroxy-C₇-C₂₅-alkyl)ammoniumsalze;
- mit Alkylierungsmitteln quaternisierte Mono- und Di-(C₇-C₂₅-alkyl)dimethylammoniumverbindungen;
- Esterquats, insbesondere quaternäre veresterte Mono-, Di- und Trialkanolamine, die mit C₈-C₂₂-Carbonsäuren verestert sind;
- Imidazolinquats, insbesondere 1-Alkylimidazoliniumsalze der Formeln VII oder VIII 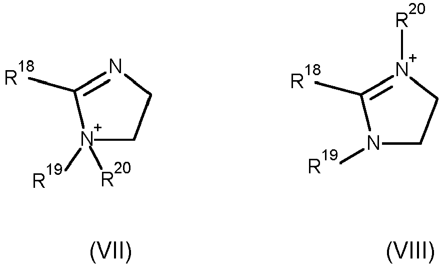 wobei die Variablen folgende Bedeutung haben:
   - R¹⁸: C₁-C₂₅-Alkyl oder C2-C25-Alkenyl,
   - R¹⁹: C₁-C₄-Alkyl oder Hydroxy-C₁-C₄-alkyl,
   - R²⁰: C₁-C₄-Alkyl, Hydroxy-C₁-C₄-alkyl oder ein Rest R²¹-(CO)-R²²-(CH₂)ᵣ-, wobei R²¹ für H oder C₁-C₄-Alkyl steht, R²¹ für -O- oder -NH- steht und r für 2 oder 3 steht,
   wobei mindestens ein Rest R¹⁸ ein C₇-C₂₂-Alkylrest ist.

Die Tenside B) können auch amphotere Tenside sein. Geeignete amphotere Tenside sind Alkylbetaine, Alkylamidobetaine, Alkylsulfobetaine, Aminopropionate, Aminoglycinate und amphotere Imidazoliumverbindungen. Beispielsweise können Cocodimethylsulfopropylbetain, Laurylbetain, Cocamidopropylbetain, Natriumcocamphopropionat oder Tetradecyldimethylaminoxid eingesetzt werden.

Der Gehalt an Tensiden in flüssigen und gelförmigen Wasch- und Reinigungsmittelzusammensetzungen beträgt vorzugsweise 2 bis 75 Gew.-% und insbesondere 5 bis 65 Gew.-%, jeweils bezogen auf die gesamte Zusammensetzung.

Der Gehalt an Tensiden in festen Wasch- und Reinigungsmittelzusammensetzungen beträgt vorzugsweise 2 bis 40 Gew.-% und insbesondere 5 bis 35 Gew.-%, jeweils bezogen auf die gesamte Zusammensetzung.

### Komponente C

Builder, die teilweise auch als Sequestrierungsmittel, Gerüststoff, Komplexbildner, Chelator, Chelatisierungsmittel oder Enthärter bezeichnet werden, binden Erdalkalimetalle und andere wasserlösliche Metallsalze, ohne zu präzipitieren. Sie helfen Schmutz aufzubrechen, dispergieren Schmutzteilen, helfen Schmutz abzulösen und haben teilweise eine eigene Waschwirkung.

Geeignete Builder können sowohl organischer als auch anorganischer Natur sein. Beispiele sind Alumosilikate, Carbonate, Phosphate und Polyphosphate, Polycarbonsäuren, Polycarboxylate, Hydroxycarbonsäuren, Phosphonsäuren, z. B. Hydroxyalkylphosphonsäuren, Phosphonate, Aminopolycarbonsäuren und deren Salze und polymere carbonsäuregruppenhaltige Verbindungen und deren Salze.

Geeignete anorganische Builder sind beispielsweise kristalline oder amorphe Alumosilikate mit ionenaustauschenden Eigenschaften, wie Zeolithe. Verschiedene Typen von Zeolithen sind geeignet, insbesondere Zeolithe A, X, B, P, MAP und HS in ihrer Na-Form oder in Formen, in denen Na teilweise gegen andere Kationen wie Li, K, Ca, Mg oder Ammonium ausgetauscht ist. Geeignete Zeolithe sind beispielsweise in der US-A-4604224 beschrieben. Als Builder geeignete kristalline Silikate sind beispielsweise Disilikate oder Schichtsilikate, z. B. 5-Na₂Si₂O₅ oder B-Na₂Si₂O₅ (SKS 6 bzw. SKS 7). Die Silikate können in Form ihrer Alkalimetall-, Erdalkalimetall- oder Ammoniumsalze eingesetzt werden, vorzugsweise als Na-, Li- und Mg-Silikate. Amorphe Silikate, wie beispielsweise Natriummetasilikat, welches eine polymere Struktur aufweist, oder amorphes Disilikat (Britesil® H 20 Hersteller: Akzo) sind ebenfalls verwendbar. Bevorzugt ist hierunter Natriumdisilikat.

Geeignete anorganische Buildersubstanzen auf Carbonat-Basis sind Carbonate und Hydrogencarbonate. Diese können in Form ihrer Alkalimetall-, Erdalkalimetall- oder Ammoniumsalze eingesetzt werden. Vorzugsweise werden Na-, Li- und Mg-Carbonate bzw. -Hydrogencarbonate, insbesondere Natriumcarbonat und/oder Natriumhydrogencarbonat, eingesetzt.

Übliche, als anorganische Builder eingesetzte Phosphate sind Alkalimetallorthophosphate und/oder -polyphosphate, wie z. B. Pentanatriumtriphosphat.

Geeignete organische Builder sind beispielsweise C₄-C₃₀-Di-, -Tri- und -Tetracarbonsäuren, wie z. B. Bernsteinsäure, Propantricarbonsäure, Butantetracarbonsäure, Cyclopentantetracarbonsäure und Alkyl- und Alkenylbernsteinsäuren mit C₂-C₂₀-Alkyl- bzw. -Alkenyl-Resten.

Geeignete organische Builder sind weiterhin Hydroxycarbonsäuren und Polyhydroxycarbonsäuren (Zuckersäuren). Dazu zählen C₄-C₂₀-Hydroxycarbonsäuren wie z. B. Äpfelsäure, Weinsäure, Gluconsäure, Schleimsäure, Milchsäure, Glutarsäure, Zitronensäure, Tartronsäure, Glucoheptonsäure, Lactobionsäure und Saccharosemono-, -di- und -tricarbonsäure. Bevorzugt sind hierunter Zitronensäure und ihre Salze.

Geeignete organische Builder sind weiterhin Phosphonsäuren, wie z. B. Hydroxyalkylphosphonsäuren, Aminophosphonsäuren und die Salze davon. Dazu zählen z. B. Phosphonobutantricarbonsäure, Aminotris-methylenphosphonsäure, Ethylendiamintetraethylenphosphonsäure, Hexamethylendiamintetramethylenphosphonsäure, Diethylentriamin-pentamethylenphosphonsäure, Morpholino-methandiphosphonsäure, 1-Hydroxy-C₁- bis C₁₀-alkyl-1,1-diphosphonsäuren wie 1-Hydroxyethan-1,1-diphosphonsäure. Bevorzugt ist hierunter 1-Hydroxyethan-1,1-diphosphonsäure und deren Salze.

Geeignete organische Builder sind weiterhin Aminopolycarbonsäuren, wie Nitrilotriessigsäure (NTA), Nitrilomonoessigdipropionsäure, Nitrilotripropionsäure, β-Alanindiessigsäure (β-ADA), Ethylendiamintetraessigsäure (EDTA), Diethylentriaminpentaessigsäure, 1,3-Propylendiamintetraessigsäure, 1,2-Propylendiamintetraessigsäure, N-(Alkyl)-ethylendiamintriessigsäure, N-(Hydroxyalkyl)-ethylendiamintriessigsäure, Ethylendiamintriessigsäure, Cyclohexylen-1,2-diamintetraessigsäure, Iminodibernsteinsäure, Hydroxyiminodibernsteinsäure, Ethylendiamindibernsteinsäure, Serindiessigsäure, Isoserindiessigsäure, L-Asparagindiessigsäure, L-Glutamindiessigsäure, Methylglycindiessigsäure (MGDA) und die Salze der zuvor genannten Aminopolycarbonsäuren, speziell die Na- und K-Salze. Bevorzugt sind Methylglycindiessigsäure, die Na- und K-Salze der Methylglycindiessigsäure, Glutamindiessigsäure und die Na- und K-Salze der Glutamindiessigsäure. Die Salze der Methylglycindiessigsäure können als Racemat vorliegen, d. h. D- und L-Enantiomere liegen in äquimolarer Mischung vor, oder ein Enantiomer, z. B. das L-Enantiomer, kann im Überschuss vorliegen.

Geeignete organische Builder sind weiterhin polymere carbonsäuregruppenhaltige Verbindungen, wie Acrylsäure-Homopolymere. Diese weisen vorzugsweise ein zahlenmittleres Molekulargewicht im Bereich von 800 bis 70000 g/mol, besonders bevorzugt von 900 bis 50000 g/mol, insbesondere von 1000 bis 20000 g/mol, speziell 1000 bis 10000 g/mol, auf. Der Begriff Acrylsäure-Homopolymer umfasst dabei auch Polymere, in denen die Carbonsäuregruppen teilweise oder vollständig neutralisiert vorliegen. Dazu zählen Acrylsäure-Homopolymere, in denen die Carbonsäuregruppen teilweise oder vollständig in Form von Alkalimetallsalzen oder Ammoniumsalzen vorliegen. Bevorzugt sind Acrylsäure-Homopolymere, in denen die Carbonsäuregruppen protoniert sind oder in denen die Carbonsäuregruppen teilweise oder vollständig in Form von Natriumsalzen vorliegen.

Geeignete polymere carbonsäuregruppenhaltige Verbindungen sind auch Oligomaleinsäuren, wie sie beispielsweise in EP-A 451 508 und EP-A 396 303 beschrieben sind.

Geeignete polymere carbonsäuregruppenhaltige Verbindungen sind auch Terpolymere ungesättigter C₄-C₈-Dicarbonsäuren, wobei als Comonomere monoethylenisch ungesättigte Monomere aus der unten angegebenen Gruppe (i) in Mengen von bis zu 95 Gew.-%, aus der Gruppe (ii) in Mengen von bis zu 60 Gew.-% und aus der Gruppe (iii) in Mengen von bis zu 20 Gew.-% einpolymerisiert sein können. Als ungesättigte C₄-C₈-Dicarbonsäuren sind hierbei beispielsweise Maleinsäure, Fumarsäure, Itaconsäure und Citraconsäure geeignet. Bevorzugt wird Maleinsäure. Die Gruppe (i) umfasst monoethylenisch ungesättigte C₃-C₈-Monocarbonsäuren, wie z. B. Acrylsäure, Methacrylsäure, Crotonsäure und Vinylessigsäure. Bevorzugt werden aus der Gruppe (i) Acrylsäure und Methacrylsäure eingesetzt. Die Gruppe (ii) umfasst monoethylenisch ungesättigte C₂-C₂₂-Olefine, Vinylalkylether mit C₁-C₈-Alkylgruppen, Styrol, Vinylester von C₁-C₈-Carbonsäuren, (Meth)acrylamid und Vinylpyrrolidon. Bevorzugt werden aus der Gruppe (ii) C₂-C₆-Olefine, Vinylalkylether mit C₁-C₄-Alkylgruppen, Vinylacetat und Vinylpropionat eingesetzt. Falls die Polymeren der Gruppe (ii) Vinylester einpolymerisiert enthalten, können diese auch teilweise oder vollständig zu Vinylalkohol-Struktureinheiten hydrolysiert vorliegen. Geeignete Co- und Terpolymere sind beispielsweise aus US-A 3887806 sowie DE-A 4313909 bekannt. Die Gruppe (iii) umfasst (Meth)acrylester von C₁-C₈-Alkoholen, (Meth)acrylnitril, (Meth)acrylamide von C₁-C₈-Aminen, N-Vinylformamid und N-Vinylimidazol.

Geeignete polymere carbonsäuregruppenhaltige Verbindungen sind auch Homopolymere der monoethylenisch ungesättigten C₃-C₈-Monocarbonsäuren, wie z. B. Acrylsäure, Methacrylsäure, Crotonsäure und Vinylessigsäure, insbesondere der Acrylsäure und Methacrylsäure, Copolymere von Dicarbonsäuren, wie z. B. Copolymere von Maleinsäure oder Itaconsäure und Acrylsäure im Gewichtsverhältnis 10 : 90 bis 95 : 5, besonders bevorzugt solche im Gewichtsverhältnis 30 : 70 bis 90 : 10 mit Molmassen von 1000 bis 150000; Terpolymere aus Maleinsäure, Acrylsäure und einem Vinylester einer C₁-C₃- Carbonsäure im Gewichtsverhältnis 10 (Maleinsäure) :90 (Acrylsäure + Vinylester) bis 95 (Maleinsäure) :10 (Acrylsäure + Vinylester), wobei das Gew.-Verhältnis von Acrylsäure zum Vinylester im Bereich von 30 : 70 bis 70 : 30 variieren kann; Copolymere von Maleinsäure mit C₂-C₈-Olefinen im Molverhältnis 40 : 60 bis 80 : 20, wobei Copolymere von Maleinsäure mit Ethylen, Propylen, Isobuten oder Styrol im Molverhältnis 50 : 50 besonders bevorzugt sind.

Geeignete polymere carbonsäuregruppenhaltige Verbindungen sind weiterhin Copolymere von 50 bis 98 Gew.-% ethylenisch ungesättigter schwacher Carbonsäuren mit 2 bis 50 Gew.-% ethylenisch ungesättigter Sulfonsäuren, wie sie beispielsweise in der EP-A-0877002 beschrieben sind. Geeignete schwache ethylenisch ungesättigte Carbonsäuren sind insbesondere C₃-C₆-Monocarbonsäuren, wie Acrylsäure und Methacrylsäure. Geeignete ethylenisch ungesättigte Sulfonsäuren sind 2-Acetylamidomethyl-1-propansulfonsäure, 2-Methacrylsäureamido-2-methyl-1-propansulfonsäure, 2-Methacrylamido-2-hydroxypropansulfonsäure, Allylsulfonsäure, Methallylsulfonsäure, Allyloxybenzolsulfonsäure, Methallyloxybenzolsulfonsäure, 2-Hydroxy-3-(2-propenyloxy)propansulfonsäure, 2-Methyl-2-propen-1-sulfonsäure, Styrolsulfonsäure, Vinylsulfonsäure, 3-Sulfopropylacrylat, 3-Sulfopropylmethacrylat, Sulfomethylacrylamid, Sulfomethylmethacrylamid und Salze dieser Säuren. Die Copolymere können weiterhin 0 bis 30 Gew.-% ethylenisch ungesättigter C₄-C₈-Dicarbonsäuren, wie Maleinsäure, sowie 0 bis 30 Gew.-% wenigstens eines Monomers, das mit den zuvor genannten Monomeren copolymerisierbar ist, einpolymerisiert enthalten. Bei Letzterem handelt es sich beispielsweise um C₁-C₄-Alkylester von (Meth)Acrylsäure, C₁-C₄-Hydroxyalkylester von (Meth)Acrylsäure, Acrylamid, Alkyl-substituiertes Acrylamid, N,N-Dialkyl-substituiertes Acrylamid, Vinylphosphonsäure, Vinylacetat, Allylalkohole, sulfonierte Allylalkohole, Styrol und andere Vinylaromaten, Acrylonitril, N-Vinylpyrrolidon, N-Vinylformamid, N-Vinylimidazol oder N-Vinylpyridin. Das gewichtsmittlere Molekulargewicht dieser Copolymere liegt im Bereich von 3000 bis 50000 Dalton. Besonders geeignet sind Copolymere mit etwa 77 Gew.-% wenigstens einer ethylenisch ungesättigten C₃-C₆-Monocarbonsäure und etwa 23 Gew.-% wenigstens einer ethylenisch ungesättigten Sulfonsäure.

Pfropfpolymere ungesättigter Carbonsäuren auf niedermolekulare Kohlenhydrate oder hydrierte Kohlenhydrate, vgl. US-A 5227446, DE-A 4415623 und DE-A 4313909, eignen sich ebenfalls. Geeignete ungesättigte Carbonsäuren sind hierbei beispielsweise Maleinsäure, Fumarsäure, Itaconsäure, Citraconsäure, Acrylsäure, Methacrylsäure, Crotonsäure und Vinylessigsäure sowie Mischungen aus Acrylsäure und Maleinsäure, die in Mengen von 40 bis 95 Gew.-%, bezogen auf die zu pfropfende Komponente, aufgepfropft werden. Zur Modifizierung können zusätzlich bis zu 30 Gew.-%, bezogen auf die zu pfropfende Komponente, weitere monoethylenisch ungesättigte Monomere einpolymerisiert vorliegen. Geeignete modifizierende Monomere sind die oben genannten Monomere der Gruppen (ii) und (iii). Als Pfropfgrundlage sind abgebaute Polysaccharide, wie z. B. sauer oder enzymatisch abgebaute Stärken, Inuline oder Zellulose, Eiweisshydrolysate und reduzierte (hydrierte oder hydrierend aminierte) abgebaute Polysaccharide, wie z. B. Mannit, Sorbit, Aminosorbit und N-Alkylglucamin, geeignet sowie auch Polyalkylenglykole mit Molmassen mit bis zu M_{w} = 5000 wie z. B. Polyethylenglykole, Ethylenoxid/Propylenoxidbzw. Ethylenoxid/Butylenoxid bzw. Ethylenoxid/- Propylenoxid/Butylenoxid-Blockcopolymere und alkoxylierte ein- oder mehrwertige C₁-C₂₂-Alkohole.(vgl. US-A-5756456).

Ebenfalls geeignet sind Polyglyoxylsäuren, wie sie beispielsweise in EP-B-001004, US-A-5399286, DE-A-4106355 und EP-A-656914 beschrieben sind. Die Endgruppen der Polyglyoxylsäuren können unterschiedliche Strukturen aufweisen.

Weiterhin sind Polyamidocarbonsäuren und modifizierte Polyamidocarbonsäuren geeignet; diese sind beispielsweise aus EP-A-454126, EP-B-511037, WO-A94/01486 und EP-A-581452 bekannt.

Auch Polyasparaginsäuren und ihre Alkalisalze oder Cokondensate der Asparaginsäure mit weiteren Aminosäuren, z. B. mit Glycin, Glutaminsäure oder Lysin, C₄-C₂₅-Mono- oder -Dicarbonsäuren und/oder C₄-C₂₅-Mono- oder -Diaminen können als polymere carbonsäuregruppenhaltige Verbindungen eingesetzt werden.

Unter den polymeren carbonsäuregruppenhaltigen Verbindungen sind Polyacrylsäuren auch in teilweise oder vollständig neutralisierter Form, bevorzugt.

Als organische Builder eignen sich weiterhin Iminodibernsteinsäure, Oxydibernsteinsäure, Aminopolycarboxylate, Alkylpolyaminocarboxylate, Aminopolyalkylenphosphonate, Polyglutamate, hydrophob modifizierte Citronensäure, wie z. B. Agaricinsäure, Poly-[alpha]-hydroxyacrylsäure, N-Acylethylendiamintriacetate wie Lauroylethylendiamintriacetat und Alkylamide der Ethylendiamintetraessigsäure wie EDTA-Talgamid.

Weiterhin können auch oxidierte Stärken als organische Builder verwendet werden.

### Komponente D)

Die Bleichsysteme D) enthalten wenigstens ein Bleichmittel und gegebenenfalls wenigstens eine weitere Komponente, ausgewählt unter Bleichaktivatoren, Bleichkatalysatoren und Bleichstabilisatoren.

Geeignete Bleichmittel sind beispielsweise Percarbonsäuren, z. B. Diper-oxododecandicarbonsäure, Phthalimidopercapronsäure oder Monoperoxophthalsäure der -terephthalsäure, Salze der Percarbonsäuren, z. B. Natriumpercarbonat, Addukte von Wasserstoffperoxid an anorganische Salze, z. B. Natriumperborat-Monohydrat, Natriumperborat-Tetrahydrat, Natriumcarbonat-Perhydrat oder Natriumphosphat-Perhydrat, Addukte von Wasserstoffperoxid an organische Verbindungen, z. B. Harnstoff-Perhydrat, oder von anorganischen Peroxosalzen, z. B. Alkalimetallpersulfaten, oder -peroxodisulfaten.

Als Bleichaktivatoren eignen sich beispielsweise polyacylierte Zucker, z. B. Pentaacetylglucose; Acyloxybenzolsulfonsäuren und deren Alkali- und Erdalkaiimetallsalze, z. B. Natrium-p-nonanoyloxybenzolsulfonat oder Natrium-p-benzoyloxybenzolsulfonat; - N,N-diacylierte und N,N,N',N'-tetraacylierte Amine, z. B. N,N,N',N'-Tetraacetylmethylendiamin und -ethylendiamin (TAED), N,N-Diacetylanilin, N,N-Diacetyl-ptoluidin oder 1,3-diacylierte Hydantoine wie 1,3-Diacetyl-5,5-dimethylhydantoin; N-Alkyl-N-sulfonylcarbonamide, z. B. N-Methyl-N-mesylacetamid oder N-MethylN-mesylbenzamid; N-acylierte cyclische Hydrazide, acylierte Triazole oder Urazole, z. B. Monoacetylmaleinsäurehydrazid; O,N,N-trisubstituierte Hydroxylamine, z. B. O-Benzoyl-N,N-succinylhydroxylamin, O-Acetyl-N,N-succinylhydroxylamin oder O,N,N-Triacetylhydroxylamin; N,N'-Diacylsulfurylamide, z. B. N,N'-Dimethyl-N,N'-diacetylsulfurylamid oder N,N'-Diethyl-N,N'-dipropionylsulfurylamid; acylierte Lactame wie beispielsweise Acetylcaprolactam, Octanoylcaprolactam, Benzoylcaprolactam oder Carbonylbiscaprolactam; Anthranilderivate wie z. B. 2-Methylanthranil oder 2-Phenylanthranil; Triacylcyanurate, z. B. Triacetylcyanurat oder Tribenzoylcyanurat; Oximester und Bisoximester, wie z. B. O-Acetylacetonoxim oder Bisisopropyliminocarbonat; Carbonsäureanhydride, z. B. Essigsäureanhydrid, Benzoesäureanhydrid, m-Chlorbenzoesäureanhydrid oder Phthalsäureanhydrid; Enolester, wie z. B. Isopropenylacetat; 1,3-Diacyl-4,5-diacyloxy-imidazoline, z. B. 1,3-Diacetyl-4,5-diacetoxyimidazolin; Tetraacetylglycoluril und Tetrapropionylglycoluril; diacylierte 2,5-Diketopiperazine, z. B. 1,4-Diacetyl-2,5-diketopiperazin; ammoniumsubstituierte Nitrile, wie z. B. N-Methylmorpholiniumacetonitrilmethylsulfat; Acylierungsprodukte von Propylendiharnstoff und 2,2-Dimethylpropylendiharnstoff, z. B. Tetraacetylpropylendiharnstoff; α-Acyloxypolyacylmalonamide, z. B. α-Acetoxy-N,N'-diacetylmalonamid; Diacyl-dioxohexahydro-1,3,5-triazine, z. B. 1,5-Diacetyl-2,4-dioxohexahydro1,3,5-triazin; Benz-(4H)1,3-oxazin-4-one mit Alkylresten, z. B. Methyl, oder aromatischen Resten, z. B. Phenyl, in der 2-Position.

Ein Bleichsystem aus Bleichmitteln und Bleichaktivatoren kann gegebenenfalls noch Bleichkatalysatoren enthalten. Geeignete Bleichkatalysatoren sind beispielsweise quaternierte Imine und Sulfonimine, die beispielsweise in US-A 5 360 569 und EP-A 453 003 beschrieben sind. Besonders wirksame Bleichkatalysatoren sind Mangankomplexe, die beispielsweise in der WO-A 94/21777 beschrieben sind. Solche Verbindungen werden im Falle ihres Einsatzes in den Wasch- und Reinigungsmitteln höchstens in Mengen bis 1,5 Gew.-%, insbesondere bis 0,5 Gew.-%, im Falle von sehr aktiven Mangankomplexen in Mengen bis zu 0,1 Gew.-%, eingearbeitet. Neben dem beschriebenen Bleichsystem aus Bleichmitteln, Bleichaktivatoren und gegebenenfalls Bleichkatalysatoren ist für die erfindungsgemäßen Wasch- und Reinigungsmittel auch die Verwendung von Systemen mit enzymatischer Peroxidfreisetzung oder von photoaktivierten Bleichsystemen möglich.

### Komponente E)

Geeignete Enzyme (= Komponente E1) sind solche, wie sie üblicherweise als industrielle Enzyme eingesetzt werden. Dazu zählen sowohl Enzyme mit optimaler Aktivität im neutralen bis alkalischen pH-Bereich als auch Enzyme mit optimaler Aktivität im sauren pH-Bereich.

Die Enzyme sind vorzugsweise ausgewählt unter Aminopeptidasen, Amylasen, Arabinasen, Carbohydrasen, Carboxypeptidasen, Catalasen, Cellulasen, Chitinasen, Cutinasen, Cyclodextringlycosyltransferasen, Deoxyribonucleasen, Esterasen, Galactanasen, Alpha-Galactosidasen, Beta-Galactosidasen, Glucanasen, Glucoamylasen, Alpha-Glucosidasen, Beta-Glucosidasen, Haloperoxidasen, Hydrolaseinvertasen, Isomerasen, Keratinasen, Laccasen, Lipasen, Mannanasen, Mannosidasen, Oxidasen, pectinolytischen Enzymen, Peptidoglutaminasen, Peroxidasen, Peroxygenasen, Phytasen, Polyphenoloxidasen, proteolytischen Enzymen, Ribonucleasen, Transglutaminasen, Transferasen, Xylanasen und Mischungen davon.

Die Enzyme sind speziell ausgewählt unter Hydrolasen, wie Proteasen, Esterasen, Glucosidasen, Lipasen, Amylasen, Cellulasen, Mannanasen, anderen Glykosylhydrolasen und Gemischen der zuvor genannten Enzyme. Alle diese Hydrolasen tragen zur Schmutzauflösung und -entfernung von protein-, fett- oder stärkehaltigen Verschmutzungen bei. Zur Bleiche können auch Oxireduktasen eingesetzt werden. Besonders gut geeignet sind aus Bakterienstämmen oder Pilzen wie Bacillus subtilis, Bacillus licheniformis, Streptomyceus griseus und Humicola insolens gewonnene enzymatische Wirkstoffe.

Bevorzugte Enzyme werden im Folgenden genauer beschrieben:

### Proteasen:

Geeignete proteolytische Enzyme (Proteasen) können grundsätzlich tierischen, pflanzlichen oder mikrobiellen Ursprungs sein. Bevorzugt sind proteolytische Enzyme mikrobiellen Ursprungs. Dazu zählen auch chemisch oder genetisch modifizierte Mutanten.

### Lipasen:

Geeignete Lipasen können grundsätzlich von Bakterien oder Pilzen stammen. Dazu zählen auch chemisch oder genetisch modifizierte Mutanten.

### Amylasen:

Grundsätzlich sind alle α- und/oder β-Amylasen geeignet. Geeignete Amylasen können grundsätzlich von Bakterien oder Pilzen stammen. Dazu zählen auch chemisch oder genetisch modifizierte Mutanten.

### Cellulasen:

Grundsätzlich sind alle Cellulasen geeignet. Geeignete Cellulasen können grundsätzlich von Bakterien oder Pilzen stammen. Dazu zählen auch chemisch oder genetisch modifizierte Mutanten.

### Peroxidasen/Oxidasen:

Geeignete Peroxidasen/Oxidasen können grundsätzlich von Pflanzen, Bakterien oder Pilzen stammen. Dazu zählen auch chemisch oder genetisch modifizierte Mutanten.

### Lyasen:

Grundsätzlich sind alle Lyasen geeignet. Geeignete Lyasen können grundsätzlich von Bakterien oder Pilzen stammen. Dazu zählen auch chemisch oder genetisch modifizierte Mutanten.

Erfindungsgemäße Mittel können weitere Enzyme enthalten, die unter dem Begriff Hemicellulasen zusammengefasst werden. Hierzu gehören beispielsweise Mannanasen, Xanthanlyasen, Pektinylasen (= Pektinasen), Pektinesterasen, Xyloglucanasen (=Xylanasen), Pullulanasen und β-Glucanasen.

Vorzugsweise enthält das erfindungsgemäße Wasch- oder Reinigungsmittel wenigstens ein Enzym, das ausgewählt ist unter Proteasen, Amylasen, Mannanasen, Cellulasen, Lipasen, Pektinlyasen und Mischungen davon.

Vorzugsweise enthält das erfindungsgemäße Wasch- oder Reinigungsmittel wenigstens eine Protease und/oder Amylase.

Vorzugsweise enthält das erfindungsgemäße Wasch-, Reinigungs- und Geschirrspülmittel eine Enzymmischung. Bevorzugt sind beispielsweise Enzymmischungen, die folgende Enzyme enthalten oder aus ihnen bestehen:
- Protease und Amylase,
- Protease und Lipase (bzw. lipolytisch wirkenden Enzymen),
- Protease und Cellulase,
- Amylase, Cellulase und Lipase (bzw. lipolytisch wirkenden Enzymen),
- Protease, Amylase und Lipase (bzw. lipolytisch wirkenden Enzymen),
- Protease, Lipase (bzw. lipolytisch wirkenden Enzymen) und Cellulase.

Die Enzyme können an Trägerstoffe adsorbiert sein, um sie gegen vorzeitige Zersetzung zu schützen.

Gegebenenfalls kann das erfindungsgemäße Wasch- oder Reinigungsmittel noch Enzymstabilisatoren enthalten. Dazu zählen z. B. Calciumpropionat, Natriumformiat, Borsäuren, Boronsäuren und deren Salze, wie 4-Formylphenylboronsäure, Peptide und Peptidderivate, wie z. B. Peptidaldehyde, Polyole, wie 1,2-Propandiol, und Mischungen davon.

Die erfindungsgemäßen Wasch- oder Reinigungsmittel enthalten die Enzyme vorzugsweise in einer Menge von 0,1 bis 5 Gew.-%, besonders bevorzugt 0,12 bis 2,5 Gew.-%, bezogen auf das Gesamtgewicht der Wasch- oder Reinigungsmittel.

Um flüssigen und speziell wässrigen Zusammensetzungen die erwünschte Viskosität zu verleihen, kann zusätzlich als Komponente E) wenigstens ein Verdicker (= Komponente E2) eingesetzt werden.

Geeignet sind grundsätzlich jedwede bekannten Verdicker (Rheologiemodifizierungsmittel), sofern sie keinen negativen Einfluss auf die Wirkung des Wasch- und Reinigungsmittels ausüben. Geeignete Verdicker können sowohl natürlichen Ursprungs als auch synthetischer Natur sein.

Beispiele für Verdicker natürlichen Ursprungs sind Xanthan, Johannisbrotkernmehl, Guarmehl, Carrageen, Agar, Tragant, Gummi arabicum, Alginate, modifizierte Stärken, wie Hydroxyethylstärke, Stärkephosphatester oder Stärkeacetate, Dextrine, Pektine und Cellulosederivate, wie Carboxymethylcellulose, Hydroxyethylcellulose, Hydroxypropylcellulose, Hydroxypropylmethylcellulose, Methylcellulose und dergleichen.

Verdicker natürlichen Ursprungs sind auch anorganische Verdicker, wie Polykieselsäuren und Tonmineralien, z. B. Schichtsilikate, wie auch die bei den Buildern genannten Silikate.

Beispiele für synthetische Verdicker sind Polyacryl- und Polymethacrylverbindungen, wie (teil)vernetzte Homopolymere der Acrylsäure, beispielsweise mit einem Allylether von Saccharose oder Pentaerythrit oder mit Propylen vernetzte Homopolymere der Acrylsäure (Carbomer), z. B. die Carbopol®-Marken von BF Goodridge (z. B. Carbopol® 676, 940, 941, 934 und dgl.) oder die Polygel®-Marken von 3V Sigma (z. B. Polygel® DA), Copolymere ethylenisch ungesättigter Mono- oder Dicarbonsäuren, beispielsweise Terpolymere von Acrylsäure, Methacrylsäure oder Maleinsäure mit Methyl- oder Ethylacrylat und einem (Meth)Acrylat, das sich von langkettigen ethoxylierten Alkoholen ableitet, beispielsweise die Acusol®-Marken von Rohm & Haas (z. B. Acusol® 820 oder 1206A), Copolymere von zwei oder mehr Monomeren, die ausgewählt sind unter Acrylsäure, Methacrylsäure und ihren C₁-C₄-Alkylestern, z. B. Copolymere von Methacrylsäure, Butylacrylat und Methylmethacrylat oder von Butylacrylat und Methylmethacrylat, z. B. die Aculyn®- und Acusol®-Marken von Rohm & Haas (z. B. Aculyn® 22, 28 oder 33 und Acusol® 810, 823 und 830), oder vernetzte hochmolekulare Acrylsäurecopolymere, beispielsweise mit einem Allylether von Saccharose oder Pentaerythrit vernetzte Copolymere von C₁₀-C₃₀-Alkylacrylaten mit einem oder mehreren Comonomeren, die ausgewählt sind unter Acrylsäure, Methacrylsäure und ihren C₁-C₄-Alkylestern (z. B. Carbopol® ETD 2623, Carbopol® 1382 oder Carbopol® AQUA 30 von Rohm & Haas).

Beispiele für synthetische Verdicker sind weiterhin Umsetzungsprodukte von Maleinsäurepolymeren mit ethoxylierten langkettigen Alkoholen, z. B. die Surfonic L-Serie von Texaco Chemical Co. oder Gantrez AN-119 von ISP; Polyethylenglykole, Polyamide, Polyimine und Polycarbonsäuren.

Geeignet sind auch Gemische der o. g. Verdicker.

Bevorzugte Verdicker sind Xanthane und die oben genannten Polyacryl- und Polymethacrylverbindungen.

Geeignete organische Lösungsmittel (= Komponente E3) sind ausgewählt unter ein- oder mehrwertigen Alkoholen, Alkanolaminen oder Glykolethern. Vorzugsweise sind sie ausgewählt unter Ethanol, n- oder i-Propanol, Butanolen, Glykol, Propan- oder Butandiol, Glycerin, Diglykol, Propyl- oder Butyldiglykol, Hexylenglycol, Ethylenglykolmethylether, Ethylenglykolethylether, Ethylenglykolpropylether, Ethylenglykolmono-n-butylether, Diethylenglykol-methylether, Diethylenglykolethylether, Propylenglykolmethyl-, -ethyl- oder -propylether, Dipropylenglykolmonomethyl- oder - ethylether, Di-isopropylenglykolmonomethyl- oder -ethylether, Methoxy-, Ethoxy- oder Butoxytriglykol, i-Butoxyethoxy-2-propanol, 3-Methyl-3-methoxybutanol, Propylen-glykol-t-butylether sowie Mischungen dieser Lösemittel.

Als Schauminhibitoren oder Entschäumer (= Komponente E4) kommen die zuvor genannten Verbindungen in Betracht. Geeignet sind beispielsweise Seifen, Paraffine oder Silikonöle in Betracht, die gegebenenfalls auf Trägermaterialien aufgebracht sein können.

Geeignete Basen (= Komponente E5) sind Alkalimetallhydroxide, Erdalkalimetallhydroxide, Alkalimetallcarbonate, Erdalkalimetallcarbonate, Ammoniumcarbonat Alkalimetallhydrogencarbonate, Erdalkalimetallhydrogencarbonate, Ammoniumhydrogencarbonat und Mischungen davon. Vorzugsweise werden Na-, Li- und Mg-Carbonate bzw. -Hydrogencarbonate, insbesondere Natriumcarbonat und/oder Natriumhydrogencarbonat, eingesetzt.

Zusätzlich können die erfindungsgemäßen Wasch-, Reinigungs- oder Geschirrspülmittel weitere Zusatzstoffe E6) enthalten, die die anwendungstechnischen und/oder ästhetischen Eigenschaften weiter verbessern. In der Regel enthalten bevorzugte Mittel zusätzlich zu den zuvor genannten Komponenten wenigstens einen weiteren Zusatzstoff, der ausgewählt ist unter Elektrolyten, pH-Stellmitteln, Parfümträgern, Fluoreszenzmitteln, Hydrotropen, Antiredepositionsmitteln, optischen Aufhellern, Vergrauungsinhibitoren, Waschkraftverstärker, Einlaufverhinderern, Knitterschutzmitteln, Farbübertragungsinhibitoren, antimikrobiellen Wirkstoffen, Antioxidantien, Korrosionsinhibitoren, Antistatika, Bügelhilfsmitteln, Phobier- und Imprägniermitteln, Quell- und Schiebefestmitteln sowie UV-Absorbern.

Als Farbübertragungsinhibitoren eignen sich insbesondere Homo- oder Copolymere, die wenigstens ein Monomer einpolymerisiert enthalten, das ausgewählt ist unter N-Vinylpyrrolidon, N-Vinylcaprolactam, N-Vinylimidazol, 2-Vinylpyridin, 4-Vinylpyridin, Salzen der drei letztgenannten Monomere, 4-Vinylpyridin-N-oxid, N-carboxymethyl-4-vinylpyridiniumhalogeniden und Mischungen davon.

Als Vergrauungsinhibitor und/oder Waschkraftverstärker eignen sich insbesondere:
- Carboxymethylcellulose,
- Pfropfpolymere von Vinylacetat auf Kohlenhydrate, z. B. auf abgebaute Stärke,
- Pfropfpolymere von Vinylacetat auf Polyethylenglykol,
- Alkoxylierte Oligo- und Polyamine, z. B. ethoxyliertes Hexamethylendiamin, das zusätzlich noch in quaternierter und/oder sulfatierter Form vorliegen kann, oder alkoxyliertes Polyethylenimin mit 16 bis 24 EO pro NH,
- Copolymere auf Basis von Styrol und Maleinsäure, die zusätzlich noch mit endgruppenverschlossenem Polyethylenglykol modifiziert sein können,
- Copolymere auf Basis von Styrol und Acrylsäure.

Um den ästhetischen Eindruck der erfindungsgemäßen Wasch-, Reinigungs- oder Geschirrspülmittel zu verbessern, können sie mit geeigneten Farbstoffen eingefärbt werden. Bevorzugte Farbstoffe, deren Auswahl dem Fachmann keinerlei Schwierigkeit bereitet, besitzen eine hohe Lagerstabilität und Unempfindlichkeit gegenüber den übrigen Inhaltsstoffen der Mittel und gegen Licht sowie keine ausgeprägte Substantivität gegenüber Textilfasern, um diese nicht anzufärben.

### I & I-Reiniger

Die erfindungsgemäßen wasch- und reinigungsaktiven Polymerfolien eignen sich auch für industrielle und institutionelle Reiniger (I & I-Reiniger). (Industrielle und institutionelle Reiniger sind typischerweise Waschmittel, Allzweckreiniger, Schaumreiniger, CIP-Reiniger (cleaning in place-Reiniger) für professionelle und in der Regel automatisierte Reinigungsvorgänge, z. B. in Großwäschereien, Molkereien, Brauereien, der Nahrungsmittel- oder Getränkeindustrie, der Pharmaindustrie bzw. der Galenik oder Sanitärreiniger.

Die Reiniger können stark basisch mit hohem Elektrolytgehalt sein und bei Bedarf Bleichmittel (wie Wasserstoffperoxid, Natriumhypochlorit) oder Desinfektionsmittel sowie Entschäumer enthalten (z. B. in der Flaschenreinigung). Auch die gängigen zuvor genannten Enzyme können in den industriellen und institutionellen Reinigern enthalten sein. Hinsichtlich der Reinigungsarten, für die sich die erfindungsgemäßen Formulierungen eignen, herrscht große Vielfalt. Beispielhaft seien Reinigungsbäder (stationär oder bewegt), Sprühreinigung, Ultraschall-, Dampfstrahl- und Hochdruckreinigung erwähnt, gegebenenfalls in Kombination mit mechanischer Reinigung, z. B. durch rotierende Bürsten.

Die genannten Formulierungen für die Reinigung schließen solche für die Industrie, das Verkehrswesen, Handel und Gewerbe und für den privaten Sektor ein. Im Einzelnen seien beispielhaft genannt: Professionelle Wäschereien, professionelles Reinigungsgewerbe, erzaufbereitende Industrie, Metall- und metallverarbeitende Industrie, Automobil- und Automobilzulieferindustrie, Elektroindustrie, Elektronikindustrie, Photoindustrie und -gewerbe, Freizeitindustrie und -gewerbe, Baustoffindustrie, Brauindustrie und -gewerbe; Nahrungsmittelindustrie (z. B. Verarbeitung oder Herstellung von Fleisch-, Geflügel-Milch- Fischprodukten) Tiernahrungsmittelindustrie, Kosmetika-Industrie, Pharmaindustrie, Agroindustrie, Gastronomie, Gesundheitswesen, Handwerksbetriebe, und öffentliches Verkehrswesen. Beispiele für zu reinigende Objekte sind Anstaltswäsche, Klinikwäsche, Wäsche aus Wäschereiannahmen, Gebäude mit Wohn-, Büro- oder Geschäftsräumen der verschiedensten Art sowie Sanitärräumen, Lagerhäuser, Brauereien, Einzelhandelsgeschäfte, wie Bäckereien, Metzgereien und Supermärkte; Krankenhäuser, Pflegeheime, Altersheime, Verwaltungsgebäude, Fabrikgebäude, Arztpraxen; weiterhin Kraftfahrzeuge (PKW und LKW), Autobusse, Straßentankfahrzeuge (innen und außen), Eisenbahnkesselwagen, Personen- und Güterwagen sowie Luftfahrzeuge und Schiffe; ferner Gebäudefassaden, gekachelte oder gestrichene Wände, Fußböden aus Holz (Parkett, Dielen) mit Estrich oder textilen oder Kunststoffbelägen, Signal- und Beleuchtungseinrichtungen, Möbel, Geländer, Schildbrücken, Schilder, Warnbaken, Begrenzungspfähle, Kessel, Geschirr, Glasscheiben, Straßen und Wege, Hofbefestigungen, Straßen- und Eisenbahntunnel.

Die Erfindung wird anhand der im Folgenden beschriebenen Figuren und der Beispiele näher erläutert. Dabei sollen die Figuren und Beispiele nicht als einschränkend für die Erfindung verstanden werden.

### BEISPIELE

Alle Beispiele der folgenden verschiedenen Synthesevarianten wurden mit der gleichen allgemeinen Herstellungsvorschrift erstellt.

Allgemeine Herstellungsvorschrift:
Die Vorlage wurde unter Rühren mit 100 Upm auf 75 °C erwärmt. Dann wurden die Zuläufe 1, 2 und 3 in 4 h zudosiert und das Reaktionsgemisch eine weitere Stunde nachpolymerisiert. Anschließend ließ man auf Raumtemperatur abkühlen. Die Polymerzusammensetzung fällt in Form einer transparenten und dickflüssigen Lösung an.

Das gewichtsmittlere Molekulargewicht M_{w} der erfindungsgemäßen Polymerzusammensetzung wurde mittels Gelpermeationschromatographie (GPC) in wässriger Lösung unter Verwendung von neutralisierter Polyacrylsäure als Polymerstandard bestimmt. Bei dieser Art der Molekulargewichtsbestimmung werden die Komponenten der Polymerzusammensetzung erfasst, welche die zuvor genannten Monomere M) einpolymerisiert enthalten.
- Standard: neutralisierte Polyacrylsäure. Die Kalibrierung erfolgte mit eng verteilten Na-PAA-Standards der Fa. PSS (Polymer Standards Service GmbH) mit Molekulargewichten von M = 1.250 bis M = 1.100.000 g/mol. Zusätzlich wurden PAA-Standards der Fa. American Polymer Standards Corporation mit Molekulargewicht M = 1.770 sowie M = 900 g/mol verwendet. Die Werte außerhalb dieses Elutionsbereiches wurden extrapoliert.
- Elutionsmittel: 0,01 mol/I Phosphatpuffer pH=7,4 in destilliertem Wasser mit 0,01 M NaN₃
- Fluss: 0,8 mL/min
- Injektionsmenge: 100 µL
- Konzentration: 1,5 mg/mL
- Die Probelösungen wurden über Millipore IC Millex-LG Filter (0,2 µm) filtriert.
- Säulenbezeichnung: TSKgel GMPWXL
- Säulensatz: 2 Trennsäulen (Länge = je 30 cm), Ausschlussgrenze 1.000 - 8.000.000 g/mol
Detektor: DRI Agilent 1200 UV Agilent 1200 VWD [260nm]

### Synthesevariante A)

Die Synthesevariante A) (siehe Tabelle a)) wurde für die Herstellung der Polymerzusammensetzungen der Folien 1, 6, 7, 8, 9, 10, 11 und der Vergleichsfolien I und II verwendet, die in Tabelle 1 beschrieben sind.

Herstellung einer Polymerzusammensetzung mit einem Molekulargewicht wie in Tabelle 1 angegeben aus Acrylsäure und einem (C₈-C₁₈-Alkyl)polyoxyalkylenether mit 3 bis 12 Alkylenoxideinheiten pro Molekül in einem Gewichtsverhältnis von 2 : 1.

**Tabelle a)**

| | Einsatzstoff | Menge (Gew.-%) | Gehalt (%) |
|---|---|---|---|
| Vorlage | (C₈-C₁₈-Alkyl)-polyoxyalkylenether | 24,00 | 100,00 |
| | Wasser^{a)} | 18,00 | 100,00 |
| Zulauf 1 | Acrylsäure | 48,00 | 100,00 |
| Zulauf 2 | Initiator^{b)} | 0,34 | 100,00 |
| | Wasser^{a)} | 3,83 | 100,00 |
| Zulauf 3 | 2-Mercaptoethanol | 0,96 | 100,00 |
| | Natriumhypophosphit | 2,62 | 55,00 |
| | Wasser^{a)} | 2,25 | 100,00 |

| | | | |
|---|---|---|---|
| a) vollentsalztes Wasser b) 2,2'-Azobis(2-methylpropionamidine)dihydrochloride (CAS-Nr. 2997-92-4) | | | |

### Synthesevariante B)

Herstellung einer Polymerzusammensetzung mit einem Molekulargewicht wie in Tabelle 1 angegeben aus Acrylsäure und einem C₁₃C₁₅-Oxoalkohol mit 7 EO in einem Gewichtsverhältnis von 2 : 1.

### Beispiel B-1

Die Synthesevariante B-1) (siehe Tabelle b1)) wurde für die Herstellung der Polymerzusammensetzung der Folie 2 verwendet, wie sie in Tabelle 1 beschrieben ist.

**Tabelle b1)**

| | Einsatzstoff | Menge (Gew.-%) | Gehalt (%) |
|---|---|---|---|
| Vorlage | C₁₃C₁₅-Oxoalkohol mit 7 EO | 24,43 | 100,00 |
| | Wasser^{a)} | 18,24 | 100,00 |
| Zulauf 1 | Acrylsäure | 48,85 | 100,00 |
| Zulauf 2 | Initiator^{b)} | 0,35 | 100,00 |
| | Wasser^{a)} | 3,89 | 100,00 |
| Zulauf 3 | 2-Mercaptoethanol | 0,49 | 100,00 |
| | Wasser^{a)} | 3,75 | 100,00 |

| | | | |
|---|---|---|---|
| a) vollentsalztes Wasser b) 2,2'-Azobis(2-methylpropionamidine)dihydrochloride (CAS-Nr. 2997-92-4) | | | |

### Beispiel B-2

Die Synthesevariante B-2) (siehe Tabelle b2)) wurde für die Herstellung der Polymerzusammensetzung der Folie 3 verwendet, wie sie in Tabelle 1 beschrieben ist.

**Tabelle b2**

| | Einsatzstoff | Menge (Gew.-%) | Gehalt (%) |
|---|---|---|---|
| Vorlage | C₁₃C₁₅-Oxoalkohol mit 7 EO | 24,72 | 100,00 |
| | Wasser^{a)} | 17,25 | 100,00 |
| Zulauf 1 | Acrylsäure | 49,44 | 100,00 |
| Zulauf 2 | Initiator^{b)} | 0,35 | 100,00 |
| | Wasser^{a)} | 3,94 | 100,00 |
| Zulauf 3 | 2-Mercaptoethanol | 0,10 | 100,00 |
| | Wasser^{a)} | 4,20 | 100,00 |

| | | | |
|---|---|---|---|
| a) vollentsalztes Wasser b) 2,2'-Azobis(2-methylpropionamidine)dihydrochloride (CAS-Nr. 2997-92-4) | | | |

### Synthesevariante C)

Herstellung einer Polymerzusammensetzung mit einem Molekulargewicht wie in Tabelle 1 angegeben aus Acrylsäure und einem C₁₃C₁₅-Oxoalkohol mit 7 EO in einem Gewichtsverhältnis wie ebenfalls in Tabelle 1 angegeben.

### Beispiel C-1

Die Synthesevariante C-1) (siehe Tabelle c1)) wurde für die Herstellung der Polymerzusammensetzung der Folie 4 verwendet, wie sie in Tabelle 1 beschrieben ist.

**Tabelle c1)**

| | Einsatzstoff | Menge (Gew.-%) | Gehalt (%) |
|---|---|---|---|
| Vorlage | C₁₃C₁₅-Oxoalkohol mit 7 EO | 36,36 | 100,00 |
| | Wasser^{a)} | 18,18 | 100,00 |
| Zulauf 1 | Acrylsäure | 36,36 | 100,00 |
| Zulauf 2 | Initiator^{b)} | 0,26 | 100,00 |
| | Wasser^{a)} | 4,29 | 100,00 |
| Zulauf 3 | 2-Mercaptoethanol | 0,73 | 100,00 |
| | Natriumhypophosphit | 1,98 | 55,00 |
| | Wasser^{a)} | 1,84 | 100,00 |

| | | | |
|---|---|---|---|
| a) vollentsalztes Wasser b) 2,2'-Azobis(2-methylpropionamidine)dihydrochloride (CAS-Nr. 2997-92-4) | | | |

### Beispiel C-2

Die Synthesevariante C-2) (siehe Tabelle c2)) wurde für die Herstellung der Polymerzusammensetzung der Folie 5 verwendet, wie sie in Tabelle 1 beschrieben ist.

**Tabelle c2**

| | Einsatzstoff | Menge (Gew.-%) | Gehalt (%) |
|---|---|---|---|
| Vorlage | C₁₃C₁₅-Oxoalkohol mit 7 EO | 17,91 | 100,00 |
| | Wasser^{a)} | 17,06 | 100,00 |
| Zulauf 1 | Acrylsäure | 53,72 | 100,00 |
| Zulauf 2 | Initiator^{b)} | 0,38 | 100,00 |
| | Wasser^{a)} | 4,33 | 100,00 |
| Zulauf 3 | 2-Mercaptoethanol | 1,07 | 100,00 |
| | Natriumhypophosphit | 2,93 | 55,00 |
| | Wasser^{a)} | 2,60 | 100,00 |

| | | | |
|---|---|---|---|
| a) vollentsalztes Wasser b) 2,2'-Azobis(2-methylpropionamidine)dihydrochloride (CAS-Nr. 2997-92-4) Synthesevariante D) | | | |

Herstellung einer Polymerzusammensetzung mit einem Molekulargewicht wie in Tabelle 2 angegeben aus Acrylsäure, einem Comonomer und einem C₁₃C₁₅-Oxoalkohol mit 7 EO in einem Gewichtsverhältnis von Monomeren zu Oxoalkoholethoxilat von 2 : 1.

### Beispiel D-1 (Polymerzusammensetzung auf Basis Acrylsäure und Itaconsäure)

Die Synthesevariante D-1) (siehe Tabelle d1)) wurde für die Herstellung der Polymerzusammensetzung 1 in der Tabelle 2 eingesetzt.

**Tabelle d1)**

| | Einsatzstoff | Menge (Gew.-%) | Gehalt (%) |
|---|---|---|---|
| Vorlage | C₁₃C₁₅-Oxoalkohol mit 7 EO | 24,00 | 100,00 |
| | Wasser^{a)} | 18,00 | 100,00 |
| | Itaconsäure | 20,94 | 100,00 |
| Zulauf 1 | Acrylsäure | 27,06 | 100,00 |
| Zulauf 2 | Initiator^{b)} | 0,34 | 100,00 |
| | Wasser^{a)} | 3,83 | 100,00 |
| Zulauf 3 | 2-Mercaptoethanol | 0,96 | 100,00 |
| | Natriumhypophosphit | 2,62 | 55,00 |
| | Wasser^{a)} | 2,25 | 100,00 |

| | | | |
|---|---|---|---|
| a) vollentsalztes Wasser b) 2,2'-Azobis(2-methylpropionamidine)dihydrochloride (CAS-Nr. 2997-92-4) | | | |

Beispiel D-2 (Polymerzusammensetzung auf Basis von Acrylsäure und Methacrylsäure)

Die Synthesevariante D-2 wurde zur Herstellung der Polymerzusammensetzung 2 der Tabelle 2 eingesetzt.

**Tabelle d2)**

| | Einsatzstoff | Menge (Gew.-%) | Gehalt (%) |
|---|---|---|---|
| Vorlage | C₁₃C₁₅-Oxoalkohol mit 7 EO | 24,00 | 100,00 |
| | Wasser^{a)} | 18,00 | 100,00 |
| Zulauf 1 | Methacrylsäure | 26,13 | 100.00 |
| | Acrylsäure | 21,87 | 100,00 |
| Zulauf 2 | Initiator^{b)} | 0,34 | 100,00 |
| | Wasser^{a)} | 3,83 | 100,00 |
| Zulauf 3 | 2-Mercaptoethanol | 0,96 | 100,00 |
| | Natriumhypophosphit | 2,62 | 55,00 |
| | Wasser^{a)} | 2,25 | 100,00 |

| | | | |
|---|---|---|---|
| a) vollentsalztes Wasser b) 2,2'-Azobis(2-methylpropionamidine)dihydrochloride (CAS-Nr. 2997-92-4) | | | |

Beispiel D-3 (Polymerzusammensetzung auf Basis von Acrylsäure und dem Natriumsalz der 2-Acrylamido-2-methylpropansulfonsäure)

Die Synthesevariante D-3 wurde zur Herstellung der Polymerzusammensetzung 3 der Tabelle 2 eingesetzt.

**Tabelle d3)**

| | Einsatzstoff | Menge (Gew.-%) | Gehalt (%) |
|---|---|---|---|
| Vorlage | C₁₃C₁₅-Oxoalkohol mit 7 EO | 24,07 | 100,00 |
| | Wasser^{a)} | 10,86 | 100,00 |
| Zulauf 1 | 2-Acrylamido-2-methylpropansulfonsäure Na-Salz | 13,81 | 50.00 |
| | Acrylsäure | 41,25 | 100,00 |
| Zulauf 2 | Initiator^{b)} | 0,34 | 100,00 |
| | Wasser^{a)} | 3,83 | 100,00 |
| Zulauf 3 | 2-Mercaptoethanol | 0,96 | 100,00 |
| | Natriumhypophosphit | 2,63 | 55,00 |
| | Wasser^{a)} | 2,25 | 100,00 |

| | | | |
|---|---|---|---|
| a) vollentsalztes Wasser b) 2,2'-Azobis(2-methylpropionamidine)dihydrochloride (CAS-Nr. 2997-92-4) | | | |

### Allgemeine Beschreibung der Folienherstellung

Die durch Polymerisation in Gegenwart von Tensid hergestellte dickflüssige Polymerzusammensetzung wurde auf 70 bis 80 °C erwärmt, um sie in eine gießfähige Form zu überführen. Die so erwärmte Polymerzusammensetzung wurde mit einer Rakel auf eine mit Silikonpapier beschichtete Glasplatte aufgetragen, und sofort auf Raumtemperatur gekühlt. Die eingesetzte Rakel hatte eine Zahnhöhe von 600 µm. Anschließend wurde der Film für 24 Stunden bei Raumtemperatur getrocknet. Durch die Trocknung reduzierte sich die Folienstärke auf ca. 300 µm. Nach der Trocknung enthalten die Folien 5 bis 8 % Wasser.

**Tabelle 1: Folienzusammensetzungen**

| Folie | Synthesevariante | Monomer / (C₈-C₁₈-Alkyl)-polyoxyalkylenether | Gewichtsverhältnis | Mw Polymerzusammensetzung [g/mol] |
|---|---|---|---|---|
| 1 | A | Acrylsäure / C₁₃C₁₅-Oxoalkohol mit 7 EO | 2:1 | 5330 |
| 2 | B | Acrylsäure / C₁₃C₁₅-Oxoalkohol mit 7 EO | 2:1 | 20600 |
| 3 | B | Acrylsäure / C₁₃C₁₅-Oxoalkohol mit 7 EO | 2:1 | 62300 |
| 4 | C | Acrylsäure/ C₁₃C₁₅-Oxoalkohol mit 7 EO | 1:1 | 5130 |
| 5 | C | Acrylsäure / C₁₃C₁₅-Oxoalkohol mit 7 EO | 3:1 | 5590 |
| 6 | A | Acrylsäure / C₁₃C₁₅-Oxoalkohol mit 5 EO | 2:1 | 6270 |
| 7 | A | Acrylsäure / C₁₃C₁₅-Oxoalkohol mit 8 EO | 2:1 | 5470 |
| 8 | A | Acrylsäure/ C₁₃-Oxoalkohol mit 7 EO | 2:1 | 5010 |
| 9 | A | Acrylsäure / C₁₃-Oxoalkohol mit 8 EO | 2:1 | 5310 |
| 10 | A | Acrylsäure / C₁₂C₁₈-Fettalkohol mit 7 EO | 2:1 | 5490 |
| 11 | A | Acrylsäure / C₁₀-Guerbetalkohol mit 7 EO | 2:1 | 5480 |
| Vergleichsfolie I^{a)} | A | Acrylsäure / C₁₃-Oxoalkohol mit 20 EO | 2:1 | 5130 |
| Vergleichsfolie II^{b)} | A | Acrylsäure / beidseitig alkylterminiertes PEO | 2:1 | 5050 |
| Vergleichsfolie III^{c)} | - | - | - | - |

| | | | | |
|---|---|---|---|---|
| a) höherer Ethoxilierungsgrad als erfindungsgemäße Polymerfolie b) beidseitig alkylterminiertes PEO = beidseitig endständig CₓH₂ₓ₊₁ / C_{y}H_{2y+1} - terminiertes Polyethylenoxid mit einer freien OH-Gruppe und x, y = 6 bis 14 c) Polyvinylalkohol Folie - M8630 - Firma Monosol | | | | |

Die Folien enthalten 5 bis 8 % Wasser.

**Tabelle 2: Folienzusammensetzungen**

| Beispiel | Synthesevariante | Monomer / (C₈-C₁₈-Alkyl)-polyoxyalkylenether | Gewichtsverhältnis | Mw Polymerzusammensetzung [g/mol] |
|---|---|---|---|---|
| D1 | D | Acrylsäure, Itaconsäure / C₁₃C₁₅-Oxoalkohol mit 7 EO | 2:1 | 6580 |
| D2 | D | Acrylsäure, Methacrylsäure / C₁₃C₁₅-Oxoalkohol mit 7 EO | 2:1 | 7890 |
| D3 | D | Acrylsäure, 2-Acrylamido-2-methylpropansulfonsäure Na-Salz / C₁₃C₁₅-Oxoalkohol mit 7 EO | 2:1 | 4810 |

Die erfindungsgemäße Polymerzusammensetzung kann mit wenigstens einem Weichmacher formuliert werden. Beispielsweise kann die nach der zuvor beschriebenen Synthesevariante A) hergestellte Polymerzusammensetzung für Folie 1 gemäß Tabelle 1 mit 3 Gew.-% Triethylenglycol, bezogen auf das Gesamtgewicht der erhaltenen Polymerzusammensetzung vermischt werden. Nach dem Flüssigauftrag auf ein Substrat und dem Trocknen wird eine transparente Folie erhalten, die so flexibel ist, dass sich die beiden Enden berühren können ohne dass die Folie bricht. Ohne den Einsatz von Triethylenglycol wird ein steiferer Film erhalten, der bricht, wenn man die beiden Enden in Kontakt bringt.

Weiterhin kann die nach der zuvor beschriebenen Synthesevariante B) hergestellte Polymerzusammensetzung für Folie 2 gemäß Tabelle 1 mit 8 Gew.-% Glycerin, bezogen auf das Gesamtgewicht der erhaltenen Polymerzusammensetzung vermischt werden. Nach dem Flüssigauftrag auf ein Substrat und dem Trocknen wird eine transparente Folie erhalten, die so flexibel ist, dass sich die beiden Enden berühren können, ohne dass die Folie bricht. Ohne den Einsatz von Glycerin wird ein steiferer Film erhalten, der bricht, wenn man die beiden Enden in Kontakt bringt.

### Anwendungsbeispiele:

Die Waschwirkung der erfindungsgemäßen Folien wurde folgendermaßen bestimmt:
Ausgewählte Schmutzgewebe wurden in Gegenwart von Ballastgewebe aus Baumwolle bei 40 °C unter Zusatz der erfindungsgemäßen Folien gewaschen. Nach dem Waschgang wurden die Gewebe gespült, geschleudert und getrocknet.

Zur Ermittlung der Waschwirkung wurde die Remission des Schmutzgewebes vor und nach dem Waschen mit einem Photometer der Fa. Datacolor (Elrepho 2000) bei 460 nm gemessen. Das Waschvermögen ist umso besser, je höher der Remissionswert ist.

**Waschbedingungen:**

| | |
|---|---|
| Gerät | Launder-o-meter, LP2 Typ, SDL Atlas Inc., USA |
| Waschflotte | 250 ml |
| Waschdauer / Waschtemperatur | 30 min bei 40 °C |
| Dosierung | 1,5 g Folie (Einwaage bezieht sich auf den Feststoffgehalt der Folie, ermittelt nach 2 h Trocknung im Umluftschrank bei 120°C) |
| Flottenverhältnis | 1 : 12,5 |
| Waschzyklen | 1 |
| Wasserhärte | 2,5 mmol/I Ca²⁺: Mg²⁺: HCO₃⁻ 4:1:8 |
| Ballastgewebe | 10 g Baumwollgewebe 283 |
| Summe Ballastgewebe + Schmutzgewebe | 20 g |
| Schmutzgewebe | 10 g wfk 20 D ¹⁾ |
| | 10 g wfk 10 PF ²⁾ |
| | 10 g EMPA 123 ³⁾ |
| | 10 g EMPA 125 ⁴⁾ |
| | 10 g Olivenöl auf Mischgewebe ⁵⁾ |

| | |
|---|---|
| ¹⁾ wfk 20 D Polyester-/Baumwollgewebe, Pigment/Hautfett-Anschmutzung, Remission 33,9 % ²⁾ wfk 10 PF Baumwollgewebe, Pigment/Pflanzenfett-Anschmutzung, Remission 33,8% ³⁾ EMPA 123 Baumwollgewebe, Anschmutzung für Tieftemperaturwäsche, Remission 21,0 % ⁴⁾ EMPA 125 Baumwollgewebe für Tensidtests, Remission 21,0 % ⁵⁾ Olivenöl auf Baumwolle-/Polyester Mischgewebe ¹⁾²⁾ Hersteller/Lieferant: wfk Testgewebe GmbH, Brüggen, Deutschland ³⁾⁴⁾ Hersteller/Lieferant: EMPA Testmaterialien AG, Sankt Gallen, Schweiz ⁵⁾ Eigenanschmutzung BASF SE, Ludwigshafen, Deutschland Herstellung: 0,1 g Olivenöl, das mit 0,1 % Sudanrot versetzt ist, wird in die Mitte eines 5 g schweren Mischgewebes aus Polyester/Baumwolle mittels Pipette aufgetragen. Das angeschmutzte Gewebe wird über Nacht gelagert, bevor es gewaschen wird. | |

**Waschergebnis (Auswertung % Remission)**

| Folie | wfk 20 D | wfk 10 PF | EMPA 123 | EMPA 125 | Olivenöl auf MG | Summe |
|---|---|---|---|---|---|---|
| ohne | 37,7 | 33,8 | 29,8 | 25,5 | 33,9 | 160,7 |
| 1 | 59,5 | 47,9 | 42,4 | 50,7 | 54,3 | 254,8 |
| 2 | 59,9 | 47,0 | 43,6 | 50,7 | 55,8 | 257,1 |
| 3 | 60,8 | 50,1 | 42,5 | 48,6 | 54,9 | 256,9 |
| 4 | 61.4 | 48,0 | 41,2 | 47,4 | 57,9 | 255,8 |
| 5 | 55,9 | 44,7 | 41,1 | 49,7 | 53,5 | 244,8 |
| 6 | 55,1 | 51,3 | 42,7 | 52,1 | 57,0 | 258,2 |
| 7 | 59,7 | 47,8 | 43,8 | 47,4 | 55,4 | 254,1 |
| 8 | 59,0 | 49,1 | 41,4 | 49,6 | 56,0 | 255,1 |
| 9 | 54,7 | 43,4 | 43,3 | 44,1 | 52,9 | 238,5 |
| 10 | 57,7 | 47,5 | 42,4 | 47,3 | 56,0 | 251,0 |
| 11 | 52,2 | 44,2 | 42,0 | 45,6 | 55,3 | 239,2 |
| | | | | | | |
| I | 47,8 | 40,3 | 43,2 | 43,0 | 53,2 | 227,4 |
| II | 50,3 | 38,5 | 41,1 | 46,2 | 53,5 | 229,6 |
| III | 37,1 | 34,9 | 30,5 | 24,4 | 33,2 | 160,1 |

### Beispiel 2

Die farbübertragungsinhibierende Wirkung der erfindungsgemäßen Folie wurde folgendermaßen bestimmt:
Ausgewähltes Farbgewebe (EMPA 133) wurde in Gegenwart von weißem Prüfgewebe und Ballastgewebe aus Polyester unter Zugabe der Folie bei 40 °C gewaschen. Die Waschflotte wurde auf pH 8 eingestellt. Nach dem Waschgang wurden die Gewebe gespült, geschleudert und getrocknet. Um die farbübertragungsinhibierende Wirkung zu bestimmen wurde die Anfärbung des weißen Prüfgewebes photometrisch ermittelt. Die Bestimmung der Remission erfolgte mit einem Photometer der Fa. Datacolor (Elrepho 2000) bei 600 nm.

**Waschbedinunen:**

| | |
|---|---|
| Gerät | Launder-o-meter, LP2 Typ, SDL Atlas Inc., USA |
| Waschflotte | 250 ml |
| Waschdauer /Waschtemperatur | 20 min bei 40 °C |
| Dosierung | 1,5 g Folie (Einwaage bezieht sich auf den Feststoffgehalt der Folie, ermittelt nach 2 h Trocknung im Umluftschrank bei 120°C) |
| Flottenverhältnis | 1 : 12,5 |
| Waschzyklen | 1 |
| Wasserhärte | 2,5 mmol/l Ca²⁺ : Mg²⁺ : HCO₃⁻ 4:1:8 |
| Ballastgewebe | 5 g Polyestergewebe wfk 30 A |
| Farbgewebe | 1 g EMPA 133 ³⁾ |
| Prüfgewebe | 10 g wfk 10 A ¹⁾ |
| | 5g wfk 20 A ²⁾ |

| | |
|---|---|
| Als Folie wurde Folie 1 eingesetzt, die durch Additivierung bei ihrer Herstellung 0,2 Gew.-% eines polymeren Farbübertragungsinhibitors (FÜI) enthielt: FÜI Folie 1a: Homopolyvinylpyrrolidon mit Mw von 40000 g/mol FÜI Folie 1b: Copolymer aus 50 Gew.-% 1-Vinylpyrrolidon und 50 Gew.-% 1-Vinylimidazol mit Mw von 70000 g/mol ¹⁾ wfk 10 A Baumwollgewebe, Remission 82,5 ²⁾ wfk 20 A Polyester-Baumwollgewebe, Remission 83,6 % ³⁾ EMPA 133 Baumwollgewebe mit Direktblau 71 gefärbt ¹⁾²⁾ Hersteller/Lieferant: wfk Testgewebe GmbH, Brüggen, Deutschland ³⁾ Hersteller/Lieferant: EMPA Testmaterialien AG, Sankt Gallen, Schweiz | |

**Waschergebnis (Auswertung % Remission)**

| Folie | wfk 10 A | wfk 20 A |
|---|---|---|
| ohne | 62,0 | 64,3 |
| 1a | 75,2 | 78,6 |
| 1b | 80,9 | 81,5 |

## Patentansprüche

1. Wasch- und reinigungsaktive Polymerfolie, enthaltend oder bestehend aus eine(r) Polymerzusammensetzung P), erhältlich durch radikalische Polymerisation einer Monomerzusammensetzung M), die wenigstens ein Monomer A) enthält, ausgewählt unter α,β-ethylenisch ungesättigten Carbonsäuren, Salzen a,β-ethylenisch ungesättigter Carbonsäuren und Mischungen davon, in Gegenwart wenigstens eines (C₈-C₁₈-Alkyl)polyoxyalkylenethers PE) mit im Mittel 3 bis 12 Alkylenoxideinheiten pro Molekül.

2. Polymerfolie nach Anspruch 1, wobei die Monomerzusammensetzung M) zusätzlich zu dem wenigstens einen Monomer A) wenigstens ein Monomer B) enthält, das ausgewählt ist unter ungesättigten Sulfonsäuren, Salzen ungesättigter Sulfonsäuren, ungesättigten Phosphonsäuren, Salzen ungesättigter Phosphonsäuren und Mischungen davon.

3. Polymerfolie nach einem der Ansprüche 1 oder 2, wobei die Monomerzusammensetzung M) zusätzlich wenigstens ein Comonomer C) enthält, ausgewählt unter
C1) Stickstoffheterocyclen mit einer radikalisch polymerisierbaren α,β-ethylenisch ungesättigten Doppelbindung,
C2) Amidgruppen-haltigen Monomeren,
C3) Verbindungen der allgemeinen Formeln (I.a) und (I.b) 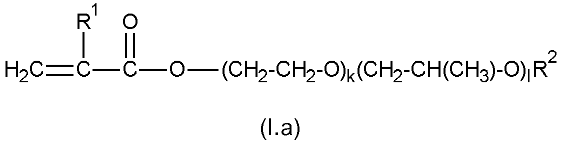 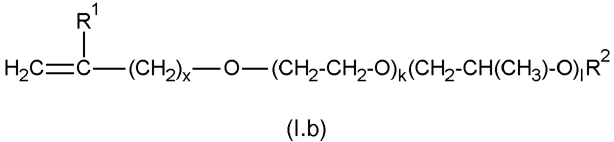 worin
die Reihenfolge der Alkylenoxideinheiten beliebig ist,
x für 0, 1 oder 2 steht,
k und l unabhängig voneinander für eine ganze Zahl von 0 bis 100 stehen, wobei die Summe aus k und l mindestens 2 beträgt, vorzugsweise mindestens 5 beträgt,
R¹ für Wasserstoff oder Methyl steht,
R² für Wasserstoff oder C₁-C₄-Alkyl steht,
und Mischungen aus zwei oder mehr als zwei der zuvor genannten Monomere C1) bis C3).

4. Polymerfolie nach einem der vorhergehenden Ansprüche, wobei die Monomerzusammensetzung M) bezogen auf das Gesamtgewicht weniger als 0,1 Gew.-%, bevorzugt weniger als 0,01 Gew.-%, insbesondere keine, vernetzend wirkenden Monomere enthält, die zwei oder mehr als zwei radikalisch polymerisierbare α,β-ethylenisch ungesättigte Doppelbindungen pro Molekül aufweisen.

5. Polymerfolie nach einem der vorhergehenden Ansprüche, wobei das Monomer A) ausgewählt ist unter Acrylsäure, Methacrylsäure, Maleinsäure, Fumarsäure, Itaconsäure, Ethacrylsäure, α-Chloracrylsäure, Crotonsäure, Citraconsäure, Mesaconsäure, Glutaconsäure und Aconitsäure, Salzen der zuvor genannten Carbonsäuren und Mischungen davon.

6. Polymerfolie nach einem der vorhergehenden Ansprüche, wobei die zur radikalischen Polymerisation eingesetzte Monomerzusammensetzung M) Acrylsäure und/oder Acrylsäuresalze enthält oder aus Acrylsäure und/oder Acrylsäuresalzen besteht.

7. Polymerfolie nach einem der vorhergehenden Ansprüche, wobei die Monomerzusammensetzung M) zu mindestens 50 Gew-%, bevorzugt zu mindestens 80 Gew.-%, insbesondere zu mindestens 90 Gew.-%, bezogen auf das Gesamtgewicht der Monomerzusammensetzung M), aus Acrylsäure und/oder Acrylsäuresalzen besteht.

8. Polymerfolie nach einem der vorhergehenden Ansprüche, wobei die radikalische Polymerisation in Gegenwart wenigstens eines (C₈-C₁₈-Alkyl)polyoxyalkylenethers erfolgt, der als Alkylenoxideinheiten ausschließlich Ethylenoxideinheiten eingebaut enthält.

9. Polymerfolie nach einem der vorhergehenden Ansprüche, wobei die (C₈-C₁₈-Alkyl)polyoxyalkylenether im Mittel 3 bis 10 Ethylenoxideinheiten pro Molekül, bevorzugt im Mittel 5 bis 9 Ethylenoxideinheiten pro Molekül, enthalten.

10. Polymerfolie nach einem der vorhergehenden Ansprüche, wobei zur radikalischen Polymerisation die Monomerzusammensetzung M) und die (C₈-C₁₈-Alkyl)-polyoxyalkylenether mit 3 bis 12 Alkylenoxideinheiten pro Molekül in einem Gewichtsverhältnis von 0,5 : 1 bis 5 : 1, bevorzugt von 0,7 : 1 bis 3 : 1, eingesetzt werden.

11. Polymerfolie nach einem der vorhergehenden Ansprüche, wobei die radikalische Polymerisation in Gegenwart eines Lösungsmittels erfolgt, das ausgewählt ist unter Wasser, C₁-C₆-Alkanolen, Polyetherpolyolen, deren Mono- und Dialkylethern und Mischungen davon.

12. Polymerfolie nach einem der vorhergehenden Ansprüche, die wenigstens einen Zusatzstoff enthält, vorzugsweise ausgewählt unter Weichmachern, Scavengern, weiteren Polymeren, Mitteln zur Modifikation der Gasdurchlässigkeit und Wasserdampfdurchlässigkeit, Antistatikmitteln, Gleitmitteln, Slipmitteln, Auflösungshilfsmitteln, Farbstoffen, Pigmenten, Enzymen, Korrosionsinhibitoren, Entschäumern, Duftstoffen, Verdickern, Löslichkeitsvermittlern, Lösemitteln, pH-Stellmitteln, Antiredepositionsmitteln, optischen Aufhellern, Vergrauungsinhibitoren, Farbübertragungsinhibitoren, antimikrobiellen Wirkstoffen, Antioxidantien, UV-Absorbern und Mischungen davon.

13. Verfahren zur Herstellung einer Polymerfolie wie in einem der Ansprüche 1 bis 12 definiert, bei dem man
a) eine Monomerzusammensetzung M) bereitstellt, die wenigstens ein Monomer A) enthält, ausgewählt unter a,β-ethylenisch ungesättigten Carbonsäuren und Mischungen, die wenigstens eine a,β-ethylenisch ungesättigte Carbonsäure und wenigstens ein Salz einer a,β-ethylenisch ungesättigten Carbonsäure enthalten,
b) die in Schritt a) bereitgestellte Monomerzusammensetzung M) einer radikalischen Polymerisation in Gegenwart wenigstens eines (C₈-C₁₈-Alkyl)polyoxyalkylenethers mit 3 bis 12 Alkylenoxideinheiten pro Molekül und gegebenenfalls in Gegenwart wenigstens eines Zusatzstoffes unterzieht,
c) die in Schritt b) erhaltene Polymerzusammensetzung in eine Polymerfolie überführt.

14. Verfahren nach Anspruch 13, wobei die radikalische Polymerisation in Schritt b) in Zulauf-Fahrweise erfolgt, wobei man wenigstens einen Teil des (C₈-C₁₈-Alkyl)-polyoxyalkylenethers mit 3 bis 12 Alkylenoxideinheiten pro Molekül und gegebenenfalls, falls vorhanden, wenigstens einen Teil eines Lösungsmittels vorlegt, und wenigstens einen Teil der in Schritt a) bereitgestellten Monomerzusammensetzung M) und wenigstens einen Radikalstarter der Vorlage zuführt.

15. Verfahren nach einem der Ansprüche 13 oder 14, bei dem man in Schritt c) die in Schritt b) erhaltene Polymerzusammensetzung, gegebenenfalls nach Zugabe wenigstens eines Zusatzstoffes, einer Folienbildung unterzieht, ausgewählt unter Gießen, Blasformen, Thermoformen, Extrudieren und Kalandrieren.

16. Verwendung einer Polymerfolie, wie in einem der Ansprüche 1 bis 11 definiert, oder erhältlich durch ein Verfahren, wie in einem der Ansprüche 12 bis 14 definiert, zur zumindest teilweisen Umhüllung eines flüssigen oder festen Wasch- und Reinigungsmittels.

17. Umhüllung oder Beschichtung für eine Waschmittel- oder Reinigungsmittelportion, umfassend oder bestehend aus einer Polymerfolie, wie in einem der Ansprüche 1 bis 11 definiert, oder erhältlich durch ein Verfahren, wie in einem der Ansprüche 12 bis 14 definiert.

18. Wasch- oder Reinigungsmittel, umfassend:
A) wenigstens Umhüllung und/oder Beschichtung, enthaltend oder bestehend aus eine(r) wasch- und reinigungsaktive(n) Polymerfolie, wie in einem der Ansprüche 1 bis 11 definiert, oder erhältlich durch ein Verfahren, wie in einem der Ansprüche 12 bis 14 definiert,
B) wenigstens ein Tensid,
C) gegebenenfalls wenigstens einen Builder,
D) gegebenenfalls wenigstens ein Bleichsystem,
E) gegebenenfalls wenigstens einen weiteren Zusatzstoff, der vorzugsweise ausgewählt ist unter Enzymen, Basen, Korrosionsinhibitoren, Entschäumern und Schauminhibitoren, Farbstoffen, Duftstoffen, Füllstoffen, Tablettierhilfsmitteln, Desintegrationsmitteln, Verdickern, Löslichkeitsvermittlern, organischen Lösemitteln, Elektrolyten, pH-Stellmitteln, Parfümträgern, Fluoreszenzmitteln, Hydrotropen, Antiredepositionsmitteln, optischen Aufhellern, Vergrauungsinhibitoren, Einlaufverhinderern, Knitterschutzmitteln, Farbübertragungsinhibitoren, antimikrobiellen Wirkstoffen, Antioxidantien, Korrosionsinhibitoren, Antistatika, Bügelhilfsmitteln, Phobier- und Imprägniermitteln, Quell- und Schiebefestmitteln und UV-Absorbern, und
F) gegebenenfalls Wasser.

## Claims

1. A washing- and cleaning-active polymer film, comprising or consisting of a polymer composition P) obtainable by free-radical polymerization of a monomer composition M) which comprises at least one monomer A) selected from α, β-ethylenically unsaturated carboxylic acids, salts of α, β-ethylenically unsaturated carboxylic acids and mixtures thereof, in the presence of at least one (C₈-C₁₈-alkyl)polyoxyalkylene ether PE) having on average 3 to 12 alkylene oxide units per molecule.

2. The polymer film according to claim 1, where the monomer composition M) comprises, in addition to the at least one monomer A), at least one monomer B) which is selected from unsaturated sulfonic acids, salts of unsaturated sulfonic acids, unsaturated phosphonic acids, salts of unsaturated phosphonic acids and mixtures thereof.

3. The polymer film according to either of claims 1 or 2, where the monomer composition M) additionally comprises at least one comonomer C) selected from
C1) nitrogen heterocycles with a free-radically polymerizable α, β-ethylenically unsaturated double bond,
C2) monomers containing amide groups,
C3) compounds of the general formulae (I.a) and (I.b) 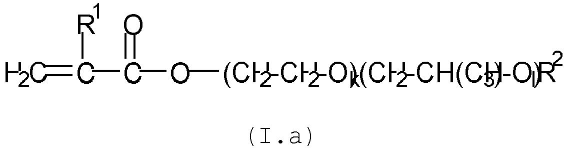 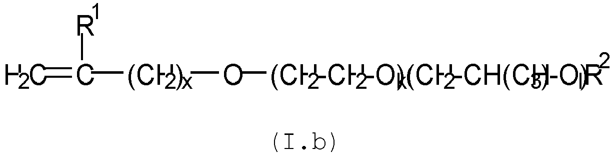 in which
the order of the alkylene oxide units is arbitrary,
x is 0, 1 or 2,
k and 1, independently of one another, are an integer from 0 to 100, where the sum of k and 1 is at least 2, preferably at least 5,
R¹ is hydrogen or methyl,
R² is hydrogen or C₁-C₄-alkyl,
and mixtures of two or more than two of the aforementioned monomers C1) to C3).

4. The polymer film according to any one of the preceding claims, where the monomer composition M) comprises, based on the total weight, less than 0.1% by weight, preferably less than 0.01% by weight, in particular no crosslinking monomers which have two or more than two free-radically polymerizable α, β-ethylenically unsaturated double bonds per molecule.

5. The polymer film according to any one of the preceding claims, where the monomer A) is selected from acrylic acid, methacrylic acid, maleic acid, fumaric acid, itaconic acid, ethacrylic acid, α-chloroacrylic acid, crotonic acid, citraconic acid, mesaconic acid, glutaconic acid and aconitic acid, salts of the aforementioned carboxylic acids and mixtures thereof.

6. The polymer film according to any one of the preceding claims, where the monomer composition M) used for the free-radical polymerization comprises acrylic acid and/or acrylic acid salts or consists of acrylic acid and/or acrylic acid salts.

7. The polymer film according to any one of the preceding claims, where the monomer composition M) consists to at least 50% by weight, preferably to at least 80% by weight, in particular to at least 90% by weight, based on the total weight of the monomer composition M), of acrylic acid and/or acrylic acid salts.

8. The polymer film according to any one of the preceding claims, where the free-radical polymerization takes place in the presence of at least one (C₈-C₁₈-alkyl)polyoxyalkylene ether which comprises exclusively ethylene oxide units incorporated as alkylene oxide units.

9. The polymer film according to any one of the preceding claims, where the (C₈-C₁₈-alkyl)polyoxyalkylene ethers comprise on average 3 to 10 ethylene oxide units per molecule, preferably on average 5 to 9 ethylene oxide units per molecule.

10. The polymer film according to any one of the preceding claims, where, for the free-radical polymerization, the monomer composition M) and the (C₈-C₁₈-alkyl)polyoxyalkylene ethers having 3 to 12 alkylene oxide units per molecule are used in a weight ratio of 0.5:1 to 5:1, preferably from 0.7:1 to 3:1.

11. The polymer film according to any one of the preceding claims, where the free-radical polymerization takes place in the presence of a solvent which is selected from water, C₁-C₆-alkanols, polyetherpolyols, their mono- and dialkyl ethers and mixtures thereof.

12. The polymer film according to any one of the preceding claims, which comprises at least one additive, preferably selected from plasticizers, scavengers, further polymers, agents for modifying the gas permeability and water vapor permeability, antistatic agents, lubricants, slip agents, dissolution auxiliaries, dyes, pigments, enzymes, corrosion inhibitors, antifoams, fragrances, thickeners, solubility promoters, solvents, pH adjusting agents, antiredeposition agents, optical brighteners, graying inhibitors, color transfer inhibitors, antimicrobial active ingredients, antioxidants, UV absorbers and mixtures thereof.

13. A process for producing a polymer film as defined in any one of claims 1 to 12, in which
a) a monomer composition M) is provided which comprises at least one monomer (A) selected from α,β-ethylenically unsaturated carboxylic acids and mixtures which comprise at least one α,β-ethylenically unsaturated carboxylic acid and at least one salt of an α,β-ethylenically unsaturated carboxylic acid,
b) the monomer composition M) provided in step a) is subjected to a free-radical polymerization in the presence of at least one (C₈-C₁₈-alkyl)polyoxyalkylene ether having 3 to 12 alkylene oxide units per molecule and optionally in the presence of at least one additive,
c) the polymer composition obtained in step b) is converted to a polymer film.

14. The process according to claim 13, where the free-radical polymerization in step b) takes place in a feed procedure, where at least some of the (C₈-C₁₈-alkyl)polyoxyalkylene ether having 3 to 12 alkylene oxide units per molecule and optionally, if present, at least some of a solvent are initially introduced, and at least some of the monomer composition M) provided in step a) and at least one radical starter are introduced into the initial charge.

15. The process according to either of claims 13 and 14, in which, in step c), the polymer composition obtained in step b), optionally after adding at least one additive, is subjected to a film formation selected from casting, blow molding, thermoforming, extrusion and calendering.

16. The use of a polymer film as defined in any one of claims 1 to 11, or obtainable by a process as defined in any one of claims 12 to 14, for the at least partial covering of a liquid or solid detergent and cleaner.

17. A covering or coating for a detergent or cleaner portion, comprising or consisting of a polymer film, as defined in any one of claims 1 to 11, or obtainable by a process as defined in any one of claims 12 to 14.

18. A detergent or cleaner, comprising:
A) at least covering and/or coating, comprising or consisting of a washing- and cleaning-active polymer film as defined in any one of claims 1 to 11, or obtainable by a process as defined in any one of claims 12 to 14,
B) at least one surfactant,
C) optionally at least one builder,
D) optionally at least one bleach system,
E) optionally at least one further additive, which is preferably selected from enzymes, bases, corrosion inhibitors, antifoams and foam inhibitors, dyes, fragrances, fillers, tableting auxiliaries, disintegrants, thickeners, solubility promoters, organic solvents, electrolytes, pH adjusting agents, perfume carriers, fluorescent agents, hydrotropes, antiredeposition agents, optical brighteners, graying inhibitors, shrink preventers, anticrease agents, color transfer inhibitors, antimicrobial active ingredients, antioxidants, corrosion inhibitors, antistats, ironing aids, phobicization and impregnation agents, swelling and slip-resist agents and UV absorbers, and
F) optionally water.

## Revendications

1. Film polymère à activité détergente, contenant ou constitué par une composition de polymère P), pouvant être obtenue par polymérisation radicalaire d'une composition de monomères M), qui contient au moins un monomère A), choisi parmi les acides carboxyliques α,β-éthyléniquement insaturés, les sels d'acides carboxyliques α,β-éthyléniquement insaturés et leurs mélanges, en présence d'au moins un éther alkylique en C₈-C₁₈ de polyoxyalkylène PE) contenant en moyenne 3 à 12 unités oxyde d'alkylène par molécule.

2. Film polymère selon la revendication 1, dans lequel la composition de monomères M) contient en plus dudit au moins un monomère A) au moins un monomère B), qui est choisi parmi les acides sulfoniques insaturés, les sels d'acides sulfoniques insaturés, les acides phosphoniques insaturés, les sels d'acides phosphoniques insaturés et leurs mélanges.

3. Film polymère selon l'une quelconque des revendications 1 ou 2, dans lequel la composition de monomères M) contient en outre au moins un comonomère C), choisi parmi :
C1) les hétérocycles azotés contenant une double liaison α,β-éthyléniquement insaturée polymérisable par voie radicalaire,
C2) les monomères contenant des groupes amide,
C3) les composés des formules générales (I.a) et (I.b) : 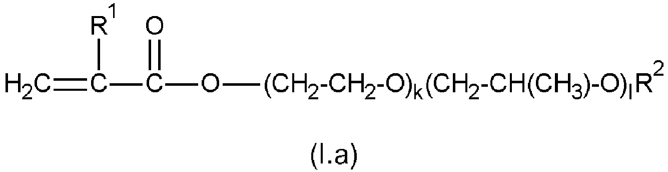 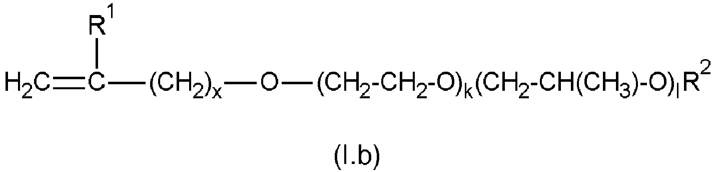 dans lesquelles
l'ordre des unités oxyde d'alkylène est quelconque,
x représente 0, 1 ou 2,
k et 1 représentent indépendamment l'un de l'autre un nombre entier de 0 à 100, la somme de k et 1 valant au moins 2, de préférence au moins 5,
R¹ représente hydrogène ou méthyle,
R² représente hydrogène ou alkyle en C₁-C₄,
et les mélanges de deux ou plus de deux des monomères C1) à C3) mentionnés précédemment.

4. Film polymère selon l'une quelconque des revendications précédentes, dans lequel la composition de monomères M) contient, par rapport au poids total, moins de 0,1 % en poids, de préférence moins de 0,01 % en poids, notamment aucun, monomères à effet réticulant, qui comprennent deux ou plus de deux doubles liaisons α, β-éthyléniquement insaturées polymérisables par voie radicalaire par molécule.

5. Film polymère selon l'une quelconque des revendications précédentes, dans lequel le monomère A) est choisi parmi l'acide acrylique, l'acide méthacrylique, l'acide maléique, l'acide fumarique, l'acide itaconique, l'acide éthacrylique, l'acide α-chloroacrylique, l'acide crotonique, l'acide citraconique, l'acide mésaconique, l'acide glutaconique et l'acide aconitique, les sels des acides carboxyliques mentionnés précédemment et leurs mélanges.

6. Film polymère selon l'une quelconque des revendications précédentes, dans lequel la composition de monomères M) utilisée pour la polymérisation radicalaire contient de l'acide acrylique et/ou des sels de l'acide acrylique, ou est constituée par de l'acide acrylique et/ou des sels de l'acide acrylique.

7. Film polymère selon l'une quelconque des revendications précédentes, dans lequel la composition de monomères M) est constituée par au moins 50 % en poids, de préférence au moins 80 % en poids, notamment au moins 90 % en poids, par rapport au poids total de la composition de monomères M), d'acide acrylique et/ou de sels de l'acide acrylique.

8. Film polymère selon l'une quelconque des revendications précédentes, dans lequel la polymérisation radicalaire a lieu en présence d'au moins un éther alkylique en C₈-C₁₈ de polyoxyalkylène, qui contient exclusivement des unités oxyde d'éthylène sous forme incorporée en tant qu'unités oxyde d'alkylène.

9. Film polymère selon l'une quelconque des revendications précédentes, dans lequel les éthers alkyliques en C₈-C₁₈ de polyoxyalkylène contiennent en moyenne 3 à 10 unités oxyde d'éthylène par molécule, de préférence en moyenne 5 à 9 unités oxyde d'éthylène par molécule.

10. Film polymère selon l'une quelconque des revendications précédentes, dans lequel, pour la polymérisation radicalaire, la composition de monomères M) et les éthers alkyliques en C₈-C₁₈ de polyoxyalkylène contenant 3 à 12 unités oxyde d'alkylène par molécule sont utilisés en un rapport en poids de 0,5:1 à 5:1, de préférence de 0,7:1 à 3:1.

11. Film polymère selon l'une quelconque des revendications précédentes, dans lequel la polymérisation radicalaire a lieu en présence d'un solvant, qui est choisi parmi l'eau, les alcanols en C₁-C₆, les polyéther-polyols, leurs éthers mono- et dialkyliques et leurs mélanges.

12. Film polymère selon l'une quelconque des revendications précédentes, qui contient au moins un additif, de préférence choisi parmi les plastifiants, les agents de piégeage, les autres polymères, les agents pour la modification de la perméabilité aux gaz et de la perméabilité à la vapeur d'eau, les agents antistatiques, les lubrifiants, les agents glissants, les adjuvants de dissolution, les colorants, les pigments, les enzymes, les inhibiteurs de corrosion, les antimousses, les parfums, les épaississants, les promoteurs de solubilité, les solvants, les agents d'ajustement du pH, les agents anti-redéposition, les azurants optiques, les inhibiteurs de grisonnement, les inhibiteurs de transfert des couleurs, les agents actifs antimicrobiens, les antioxydants, les absorbeurs UV et leurs mélanges.

13. Procédé de fabrication d'un film polymère tel que défini dans l'une quelconque des revendications 1 à 12, selon lequel
a) une composition de monomères M) est préparée, qui contient au moins un monomère A), choisi parmi les acides carboxyliques α,β-éthyléniquement insaturés et les mélanges qui contiennent au moins un acide carboxylique α,β-éthyléniquement insaturé et au moins un sel d'un acide carboxylique α,β-éthyléniquement insaturé,
b) la composition de monomères M) préparée à l'étape a) est soumise à une polymérisation radicalaire en présence d'au moins un éther alkylique en C₈-C₁₈ de polyoxyalkylène contenant 3 à 12 unités oxyde d'alkylène par molécule et éventuellement en présence d'au moins un additif,
c) la composition de polymère obtenue à l'étape b) est transformée en un film polymère.

14. Procédé selon la revendication 13, dans lequel la polymérisation radicalaire à l'étape b) a lieu en mode d'alimentation, au moins une partie de l'éther alkylique en C₈-C₁₈ de polyoxyalkylène contenant 3 à 12 unités oxyde d'alkylène par molécule et éventuellement, s'il est présent, au moins une partie d'un solvant étant chargées initialement, et au moins une partie de la composition de monomères M) préparée à l'étape a) et au moins un démarreur radicalaire étant introduits dans la préparation chargée initialement.

15. Procédé selon l'une quelconque des revendications 13 ou 14, selon lequel, à l'étape c), la composition de polymère obtenue à l'étape b), éventuellement après l'ajout d'au moins un additif, est soumise à une formation de film, choisie parmi un coulage, un formage par soufflage, un thermoformage, une extrusion et un calandrage.

16. Utilisation d'un film polymère, tel que défini dans l'une quelconque des revendications 1 à 11, ou pouvant être obtenu par un procédé tel que défini dans l'une quelconque des revendications 12 à 14, pour l'enrobage au moins partiel d'un détergent liquide ou solide.

17. Enrobage ou revêtement pour une portion de détergent, comprenant ou constitué par un film polymère, tel que défini dans l'une quelconque des revendications 1 à 11, ou pouvant être obtenu par un procédé tel que défini dans l'une quelconque des revendications 12 à 14.

18. Détergent, comprenant :
A) au moins enrobage et/ou un revêtement, contenant ou constitué par un film polymère à activité détergente, tel que défini dans l'une quelconque des revendications 1 à 11, ou pouvant être obtenu par un procédé tel que défini dans l'une quelconque des revendications 12 à 14,
B) au moins un tensioactif,
C) éventuellement au moins un adjuvant,
D) éventuellement au moins un système blanchissant,
E) éventuellement au moins un additif supplémentaire, qui est de préférence choisi parmi les enzymes, les bases, les inhibiteurs de corrosion, les antimousses et les inhibiteurs de mousse, les colorants, les parfums, les charges, les adjuvants de pastillage, les adjuvants de désintégration, les épaississants, les promoteurs de solubilité, les solvants organiques, les électrolytes, les agents d'ajustement du pH, les supports de parfums, les agents fluorescents, les hydrotropes, les agents anti-redéposition, les azurants optiques, les inhibiteurs de grisonnement, les inhibiteurs de rétrécissement, les agents anti-froissement, les inhibiteurs de transfert des couleurs, les agents actifs antimicrobiens, les antioxydants, les inhibiteurs de corrosion, les antistatiques, les adjuvants de repassage, les agents répulsifs et d'imprégnation, les agents antigonflants et antiglissants et les absorbeurs UV, et
F) éventuellement de l'eau.
